(19) Europäisches Patentamt European Patent Office Office européen des brevets

(11) **EP 4 481 449 A1**

(12) **EUROPEAN PATENT APPLICATION**
published in accordance with Art. 153(4) EPC

(43) Date of publication:
**25.12.2024 Bulletin 2024/52**

(21) Application number: **23779580.2**

(22) Date of filing: **14.03.2023**

(51) International Patent Classification (IPC):
**G02B 5/28** (2006.01)

(52) Cooperative Patent Classification (CPC):
**G02B 5/28**

(86) International application number:
**PCT/JP2023/009926**

(87) International publication number:
**WO 2023/189562 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.03.2022 JP 2022057014**

(71) Applicant: **Tokai Optical Co., Ltd.**
**Okazaki-shi, Aichi 444-2192 (JP)**

(72) Inventor: **SUGIURA, Muneo**
**Okazaki-shi, Aichi 444-2192 (JP)**

(74) Representative: **Prüfer & Partner mbB**
**Patentanwälte · Rechtsanwälte**
**Sohnckestraße 12**
**81479 München (DE)**

(54) **NOTCH FILTER**

(57) A notch filter 1 has a free filter region, and one or more stopbands which are located between lower and upper limits of the free filter region. The notch filter 1 includes a base material 2; and an optical multilayer film formed directly or indirectly on a base material surface M which is a surface of the base material 2. The optical multilayer film 4 is formed on the basis of a basic filter repeat structure in which a basic filter structure in which low refractive index layers L and high refractive index layers H are alternately arranged is repeated a plurality of times. A film thickness of each layer in the optical multilayer film 4 corresponds to a modulation film thickness number sequence obtained by addition of modulation to a basic film thickness number sequence.

FIG.1

EP 4 481 449 A1

**Description**

TECHNICAL FIELD

The present invention relates to a notch filter that suppresses transmission of light in a relatively narrow wavelength range (stopband) and transmits light in other wavelength ranges within a free filter region which is a predetermined wavelength range.

BACKGROUND ART

As a notch filter (also called minus filter or band-stop filter), a filter described in Patent Literature 1 (JP 4575052 B) is known.

In this notch filter, for example, as described as (d) in a paragraph [0019] of JP 4575052 B, an alternately repeated structure of high refractive index layers and low refractive index layers which includes $(0.65H\ 0.35L)^{10}$ is found with a designed reference wavelength, i.e., design wavelength $\lambda = 500$ nm, a reflection band centered at the design wavelength $\lambda$ is realized, and transmission in the reflection band due to reflection is blocked. Here, "0.65H" indicates a high refractive index layer having an optical film thickness that is 0.65 times the design wavelength $\lambda$, and "0.35L" indicates a low refractive index layer having an optical film thickness that is 0.35 times the design wavelength $\lambda$. In addition, "10" at the right shoulder of the round brackets indicates that the structure in the brackets is repeated 10 times. The first 0.65H is closest to a base material.

CITATION LIST

[PATENT LITERATURE]

[PTL 1] JP 4575052 B

SUMMARY OF THE INVENTION

PROBLEMS TO BE SOLVED BY THE INVENTION

Recently, there has been a need for a notch filter having a wider free filter region such as 400 nm or more and 1200 nm or less, or 400 nm or more and 1800 nm or less.

For example, in the medical or biotechnological fields or the like, there is an attempt to nondestructively analyze the characteristics, etc., of an object to be observed by applying a laser onto the object to be observed, capturing secondarily generated weak signal light by an imaging device, and analyzing the signal light (spectral analysis). For better analysis, a notch filter having a stopband at the wavelength of the laser is placed in an optical path to the imaging device to suppress reach of relatively strong lasers, which interfere with analysis, to the imaging device and to transmit light in a wide wavelength range necessary for analysis. In addition, for better analysis, it is expected that an imaging device having a wider range of sensitivity wavelengths will be adopted. For example, the sensitivity wavelength of an imaging device using a silicon photodiode is about 400 nm or more and 1200 nm or less. In addition, the sensitivity wavelength of an imaging device using both a silicon photodiode and an indium gallium arsenide (InGaAs) photodiode is about 400 nm or more and 1800 nm or less.

However, in the above notch filter of Patent Literature 1, a stopband is formed on the wavelength side shorter than the design wavelength $\lambda$ by the monotonous repeated structure of the high refractive index layers and the low refractive index layers. Therefore, the notch filter cannot have only a stopband centered at the wavelength of a laser having a wavelength (1064, 1550 nm, etc.) on the relatively long wavelength side, in a wider free filter region. For example, if a stopband centered at 1550 nm is provided in the notch filter (design wavelength $\lambda = 1550$ nm), a stopband centered at $1550 \times 1/2.5 = 620$ nm and a stopband centered at $1550 \times 1/3.5 \approx 442.9$ nm occur together in a region of 400 nm or more and 1800 nm or less. Stopbands other than such a stopband centered at the design wavelength $\lambda$ block light in that wavelength band from reaching the imaging device, resulting in a decrease in the quality of analysis.

Meanwhile, when two types of materials having a small refractive index difference are used, appearance of a stopband up to 1/3 of the design wavelength is suppressed by setting an optical film thickness ratio as H:L = 1: 1 (a = b), even with conventional $\{(b/2)L\ aH\ (b/2)L\}^c$ design. Here, "H" indicates a high refractive index layer having an optical film thickness that is 1/4 (0.25) times the design wavelength $\lambda$, "aH" indicates a high refractive index layer having an optical film thickness of $a \times 0.25 \times \lambda$, "L" indicates a low refractive index layer having an optical film thickness that is 0.25 times the design wavelength $\lambda$, and "(b/2)L" indicates a low refractive index layer having an optical film thickness of $(b/2) \times 0.25 \times \lambda$. In addition, "c" at the right shoulder of the curly brackets indicates that the structure in the brackets is repeated c times. The first (b/2)L on the leftmost side is closest to the base material. Hereinafter, unless otherwise noted, a film structure is shown in the same manner as above.

However, if the optical film thickness ratio is shifted (a > b or a < b) in order to improve the quality of analysis by forming a stopband having a narrower wavelength width (size between the upper and lower wavelength limits) and allowing signal light having wavelengths adjacent to the wavelength of the laser to be imaged as much as possible, a stopband is formed at 1/2 of the design wavelength as in the above-described notch filter of Patent Literature 1, so that a notch filter having a free filter region that is wide on the wavelength side shorter than the design wavelength $\lambda$ cannot be obtained.

One main object of the present disclosure is to provide a notch filter having a wider free filter region.

Another main object of the present disclosure is to provide a notch filter having a stopband having a narrower wavelength width.

SOLUTION TO THE PROBLEMS

The present specification discloses a notch filter. The notch filter has a free filter region which is a wavelength range in which light is transmitted, and one or more stopbands which are located between lower and upper limits of the free filter region and in which transmission of light in a predetermined wavelength range is suppressed. In addition, the notch filter incudes: a base material; and an optical multilayer film formed directly or indirectly on a base material surface which is a surface of the base material. The optical multilayer film is formed on the basis of a basic filter repeat structure in which a basic filter structure in which low refractive index layers made of a low refractive index material and high refractive index layers made of a high refractive index material are alternately arranged is repeated a plurality of times. A film thickness of each layer in the optical multilayer film corresponds to a modulation film thickness number sequence obtained by addition of modulation to a basic film thickness number sequence in which the film thickness of each layer in the basic filter repeat structure is arranged in order from the base material side. The modulation has a period different from a basic period which is a period of the basic filter structure.

ADVANTAGEOUS EFFECTS OF THE INVENTION

One main effect of the present disclosure is that a notch filter having a wider free filter region is provided.

Another main effect of the present disclosure is that a notch filter having a stopband having a narrower wavelength width is provided.

BRIEF DESCRIPTION OF THE DRAWINGS

[FIG. 1] FIG. 1 is a schematic cross-sectional view of a notch filter according to the present invention.

[FIG. 2] FIG. 2 is a graph showing a spectral transmittance exhibited by a first basic filter repeat structure in the case of a number of repeats q = 50.

[FIG. 3] FIG. 3 is a graph showing a spectral transmittance exhibited by a second basic filter repeat structure in the case of a number of repeats r = 40.

[FIG. 4] FIG. 4 is a graph showing a spectral transmittance exhibited by a third basic filter repeat structure in the case of a number of repeats s = 40.

[FIG. 5] FIG. 5 is a graph showing the relationship between a modulation period $\Lambda_1$ and the center wavelength of a stopband.

[FIG. 6] FIG. 6 is a graph showing the relationship between a modulation amplitude $a_1$ and the wavelength width of the stopband.

[FIG. 7] FIG. 7 is a graph showing a discrete Fourier transform spectrum of a film thickness number sequence of the first basic filter repeat structure (number of repeats q = 50) and a period corresponding to a number m.

[FIG. 8] FIG. 8 is a graph showing a discrete Fourier transform spectrum of a film thickness number sequence of the second basic filter repeat structure (number of repeats r = 40) and a period corresponding to a number m.

[FIG. 9] FIG. 9 is a graph showing a discrete Fourier transform spectrum of a film thickness number sequence of the third basic filter repeat structure (number of repeats s = 40) and a period corresponding to a number m.

[FIG. 10] FIG. 10 is a flowchart showing a method for designing an optical multilayer film in FIG. 1.

[FIG. 11] FIG. 11 is a graph showing a spectral transmittance exhibited by Example 1.

[FIG. 12] FIG. 12 is a graph showing a discrete Fourier transform spectrum of a film thickness number sequence of Example 1 and a period corresponding to a number m.

[FIG. 13] FIG. 13 is a graph showing a spectral transmittance exhibited by Example 2.

[FIG. 14] FIG. 14 is a graph showing a discrete Fourier transform spectrum of a film thickness number sequence of Example 2 and a period corresponding to a number m.

[FIG. 15] FIG. 15 is a graph showing a spectral transmittance exhibited by Example 3.

[FIG. 16] FIG. 16 is a graph showing a discrete Fourier transform spectrum of a film thickness number sequence of Example 3 and a period corresponding to a number m.

[FIG. 17] FIG. 17 is a graph showing a spectral transmittance exhibited by Example 4.

[FIG. 18] FIG. 18 is a graph showing a discrete Fourier transform spectrum of a film thickness number sequence of Example 4 and a period corresponding to a number m.

[FIG. 19] FIG. 19 is a graph showing a spectral transmittance exhibited by Example 5.

[FIG. 20] FIG. 20 is a graph showing a discrete Fourier transform spectrum of a film thickness number sequence of Example 5 and a period corresponding to a number m.

[FIG. 21] FIG. 21 is a graph showing a spectral transmittance exhibited by Example 6.

[FIG. 22] FIG. 22 is a graph showing a discrete Fourier transform spectrum of a film thickness number sequence of Example 6 and a period corresponding to a number m.

[FIG. 23] FIG. 23 is a graph showing a spectral transmittance exhibited by Example 7.

[FIG. 24] FIG. 24 is a graph showing a discrete Fourier transform spectrum of a film thickness number sequence of Example 7 and a period corresponding to a number m.

[FIG. 25] FIG. 25 is a graph showing a spectral transmittance exhibited by Example 8.

[FIG. 26] FIG. 26 is a graph showing a discrete Fourier transform spectrum of a film thickness number sequence of Example 8 and a period corresponding to a number m.

[FIG. 27] FIG. 27 is a graph showing a spectral transmittance exhibited by Example 9.

[FIG. 28] FIG. 28 is a graph showing a discrete Fourier transform spectrum of a film thickness number sequence of Example 9 and a period corresponding to a number m.

[FIG. 29] FIG. 29 is a graph showing a spectral transmittance exhibited by Example 10.

[FIG. 30] FIG. 30 is a graph showing a discrete Fourier transform spectrum of a film thickness number sequence of Example 10 and a period corresponding to a number m.

[FIG. 31] FIG. 31 is a graph showing a spectral transmittance exhibited by Example 11.

[FIG. 32] FIG. 32 is a graph showing a discrete Fourier transform spectrum of a film thickness number sequence of Example 11 and a period corresponding to a number m.

[FIG. 33] FIG. 33 is a graph showing a spectral transmittance exhibited by Comparative Example 1.

[FIG. 34] FIG. 34 is a graph showing a discrete Fourier transform spectrum of a film thickness number sequence of Comparative Example 1 and a period corresponding to a number m.

[FIG. 35] FIG. 35 is a graph showing a spectral transmittance exhibited by Comparative Example 2.

[FIG. 36] FIG. 36 is a graph showing a discrete Fourier transform spectrum of a film thickness number sequence of Comparative Example 2 and a period corresponding to a number m.

[FIG. 37] FIG. 37 is a graph showing a spectral transmittance exhibited by Example 12.

[FIG. 38] FIG. 38 is a graph showing a discrete Fourier transform spectrum of a film thickness number sequence of Example 12 and a period corresponding to a number m.

[FIG. 39] FIG. 39 is a graph showing a spectral transmittance exhibited by Example 13.

[FIG. 40] FIG. 40 is a graph showing a discrete Fourier transform spectrum of a film thickness number sequence of Example 13 and a period corresponding to a number m.

[FIG. 41] FIG. 41 is a graph showing a spectral transmittance exhibited by Example 14.

[FIG. 42] FIG. 42 is a graph showing a discrete Fourier transform spectrum of a film thickness number sequence of Example 14 and a period corresponding to a number m.

[FIG. 43] FIG. 43 is a graph showing a spectral transmittance exhibited by Example 15.

[FIG. 44] FIG. 44 is a graph showing a discrete Fourier transform spectrum of a film thickness number sequence of Example 15 and a period corresponding to a number m.

[FIG. 45] FIG. 45 is a graph showing a spectral transmittance exhibited by Example 16.

[FIG. 46] FIG. 46 is a graph showing a discrete Fourier transform spectrum of a film thickness number sequence of Example 16 and a period corresponding to a number m.

[FIG. 47] FIG. 47 is a graph showing a spectral transmittance exhibited by Example 17.

[FIG. 48] FIG. 48 is a graph showing a discrete Fourier transform spectrum of a film thickness number sequence of Example 17 and a period corresponding to a number m.

## DESCRIPTION OF EMBODIMENTS

Hereinafter, examples of an embodiment according to the present invention will be described with appropriate reference to the drawings. The embodiment of the present invention is not limited to these examples.

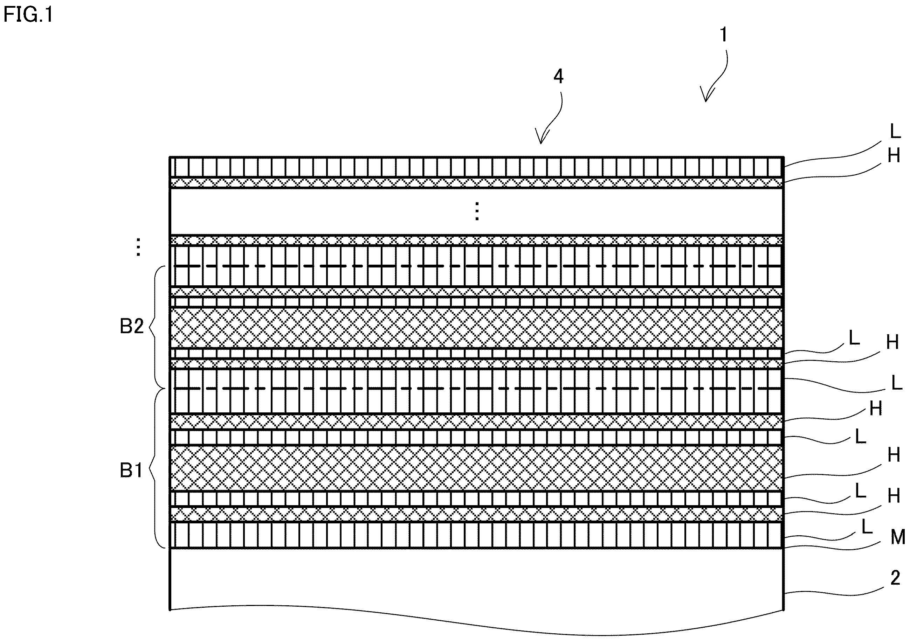

As shown in FIG. 1, a notch filter 1 according to the present invention has a base material 2 and an optical multilayer film 4.

The base material 2 has a base material surface M on which the optical multilayer film 4 is directly formed. At the optical multilayer film 4 laminated on the base material surface M, the notch filter 1 transmits light in a wavelength range corresponding to a free filter region, and suppresses transmission of light in a wavelength range corresponding to a stopband, among the light that passed through a medium (e.g., air).

The stopband is located between the upper and lower limits of the free filter region. The size between the upper and lower limits (wavelength width) of the stopband is smaller than the wavelength width of the free filter region.

The average transmittance of the free filter region (excluding the stopband) is preferably 85% or more and more preferably 90% or more. The free filter region may be grasped in terms of spectral transmittance (e.g., as a wavelength range where a transmittance is 85% or more), or may be grasped in terms of design (specifications, predetermined range) (e.g., as a wavelength range of 400 nm or more and 1200 nm or less or 400 nm or more and 1800 nm or less).

The optical multilayer film 4 may be formed on the base material surface M, which is the surface of the base material 2, through another film such as an adhesion film of the optical multilayer film 4, that is, indirectly on the base material surface M. Also, another type of film such as a protective film may be placed on the outer side (medium side, anti-base material side) of the optical multilayer film 4. The other film and the other type of film may be a single-layer film, or may be a multilayer film. At least one of the other film and the other type of film may be included in the configuration of the optical multilayer film 4.

The base material 2 has translucency at least for light in the free filter region.

The material of the base material 2 is not particularly limited and is, for example, non-metallic glass, crystal, ceramics, or resin.

The shape of the base material 2 is not particularly limited, and the base material 2 is, for example, a parallel plate.

The optical multilayer film 4 is an inorganic multilayer film for which two or more dielectric materials are used, and is a dielectric multilayer film.

The optical multilayer film 4 is formed on a part or the entirety of at least one surface of the base material 2.

The optical multilayer film 4 includes a plurality of low refractive index layers L and a plurality of high refractive index layers H. In the optical multilayer film 4, the low refractive index layers L and the high refractive index layers H are preferably arranged alternately.

The design of the optical multilayer film 4 is changed by changing design elements such as selection of the numbers and materials of the high refractive index layers H and the low refractive index layers L and increase or decrease of the thickness in each layer (physical or optical film thickness for the layer).

In designing the optical multilayer film 4, the film thickness of each high refractive index layer H is grasped on the basis of an optical film thickness, so that each high refractive index layer H may be formed from any high refractive index material as long as the optical film thickness is satisfied. Similarly, the film thickness of each low refractive index layer L is grasped on the basis of an optical film thickness, so that each low refractive index layer L may be formed from any low refractive index material as long as the optical film thickness is satisfied. In order to make manufacturing easier, it is preferable that at least one of the high refractive index material and the low refractive index material for the optical multilayer film 4 is one type.

Each high refractive index layer H is formed from, for example, a high refractive index material such as zirconium oxide ($ZrO_2$), titanium oxide ($TiO_2$), tantalum oxide ($Ta_2O_5$), niobium oxide ($Nb_2O_5$), hafnium oxide ($HfO_2$), lanthanum oxide ($La_2O_3$), silicon (Si), or praseodymium oxide ($Pr_2O_3$), or a mixture of two or more of these.

Each low refractive index layer L is formed from, for example, a low refractive index material such as silicon oxide ($SiO_2$), aluminum oxide ($Al_2O_3$), calcium fluoride ($CaF_2$), magnesium fluoride ($MgF_2$), a combination of aluminum oxide and praseodymium oxide ($Al_2O_3$-$Pr_2O_3$), a combination of aluminum oxide and lanthanum oxide ($Al_2O_3$-$La_2O_3$), or a combination of aluminum oxide and tantalum oxide ($Al_2O_3$-$Ta_2O_5$), or a mixture of two or more of these.

The magnitudes of the refractive indexes of each high refractive index layer H and each low refractive index layer L are relative, and the optical multilayer film 4 can be formed from at least two materials having refractive indexes different from each other.

The low refractive index layers L and the high refractive index layers H of the optical multilayer film 4 are formed, for example, by physical vapor deposition, and more specifically by vacuum deposition, ion-assisted vapor deposition, ion plating, sputtering, or the like.

The optical multilayer film 4 may be formed on a plurality of surfaces in the base material 2. That is, the base material 2 may have a plurality of base material surfaces M on which the optical multilayer film 4 is formed. For example, the optical multilayer film 4 may be formed on both the front and back surfaces of the base material 2 which is a parallel plate.

The structure of the optical multilayer film 4 is based on a basic filter repeat structure in which a basic filter structure is repeated a plurality of times.

Hereinafter, a film structure is shown as appropriate in the form of (aL bH)$^c$, unless otherwise noted, as described above. The design wavelength $\lambda$ is, for example, 500 nm.

For example, a first basic filter structure is 1.17L 0.32H 0.32L 2.31H 0.32L 0.32H 1.17L, and

a first basic filter repeat structure is $(1.17L\ 0.32H\ 0.32L\ 2.31H\ 0.32L\ 0.32H\ 1.17L)^q$,

where q is the number of repeats.

In the first basic filter repeat structure, a low refractive index layer L (hereinafter referred to as first layer), closest to the medium, in an initial first basic filter structure B1 closest to the base material 2 and a low refractive index layer L, closest to the base material 2, in an adjacent second first basic filter structure B2 are one low refractive index layer L (1.17L+1.17L = 2.34L; seventh layer). Similarly, at the boundary of an odd-numbered first basic filter structure and an even-numbered first basic filter structure, the low refractive index layers L are connected into one. Thus, in the first basic filter repeat structure, a basic period p which is a period in which the same film thickness appears on the basis of the basic filter structure is 6. Also, in the first basic filter repeat structure, the total number of layers is $q\times p+1$. Here, +1 is based on the fact that the low refractive index layers L at both ends are not shared. For example, in the case of q = 50, the number of film layers is $50\times 6+1 = 301$.

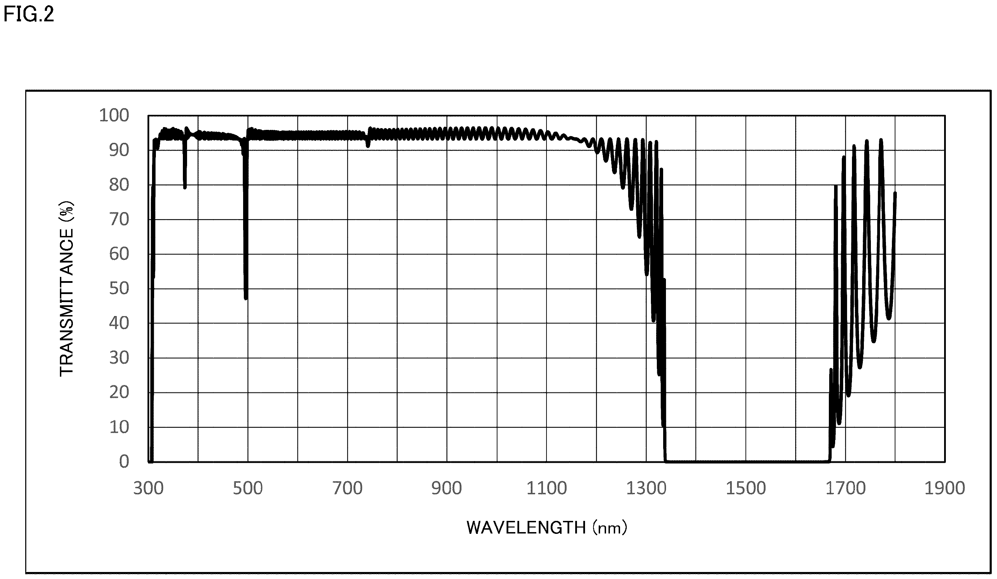

FIG. 2 shows a spectral transmittance exhibited by the first basic filter repeat structure in the case of q = 50.

In the first basic filter repeat structure, a stopband in which a transmittance is around 0 is formed in a wavelength range of about 1330 nm or more and 1660 nm or less, and a free filter region is formed in a state where a large ripple (around 370, 500 nm) exists in a wavelength range of about 305 nm or more and less than 1330 nm.

This first basic filter repeat structure has a free filter region of approximately 400 nm or more and 1200 nm or less.

Also, a second basic filter structure is 1.10L 0.14H 0.48L 0.30H 0.28L 0.50H 0.12L 2.16H 0.12L 0.50H 0.28L 0.30H 0.48L 0.14H 1.10L, and

a second basic filter repeat structure is $(1.10L\ 0.14H\ 0.48L\ 0.30H\ 0.28L\ 0.50H\ 0.12L\ 2.16H\ 0.12L\ 0.50H\ 0.28L\ 0.30H\ 0.48L\ 0.14H\ 1.10L)^r$,

where r is the number of repeats.

In the second basic filter repeat structure as well, as in the second basic filter repeat structure, the linkage of predetermined low refractive index layers L occurs. In the second basic filter repeat structure, a basic period p in which the same film thickness appears is 14. In addition, in the second basic filter repeat structure, in the case of r = 40, the number of film layers is $40\times 14+1 = 561$.

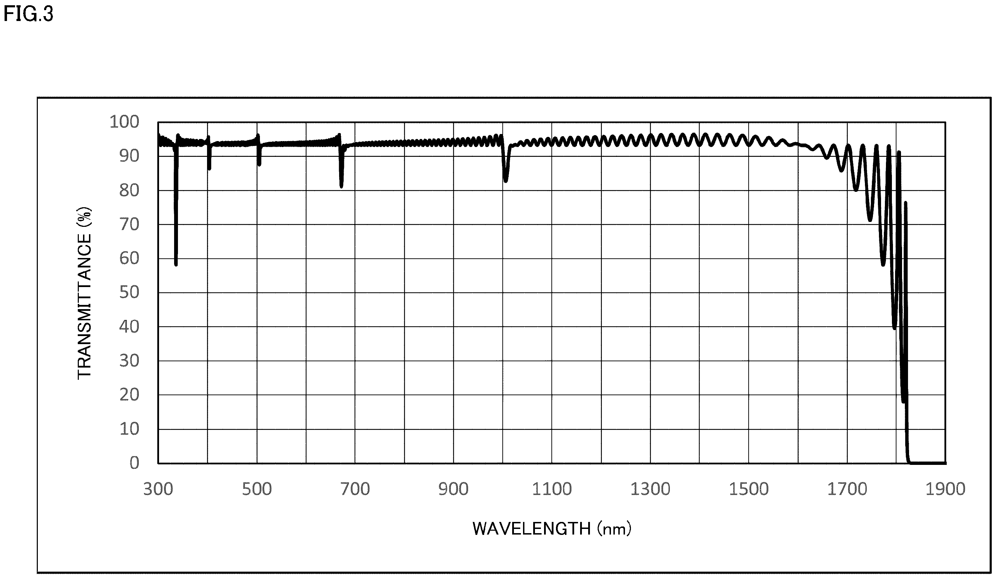

FIG. 3 shows a spectral transmittance exhibited by the second basic filter repeat structure in the case of r = 40.

In the second basic filter repeat structure, a stopband in which a transmittance is around 0 is formed in a wavelength range of about 1800 nm or more and 2230 nm or less, and a free filter region is formed in a state where a large ripple (around 320, 400, 500, 680, 1000 nm) exists in a wavelength range of about 300 nm or more and less than 1800 nm.

This second basic filter repeat structure has a free filter region of approximately 400 nm or more and 1800 nm or less.

Furthermore, a third basic filter structure is 1.26L 0.22H 0.51L 0.52H 0.21L 2.53H 0.21L 0.52H 0.51L 0.22H 1.26L, and

a third basic filter repeat structure is $(1.26L\ 0.22H\ 0.51L\ 0.52H\ 0.21L\ 2.53H\ 0.21L\ 0.52H\ 0.51L\ 0.22H\ 1.26L)^s$,

where s is the number of repeats.

In the third basic filter repeat structure as well, as in the third basic filter repeat structure, the linkage of predetermined low refractive index layers L occurs. In the third basic filter repeat structure, a basic period p in which the same film thickness appears is 10. In addition, in the third basic filter repeat structure, in the case of s = 40, the number of film layers is $40\times 10+1 = 401$.

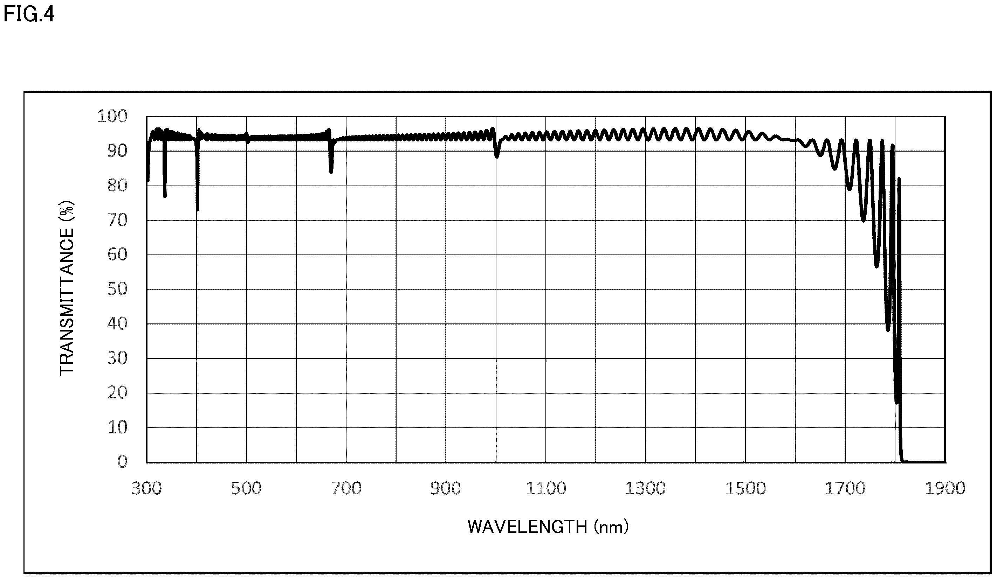

FIG. 4 shows a spectral transmittance exhibited by the third basic filter repeat structure in the case of s = 40.

In the third basic filter repeat structure, a stopband in which a transmittance is around 0 is formed in a wavelength range of about 1800 nm or more and 2230 nm or less, and a free filter region is formed in a state where a large ripple (around 320, 400, 680, 1000 nm) exists in a wavelength range of about 300 nm or more and less than 1800 nm.

This third basic filter repeat structure has a free filter region of approximately 400 nm or more and 1800 nm or less.

The structure of the optical multilayer film 4 fundamentally has an optical film thickness obtained by modulating each optical film thickness in the basic filter repeat structure. That is, to each term belonging to one number sequence in which the optical film thickness of each layer in the basic filter repeat structure is arranged in order from the first layer (optical film thickness number sequence in the basic filter repeat structure; basic optical film thickness number sequence), a corresponding modulation component is added, thereby obtaining one number sequence in which the optical film thickness of each layer in the optical multilayer film 4 is arranged from the first layer (optical film thickness number sequence in the optical multilayer film 4; modulation optical film thickness number sequence). Even when each optical film thickness is converted to another film thickness such as a physical film thickness, the basic film thickness number sequence, modulation, and each film thickness of the optical multilayer film 4 (modulation film thickness number sequence) are obtained similarly.

First, the case of forming one stopband will be described.

When the nth term (film thickness of the nth layer) of the film thickness number sequence in the basic filter repeat structure is denoted by $D_n$ ($n = 1, 2, ..., L_0$, where $L_0$ is the total number of terms (total number of layers) ($L_0$ is a natural

number)), and the amplitude, period, and phase of the modulation are denoted by $a_1$, $\Lambda_1$, and $\varphi_1$, respectively, the nth term (film thickness of the nth layer) $d_n$ of the film thickness number sequence of the basic optical multilayer film 4 is expressed by the following Expression (1).

[Math. 1]

$$d_n = D_n \left[ 1 + a_1 \cos \left\{ \frac{2\pi(n-1)}{\Lambda_1} + \varphi_1 \right\} \right] \tag{1}$$

In the optical multilayer film 4 having such a film thickness structure, the center wavelength, the wavelength width, etc., of the stopband are adjusted from those in the basic filter repeat structure.

As a tendency, the wavelength width of the stopband is adjusted by adjusting the amplitude $a_1$ of the modulation (the larger the amplitude $a_1$, the wider the wavelength width), the center wavelength of the stopband is adjusted by adjusting the period $\Lambda_1$ of the modulation (the larger the period $\Lambda_1$, the longer the center wavelength), and the ripple of the transmittance distribution is adjusted by adjusting the phase $\varphi_1$ of the modulation.

Next, the case of forming a plurality of stopbands will be described.

In this case, one modulation period corresponds to the formation of one stopband, and thus modulations with modulation periods different from each other are added the number of times equal to the number of stopbands.

That is, when the amplitude, period, and phase of the modulation for the kth stopband are denoted by $a_k$, $\Lambda_k$, and $\varphi_k$, respectively (k = 1, 2, ..., u, where u is the number of stopbands to be formed *(u is a natural number)*), the nth term $d_n$ of the film thickness number sequence of the basic optical multilayer film 4 is expressed by the following Expression (2). In order to form each stopband more clearly, each period $\Lambda_k$ of the modulation is preferably larger than the basic period p, and is preferably different from a natural number multiple of the basic period p.

The above Expression (1) is equivalent to the case where k = 1 in the aforementioned Expression (2). The aforementioned Expression (2) contains the above Expression (1).

[Math. 2]

$$d_n = D_n \left[ 1 + \sum_{k=1}^{u} a_k \cos \left\{ \frac{2\pi(n-1)}{\Lambda_k} + \varphi_k \right\} \right] \tag{2}$$

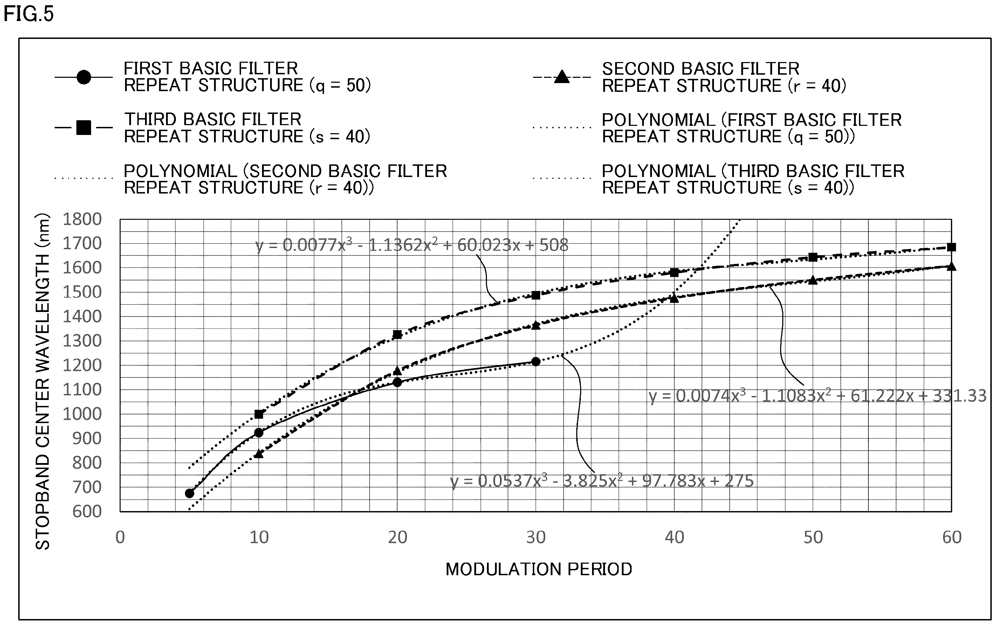

FIG. 5 is a graph showing the relationship between the modulation period $\Lambda_1$ and the center wavelength of the stopband.

From FIG. 5, it is found that in the basic optical multilayer film 4 based on any of the basic filter repeat structures, the center wavelength of the stopband monotonically increases with increase of the modulation period $\Lambda_1$. The center wavelength of the stopband is a function of the modulation period $\Lambda_1$, and this function can be obtained, for example, by repeating simulation with the modulation period $\Lambda_1$ being variously changed, and calculating fitting curves as appropriate (see three fitting curves (polynomials) in FIG. 5).

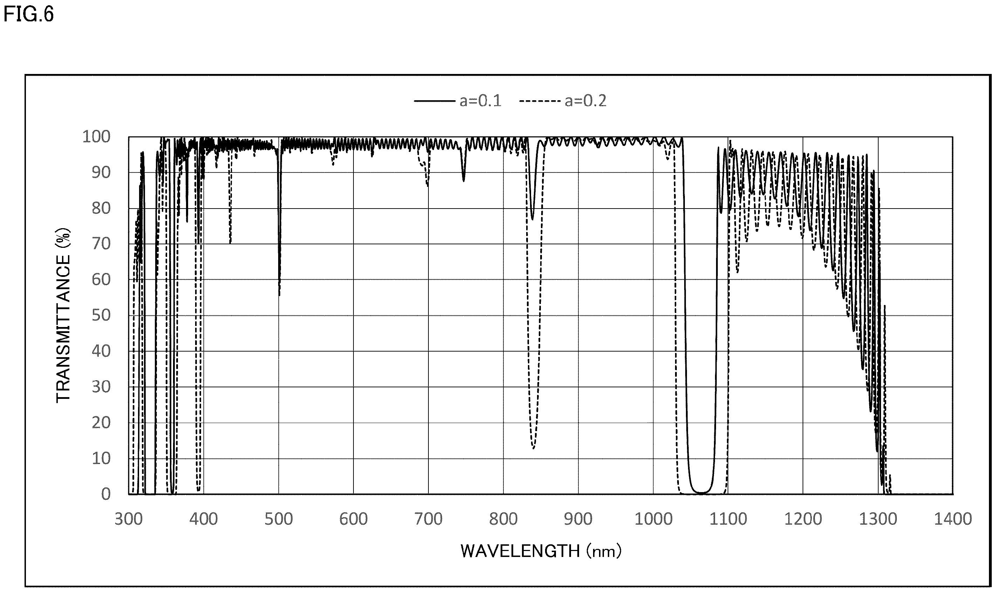

FIG. 6 is a graph showing an example of the relationship between the modulation amplitude $a_1$ and the wavelength width of the stopband.

From FIG. 6, it is found that when the modulation amplitude $a_1$ added to the basic optical multilayer film 4 based on the first basic filter repeat structure (number of repeats q = 50) increases from 0.1 to 0.2, the wavelength width of the stopband around 1064 nm increases. Here, the period $\Lambda_1$ of the modulation is 15.6.

For the film thickness number sequence of such a basic optical multilayer film 4, adjustment for achieving some or all of various objects, such as mitigating the ripple of the transmittance distribution in the free filter region, can be further performed, to form an adjusted optical multilayer film 4. Such adjustment may be performed by a designer on the basis of know-how, etc., may be performed automatically by a computer equipped with a design program, or may be performed by a combination of both. The design program may have a processing section related to AI (artificial intelligence).

Even in the adjusted optical multilayer film 4, periodicities related to the basic period p and the modulation period $\Lambda_1$ remain in the film thickness number sequence.

These periodicities can be found by Fourier analysis of the film thickness number sequence. Since this is analysis of periodicity, the film thickness may be an optical film thickness, a physical film thickness, or another film thickness.

Thus, the structure of the optical multilayer film 4 can be found by Fourier analysis of the film thickness number sequence.

For example, from a broader point of view, if discrete Fourier transform is performed for the film thickness number sequence of a certain optical multilayer film, and each maximum value (peak) corresponding to the basic period p and the modulation period $\Lambda_1$ exists in a spectrum thereof, the optical multilayer film has periodicities related to the basic period p and the modulation period $\Lambda_1$, so that it is found that the optical multilayer film is the basic or adjusted optical multilayer film 4.

More specifically, when the number of the discrete Fourier transform is denoted by $m$ ($m$ = 1, 2, ..., $L_0/2$), an intensity $P_m$ of the discrete Fourier transform spectrum is given by the following Expressions (3) to (5). The division by $P_1$ in Expression (3) is performed for normalization. The reason why the upper limit of the number m is set to $L_0/2$ is that half of the analysis is sufficient to grasp the overall periodicity (see sampling theorem). If $L_0/2$ is not a natural number ($L_0$ is an odd number), the fraction is rounded off to a natural number.

[Math. 3]

$$P_m = \frac{\sqrt{A_m^2 + B_m^2}}{P_1} \tag{3}$$

$$A_m = \sum_{n=1}^{L_0} d_n \cos\left(\frac{2\pi mn}{L_0}\right) \tag{4}$$

$$B_m = \sum_{n=1}^{L_0} d_n \sin\left(\frac{2\pi mn}{L_0}\right) \tag{5}$$

Then, a period $\Lambda'_m$ of a trigonometric function corresponding to the Fourier coefficient at the number m is given by the following Expression (6).
[Math. 4]

$$\Lambda'_m = \frac{L_0 - 1}{m} \tag{6}$$

Therefore, when there is one stopband, if, in a discrete Fourier transform spectrum, a peak exists at least either at a number m' where $\Lambda'_m$ = p or in the vicinity thereof, and a peak exists at least either at a number m" where $\Lambda'_m = \Lambda_1$ or in the vicinity thereof, it can be said that the optical multilayer film is the above-described basic or adjusted optical multilayer film 4. Here, the range of the number m' where $\Lambda'_m$ = p or the vicinity thereof is defined, for example, as follows. That is, the range includes the spectral number m', spectral numbers m'-1 and m'+1, which are one before and one after the spectral number m', and numbers m'-2 and m'+2, which are adjacent thereto. Also, the range of the number m" where $\Lambda'_m = \Lambda_1$ or the vicinity thereof is defined, for example, as follows. That is, the range includes the spectral number m" and spectral numbers m"-1 and m"+1, which are one before and one after the spectral number m". Since there can be a basic or adjusted optical multilayer film 4 that exhibits a mixed nature of a plurality of types of basic periods p, it may be confirmed that at the plurality of basic periods p (e.g., p = 6, 14, 10), corresponding peaks exist, respectively. Similarly, since there can be a basic or adjusted optical multilayer film 4 that exhibits a mixed nature of a plurality of types of modulation periods determined in accordance with the basic period p and the center wavelength of the stopband, it may be confirmed that at spectral numbers corresponding to the plurality of modulation periods, corresponding peaks exist, respectively. In the case of modulation periods, the range of spectral numbers may be from the smallest number to the largest number among spectral numbers corresponding to the plurality of modulation periods.

When there are a plurality of stopbands, the applicability of the basic or adjusted optical multilayer film 4 can be confirmed in the same manner as when there is one stopband, except that the number of times the existence of a peak is confirmed at the above number m" where $\Lambda'_{m"} = \Lambda_1$, the number m"-1, and the number m"+1 is increased from one time (k = 1) to the number of times (k = 1, 2, ..., u) equal to the number of stopbands.

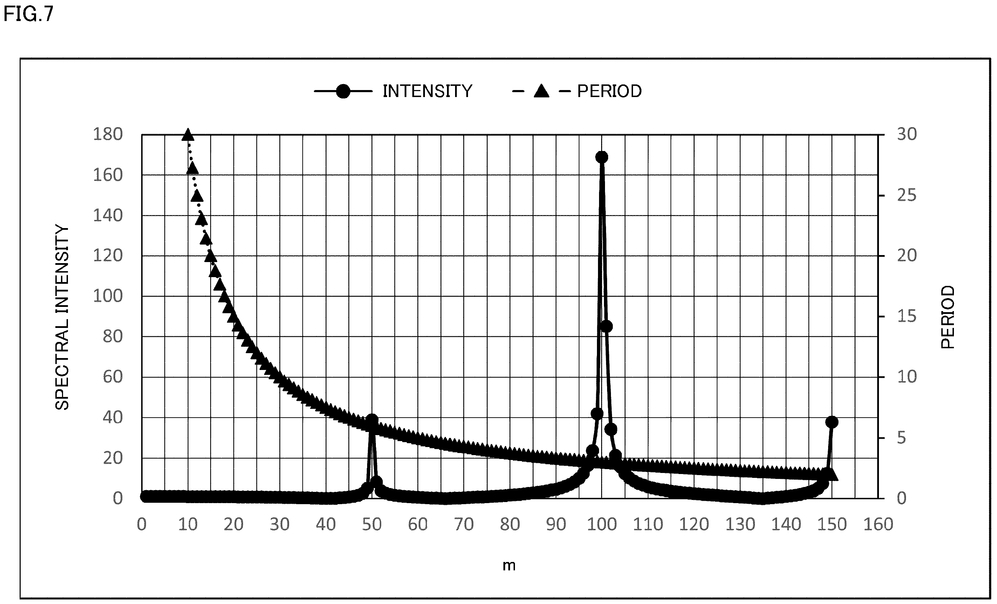

For reference, FIGS. 7 to 9 show the respective discrete Fourier transform spectra and the periods corresponding to the numbers m in the first to third basic filter repeat structures for the respective numbers of repeats described above.

In each discrete Fourier transform spectrum (FIG. 7) for the first basic filter repeat structure (number of repeats q = 50), for a peak with the smallest number m among three existing peaks, m = 50, and from the above Expression (6), $\Lambda'_{50}$ = (301-1)/50 = 6.0. Accordingly, it is found that the first basic filter repeat structure has a periodicity of period $\Lambda'_{50}$ = 6.0. In fact, as described above, the basic period p = 6 for the first basic filter repeat structure.

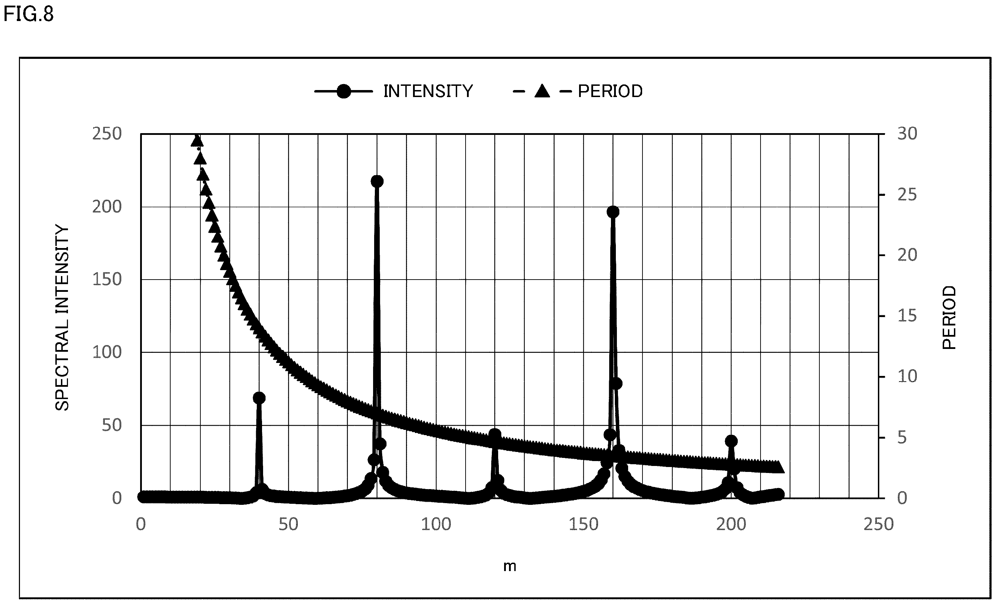

In each discrete Fourier transform spectrum (FIG. 8) for the second basic filter repeat structure (number of repeats r = 40), for a peak with the smallest number m among seven existing peaks, m = 40, and from the above Expression (6), $\Lambda'_{40}$ = (561-1)/40 = 14.0. Accordingly, it is found that the second basic filter repeat structure has a periodicity of period $\Lambda'_{40}$ = 14. In fact, as described above, the basic period p = 14 for the second basic filter repeat structure.

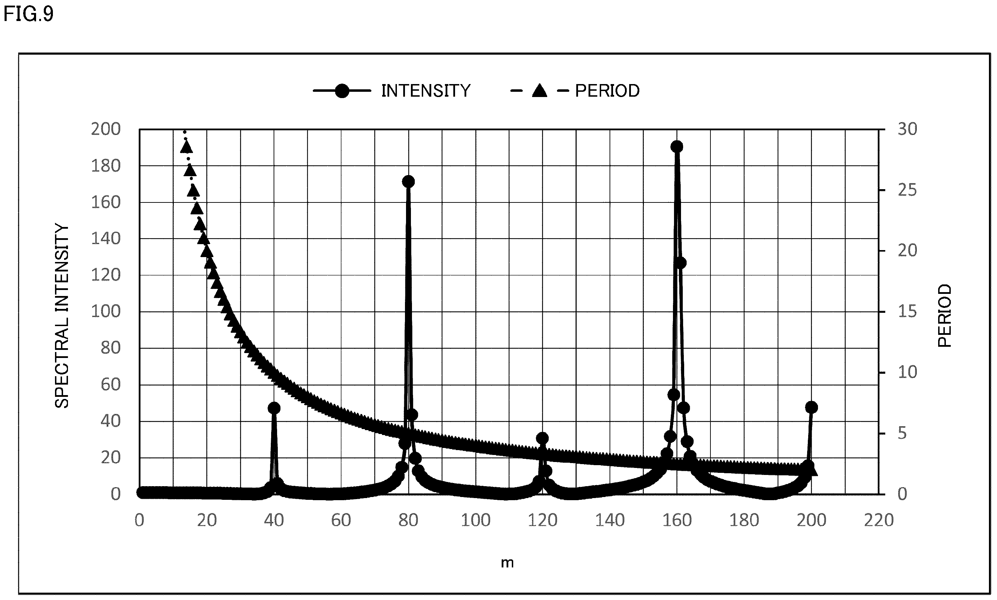

In each discrete Fourier transform spectrum (FIG. 9) for the third basic filter repeat structure (number of repeats s = 40), for a peak with the smallest number m among five existing peaks, m = 40, and from the above Expression (6), $\Lambda'_{40}$ = (401-1)/40 = 10.0. Accordingly, it is found that the second basic filter repeat structure has a periodicity of period $\Lambda'_{40}$ = 10. In fact, as described above, the basic period p = 10 for the third basic filter repeat structure.

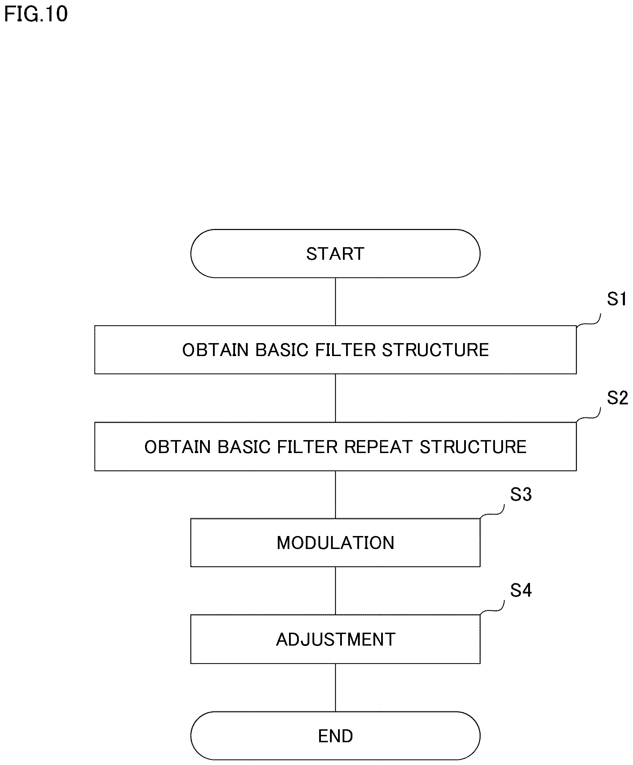

FIG. 10 is a flowchart showing an example of a method for designing the optical multilayer film 4.

In designing the optical multilayer film 4, the designer first obtains a basic filter structure (step S1), and obtains a basic filter repeat structure (step S2).

Next, the designer modulates a film thickness number sequence of the basic filter repeat structure by the above Expression (2) (step S3).

By up to step S3, a basic optical multilayer film 4 (film thickness number sequence therefor) is obtained.

Subsequently, the designer adjusts the film thicknesses of one or more layers in the basic optical multilayer film 4 (values of one or more terms in the film thickness number sequence) if necessary (step S4).

If step S4 is performed, an adjusted optical multilayer film 4 (film thickness number sequence therefor) is obtained.

Next, examples conforming to the above embodiment of the present invention and comparative examples falling outside the scope of the present invention are shown.

However, the examples do not limit the scope of the present invention.

Also, depending on how the present invention is viewed, an example may become a substantial comparative example, or a comparative example may become a substantial example that is within the scope of the present invention.

As Example 1, a notch filter having a basic optical multilayer film 4 on one surface (base material surface M) of a base material 2 (substrate) which is a parallel plate was formed by simulation.

The substrate is made of quartz glass, the refractive index thereof is 1.453, and the thickness thereof is 1 millimeter. Various values for the substrate can be changed in various ways.

The optical multilayer film 4 of Example 1 is designed considering a state where the wavelength range of a stopband includes 1064 nm (preferably, the center wavelength of the stopband is 1064 nm) and a free filter region is formed as a wavelength range including a wavelength range of 400 nm or more and 1200 nm or less.

The optical multilayer film 4 of Example 1 is designed by adding the modulation of the above Expression (1) to the first basic filter repeat structure (number of repeats q = 50, $L_0$ = 301). Here, the amplitude $a_1$ = 0.1, the period $\Lambda_1$ = 15.7, and the phase $\varphi_1$ = 0.

The film structure in the optical multilayer film 4 of Example 1 is shown below. Here, "H" merely indicates that it is a high refractive index layer, and a coefficient thereof (number in front of H) indicates the physical film thickness (nm) of the layer. Also, "L" merely indicates that it is a low refractive index layer, and a coefficient thereof (number in front of L) indicates the physical film thickness (nm) of the layer. The leftmost layer (109.25L) is closest to the substrate. Hereinafter, the format of indicating the film structure related to such coefficients, etc., is referred to as physical film thickness format. Furthermore, in Example 1, the following various values are taken into consideration. That is, a design wavelength $\lambda_0$ = 500 nm, and at $\lambda_0$, a refractive index $n_L$ of the low refractive index material = 1.475, a refractive index $n_H$ of the high refractive index material = 2.18, and a refractive index $n_0$ of the medium = 1. These values are merely an example, and can be changed in various ways. Also, these values are the same in the subsequent examples unless otherwise noted.

109.25L 19.85H 28.64L 137.42H 26.7L 17.42H 183.98L 16.46H 24.11L 120.74H 25.03L 17.62H 200.43L 19.03H 28.86L 145.37H 29.44L 19.75H 210.67L 18.63H 26.38L 125.69H 24.6L 16.4H 179.1L 16.66H 25.29L 130.12H 27.34L 19.22H 215.47L 19.97H 29.38L 143.26H 28.13L 18.41H 193.34L 17.05H 24.43L 119.43H 24.22L 16.79H 189.64L 18.05H 27.65L 141.47H 29.2L 19.99H 217.23L 19.49H 27.85L 132.76H 25.76L 16.88H 180.2L 16.36H 24.33L 123.58H 25.86L 18.27H 207.29L 19.54H 29.32L 145.85H 29.15L 19.33H 204.33L 17.98H 25.47L 122.15H 24.19L 16.38H 181.61L 17.11H 26.17L 134.87H 28.23L 19.68H 218.11L 19.96H 28.99L 139.79H 27.23L 17.76H 186.94L 16.62H 24.13L 119.81H 24.66L 17.29H 196.46L 18.7H 28.49L 144.39H 29.45L 19.9H 213.57L 18.97H 26.91L 128.08H 24.95L 16.52L 178.78L 16.49H 24.88L 127.58H 26.81L 18.9H 213.04L 19.88H 29.46L 144.62H 28.57L 18.77H 197.25L 17.35H 24.73L 119.96H 24.12L 16.58H 186.3L 17.69H 27.13L 139.33H 28.93L 19.94H 218.25L 19.72H 28.31L 135.39H 26.27L 17.16H 182.03L 16.39H 24.17L 121.83H 25.38L 17.9H 203.56L 19.28H 29.1L 145.79H 29.35L 19.59H 208L 18.34H 25.96L 123.98H 24.38L 16.36H 179.92L 16.83H 25.66L 132.23H 27.75L 19.44H 216.94L 19.99H 29.25L 141.86H 27.75L 18.12H 190.36L 16.83H 24.26L 119.39H 24.38L 16.99H 192.58L 18.34H 28.04L 142.94H 29.35L 19.98H 215.88L 19.28H 27.44L 130.64H 25.38L 16.7H 179.26L 16.39H 24.54L 125.24H 26.27L 18.56H 210.03L 19.72H 29.42L 145.51H 28.93L 19.1H 201.22L 17.69H 25.12L 120.99H 24.12L 16.44H 183.46L 17.35H 26.59L 136.93H 28.57L 19.82L 218.49L 19.88H 28.72L 137.92H 26.81L 17.49H 184.53L 16.49H 24.1L 120.52H 24.95L 17.55H 199.64L 18.97H 28.79L 145.21H 29.45L 19.79H 211.29L 18.7H 26.49L 126.15H 24.66L 16.42H 178.97L 16.62H 25.2L 129.6H 27.23L 19.16H 215.04L 19.96H 29.4L 143.57H 28.23L 18.48H 194.11L 17.11H 24.48H 119.49H 24.19L 16.74H 188.94L 17.98H 27.55L 141.07H 29.15L 19.99H 217.5L 19.54H 27.95L 133.29H 25.86L 16.94H 180.51L 16.36H 24.29L 123.2H 25.76L 18.19H 206.57L 19.49H 29.29L 145.88H 29.2L 19.39H 205.08L 18.05H 25.57L 122.49H 24.22L 16.37H 181.21L 17.05H 26.07L 134.35H 28.13L 19.63H 217.94L 19.97H 29.05L 140.23H 27.34L 17.83H 187.59L 16.66H 24.15L 119.68H 24.6L 17.23H 195.67L 18.63H 28.4L 144.13H 29.44L 19.92H 107.04L

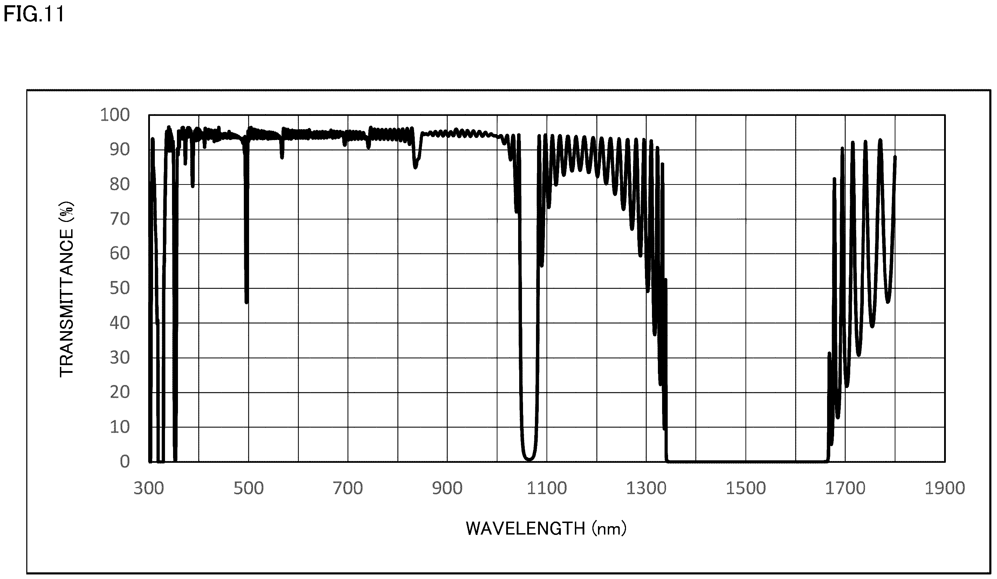

FIG. 11 is a graph showing a spectral transmittance exhibited by Example 1.

According to FIG. 11, in Example 1, a stopband having a center wavelength of 1064 nm is formed, and a free filter region is formed as a wavelength range including a wavelength range of 400 nm or more and 1200 nm or less. Moreover, the wavelength width of the stopband is about 20 nm (about 1050 nm or more and 1070 nm or less), which is sufficiently narrow.

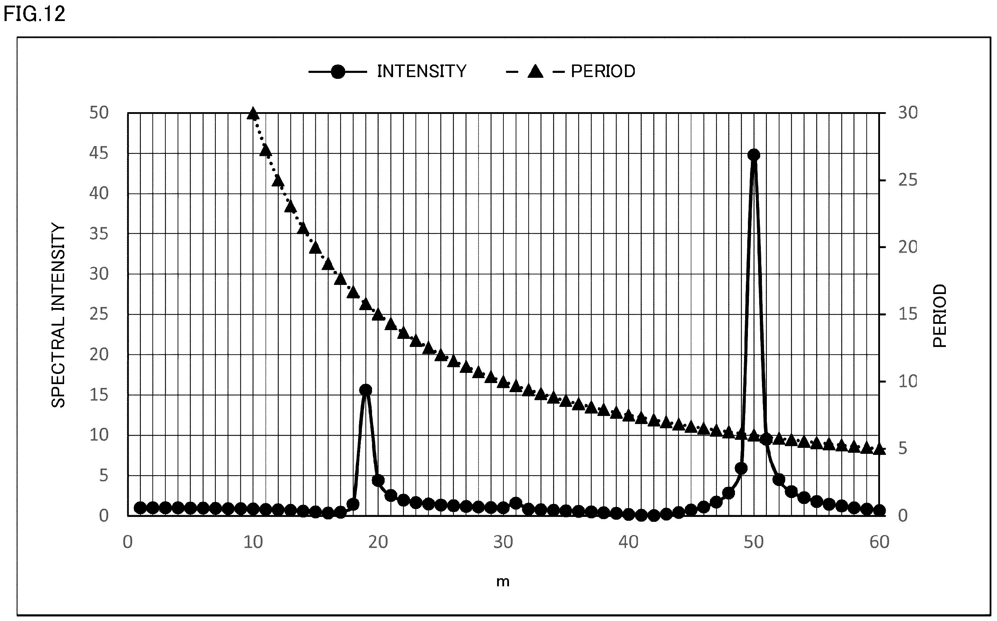

FIG. 12 is a graph showing a discrete Fourier transform spectrum of a film thickness number sequence of Example 1 and a period corresponding to a number m.

In FIG. 12, there is one more peak in the discrete Fourier transform spectrum at the number m = 19 than before modulation (first basic filter repeat structure in the case of the number of repeats q = 50; FIG. 7). For this peak, from the above Expression (6), $\Lambda'_{19}$ = (301-1)/19 = 15.8, which corresponds to the period $\Lambda_1$ = 15.7.

Also, in FIG. 12, as before modulation, there is a peak at m = 50 ($\Lambda'_{50}$ = 6.0) corresponding to the basic period p = 6.

Thus, in Example 1, in the discrete Fourier transform spectrum, there are peaks corresponding to the basic period p and the period $\Lambda_1$, respectively.

Example 2 has an adjusted optical multilayer film 4 designed by adjusting the values of appropriate terms in the film thickness number sequence of the basic optical multilayer film 4 of Example 1 for the purpose of reducing the ripple of the transmittance distribution in the free filter region.

The film structure in the optical multilayer film 4 of Example 2 is shown below in physical film thickness format. 126.36L 21.28H 31.13L 142.72H 26.6L 21.23H 196.22L 18.38H 27.22L 136.35H 30.93L 19.21H 219.15L 20.04H 31.47L 139.66H 27.34L 18.76H 178.01L 16.31H 27.05L 125.1H 27.04L 17.95H 197.95L 19.59H 29.77L 146.13H 29.61L 21.34H 208.12L 19.96H 24.75L 112.94H 22.37L 19.94H 187.2L 18.29H 24.02L 126.85H 28.6L 19.89H 217.93L 20.59H 32.02L 144.16H 30.77L 17.96H 165.26L 14.61H 29.38L 129.26H 30.05L 14.23H 169.3L 18.14H 30.03L 145.59H 31.17L 21.27H 218.4L 19.61H 29.98L 124.06H 22.85L 17.72H 186.26L 20.15H 21.88L 105.32H 23.3L 21.2H 208.32L 21.69H 29.28L 151.92H 28.85L 22.21H 201.71L 19.07H 25.25L 110.11H 23.26L 18.62H 175.49L 16.35H 24.48L 129.46H 31L 18.9H 221.22L 20.15H 33.18L 144.16H 29.15L 19.29H 170.66L 14.37H 26.48L 128.4H 32.46L 13.14H 155.13L 17.39H 30.73L 144.99H 32.29L 21.29H 224.76L 18.68H 32.99L 131.76H 26.16L 14.52H 171.27L 18.3H 23.5L 107.65H 22.67L 19.79H 204.71L 22.41H 27.9L 154.25H 28.9L 22.57H 206.24L 19.93H 25.42L 107.89H 22.11L 18.73H 182.45L 17.86H 21.07L 122.23H 29.83L 18.56H 217.54L 20.71H 33L 147.66H 26.82L 21.38H 183.88L 15.57H 23.17L 122.42H 29.57L 14.11H 154.92L 16.4H 30.66L 142.35H 33.32L 20.19H 228.35L 18.7H 33.97L 136.86H 29.89L 14.76H 156.59L 15.9H 27.24L 115.35H 22.37L 17.63H 197.18L 22.14H 27.35L 152.61H 29.47L 22.23H 211.92L 19.39H 27.14L 112.75H 21.14L 18.19H 185.54L 19.18H 19.88L 115H 27.83L 19.16H 214.37L 21.36H 31.74L 150.81H 26.63L 22.31H 192.73L 17.91H 21.07L 115.62H 26.67L 15.8H 161.85L 15.79H 29.21L 139.22H 32.79L 19.78H 228.34L 19.15H 32.94L 139.78H 30.53L 15.59H 155.78L 14.68H 29.12L 120.95H 23.51L 16.21H 191.17L 21.36H 27.43L 150.16H 30.16L 21.52H 215.33L 18.97H 27.91L 117.21H 21.81L 17.42H 184.65L 18.87H 20.22L 116.26H 27.46L 19.25H 214.9L 21.45H 31.15L 148.96H 27.56L 20.99H 189.75L 16.63H 23.85L 122.27H 28.08L 14.82H 164.48L 16.3H 29.66L 141.41H 32.41L 20.27H 222.06L 20.72H 29.41L 135.82H 26.75L 16.37H 177.82L 18.13H 23.72L 113.93H 23.13L 19.05H 203.89L 21.83H 28.66L 149.04H 31.76L 20.16H 205.99L 18.2H 25.83L 120.91H 25.11L 17.36H 177L 16.8H 26.78L 135.8H 31L 19.82H 222.74L 19.32H 33.44L 140.88H 30.08L 17.34H 175.59L 15.43H 28.79L 136.17H 32.74L 17.83H 217.13L 20.95H 30.05L 137.14H 21.43H 23.95H 94.67L

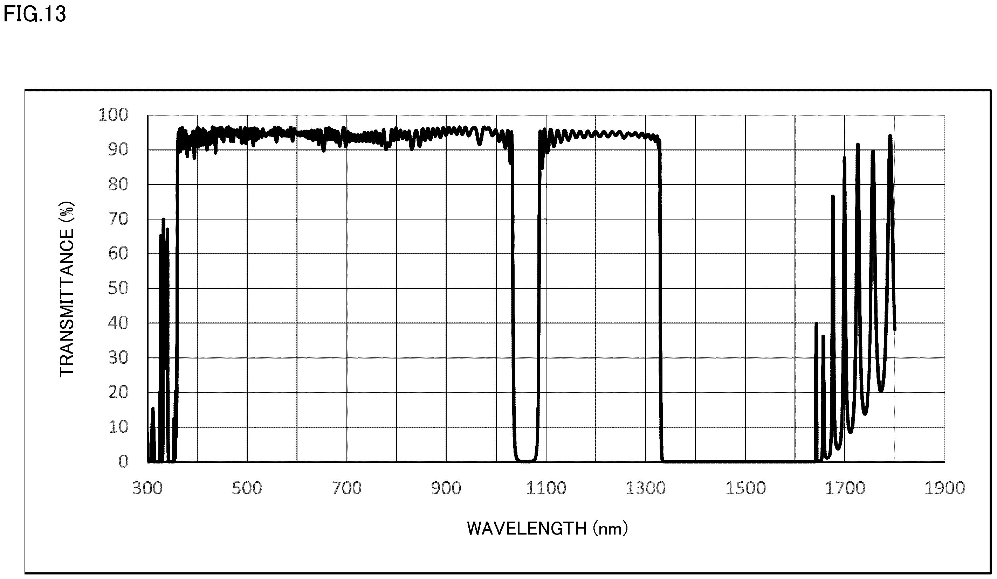

FIG. 13 is a graph showing a spectral transmittance exhibited by Example 2.

According to FIG. 13, Example 2 has the same free filter region and stopband as Example 1, but the ripple of the transmittance distribution in the free filter region is reduced.

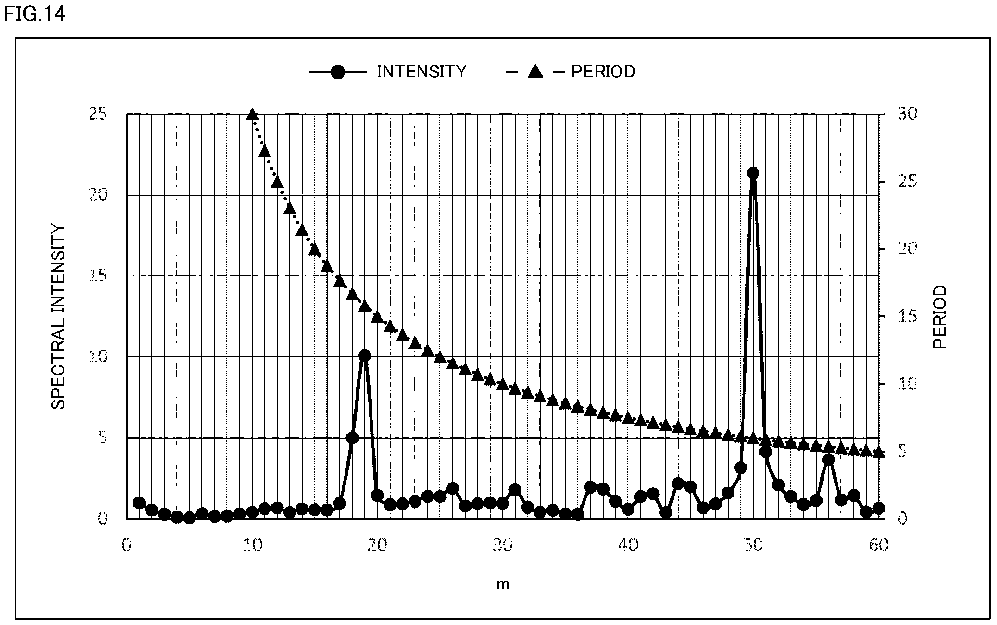

FIG. 14 is a graph showing a discrete Fourier transform spectrum of a film thickness number sequence of Example 2 and a period corresponding to a number m.

In FIG. 14, even in Example 2 (after adjusting the values of the appropriate terms in the film thickness number sequence), as in Example 1 (FIG. 12), there is a peak at m = 19 ($\Lambda'_{19}$ = 15.8) corresponding to the period $\Lambda_1$ of the modulation, and there is a peak at m = 50 ($\Lambda'_{50}$ = 6.0) corresponding to the basic period p.

As Example 3, one similar to Example 1 was formed, except that a basic optical multilayer film 4 was designed on the basis of the second basic filter repeat structure instead of the first basic filter repeat structure.

The optical multilayer film 4 of Example 3 is designed considering a state where the wavelength range of a stopband includes 1550 nm (preferably, the center wavelength of the stopband is 1550 nm) and a free filter region is formed as a wavelength range including a wavelength range of 400 nm or more and 1800 nm or less.

The optical multilayer film 4 of Example 3 is designed by adding the modulation of the above Expression (1) to the second basic filter repeat structure (number of repeats r = 40, $L_0$ = 561). Here, the amplitude $a_1$ = 0.1, the period $\Lambda_1$ = 50, and the phase $\varphi_1$ = 0.

The film structure in the optical multilayer film 4 of Example 3 is shown below.

```
1.21L    .154H  .527L  .328H  .305L  .54H   .129L  2.298H  .126L  .521H  .289L  .306H  .483L  .139H
2.159L   .136H  .46L   .284H  .262L  .464H  .11L   1.971H  .109L  .452H  .252L  .27H   .432L  .126H
1.995L   .128H  .441L  .278H  .262L  .473H  .115L  2.093H  .118L  .497H  .282L  .306H  .495L  .146H
2.318L   .149H  .515L  .324H  .305L  .547H  .132L  2.374H  .132L  .55H   .307L  .328H  .522L  .151H
2.36L    .149H  .506L  .313H  .289L  .509H  .121L  2.147H  .118L  .484H  .268L  .284H  .449L  .13H
2.022L   .128H  .435L  .271H  .252L  .45H   .108L  1.951H  .109L  .456H  .257L  .278H  .449L  .133H
2.106L   .136H  .471L  .298H  .282L  .509H  .124L  2.252H  .126L  .532H  .3L    .324H  .522L  .153H
2.413L   .154H  .528L  .33H   .307L  .547H  .131L  2.335H  .129L  .532H  .295L  .313H  .495L  .143H
2.214L   .139H  .471L  .291H  .268L  .473H  .112L  2.002H  .11L   .456H  .254L  .271H  .432L  .126H
1.982L   .126H  .435L  .274H  .257L  .464H  .112L  2.044H  .115L  .484H  .275L  .298H  .483L  .143H
2.268L   .146H  .506L  .319H  .3L    .54H   .131L  2.361H  .132L  .55H   .308L  .33H   .527L  .153H
2.393L   .151H  .515L  .319H  .295L  .521H  .124L  2.2H    .121L  .497H  .275L  .291H  .46L   .133H
2.06L    .13H   .441L  .274H  .254L  .452H  .108L  1.944H  .108L  .452H  .254L  .274H  .441L  .13H
2.06L    .133H  .46L   .291H  .275L  .497H  .121L  2.2H    .124L  .521H  .295L  .319H  .515L  .151H
2.393L   .153H  .527L  .33H   .308L  .55H   .132L  2.361H  .131L  .54H   .3L    .319H  .506L  .146H
2.268L   .143H  .483L  .298H  .275L  .484H  .115L  2.044H  .112L  .464H  .257L  .274H  .435L  .126H
1.982L   .126H  .432L  .271H  .254L  .456H  .11L   2.002H  .112L  .473H  .268L  .291H  .471L  .139H
2.214L   .143H  .495L  .313H  .295L  .532H  .129L  2.335H  .131L  .547H  .307L  .33H   .528L  .154H
2.413L   .153H  .522L  .324H  .3L    .532H  .126L  2.252H  .124L  .509H  .282L  .298H  .471L  .136H
2.106L   .133H  .449L  .278H  .257L  .456H  .109L  1.951H  .108L  .45H   .252L  .271H  .435L  .128H
2.022L   .13H   .449L  .284H  .268L  .484H  .118L  2.147H  .121L  .509H  .289L  .313H  .506L  .149H
2.36L    .151H  .522L  .328H  .307L  .55H   .132L  2.374H  .132L  .547H  .305L  .324H  .515L  .149H
2.318L   .146H  .495L  .306H  .282L  .497H  .118L  2.093H  .115L  .473H  .262L  .278H  .441L  .128H
1.995L   .126H  .432L  .27H   .252L  .452H  .109L  1.971H  .11L   .464H  .262L  .284H  .46L   .136H
2.159L   .139H  .483L  .306H  .289L  .521H  .126L  2.298H  .129L  .54H   .305L  .328H  .527L  .154H
2.42L    .154H  .527L  .328H  .305L  .54H   .129L  2.298H  .126L  .521H  .289L  .306H  .483L  .139H
2.159L   .136H  .46L   .284H  .262L  .464H  .11L   1.971H  .109L  .452H  .252L  .27H   .432L  .126H
1.995L   .128H  .441L  .278H  .262L  .473H  .115L  2.093H  .118L  .497H  .282L  .306H  .495L  .146H
2.318L   .149H  .515L  .324H  .305L  .547H  .132L  2.374H  .132L  .55H   .307L  .328H  .522L  .151H
2.36L    .149H  .506L  .313H  .289L  .509H  .121L  2.147H  .118L  .484H  .268L  .284H  .449L  .13H
2.022L   .128H  .435L  .271H  .252L  .45H   .108L  1.951H  .109L  .456H  .257L  .278H  .449L  .133H
2.106L   .136H  .471L  .298H  .282L  .509H  .124L  2.252H  .126L  .532H  .3L    .324H  .522L  .153H
2.413L   .154H  .528L  .33H   .307L  .547H  .131L  2.335H  .129L  .532H  .295L  .313H  .495L  .143H
2.214L   .139H  .471L  .291H  .268L  .473H  .112L  2.002H  .11L   .456H  .254L  .271H  .432L  .126H
1.982L   .126H  .435L  .274H  .257L  .464H  .112L  2.044H  .115L  .484H  .275L  .298H  .483L  .143H
2.268L   .146H  .506L  .319H  .3L    .54H   .131L  2.361H  .132L  .55H   .308L  .33H   .527L  .153H
2.393L   .151H  .515L  .319H  .295L  .521H  .124L  2.2H    .121L  .497H  .275L  .291H  .46L   .133H
2.06L    .13H   .441L  .274H  .254L  .452H  .108L  1.944H  .108L  .452H  .254L  .274H  .441L  .13H
2.06L    .133H  .46L   .291H  .275L  .497H  .121L  2.2H    .124L  .521H  .295L  .319H  .515L  .151H
2.393L .153H .527L .33H .308L .55H .132L 2.361H .131L .54H .3L .319H .506L .146H 1.134L
```

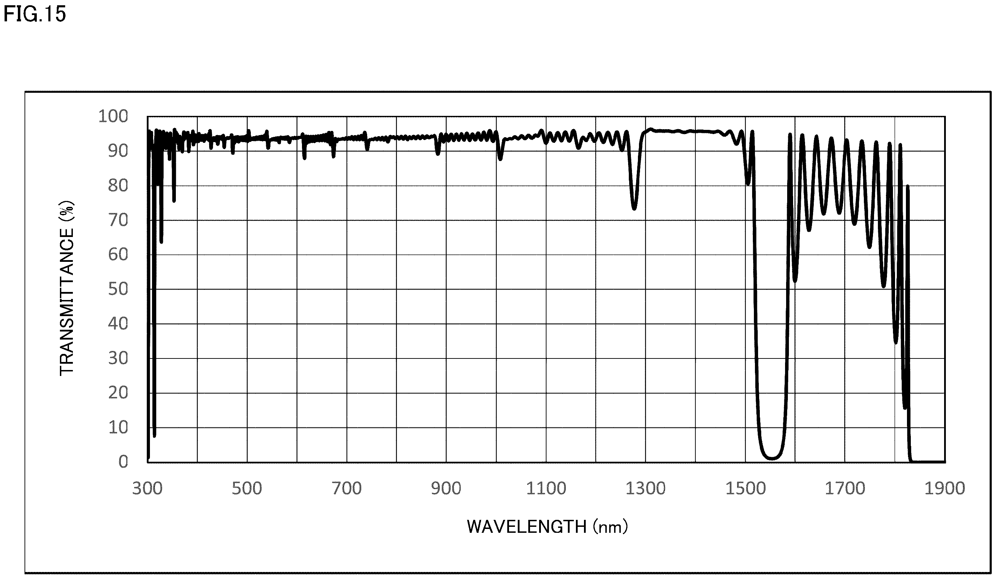

FIG. 15 is a graph showing a spectral transmittance exhibited by Example 3.

According to FIG. 15, in Example 3, a stopband having a center wavelength of 1550 nm is formed, and a free filter region is formed as a wavelength range including a wavelength range of 400 nm or more and 1800 nm or less. Moreover, the wavelength width of the stopband is about 60 nm (about 1520 nm or more and 1580 nm or less), which is sufficiently narrow.

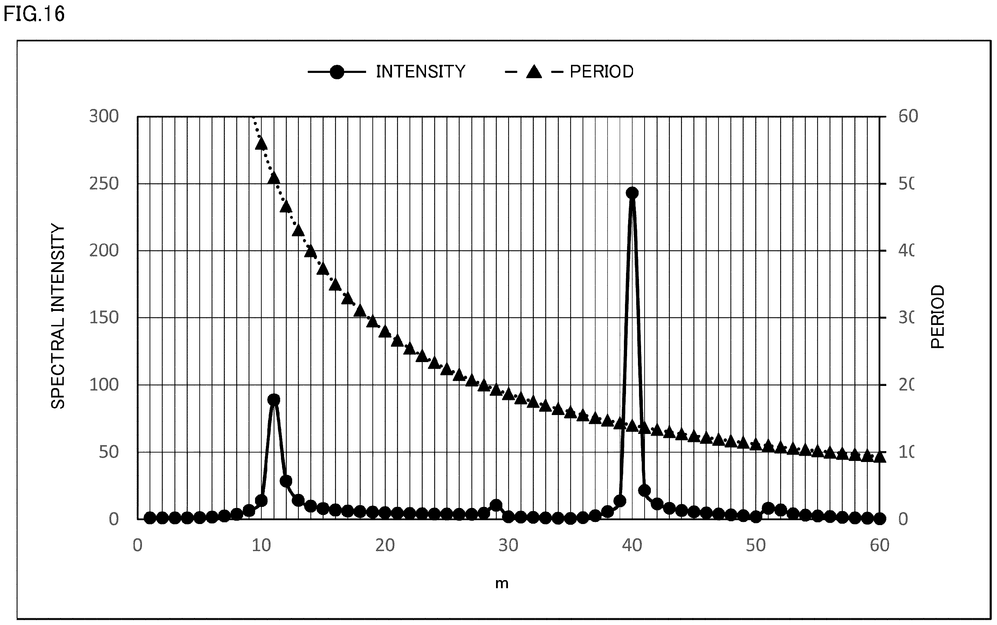

FIG. 16 is a graph showing a discrete Fourier transform spectrum of a film thickness number sequence of Example 3 and a period corresponding to a number m.

In FIG. 16, there is one more peak in the discrete Fourier transform spectrum at the number m = 11 than before modulation (second basic filter repeat structure in the case of the number of repeats s = 40; FIG. 8). For this peak, from the above Expression (6), $A'_{11}$ = (561-1)/11 = 50.9, which corresponds to the period $\Lambda_1$ = 50.

Also, in FIG. 16, as before modulation, there is a peak at m = 40 ($\Lambda'_{40}$ = 14.0) corresponding to the basic period p = 14.

Thus, in Example 3, in the discrete Fourier transform spectrum, there are peaks corresponding to the basic period p and the period $\Lambda_1$, respectively.

Example 4 has an adjusted optical multilayer film 4 designed by adjusting the values of appropriate terms in the film thickness number sequence of the basic optical multilayer film 4 of Example 3 for the purpose of reducing the ripple of the transmittance distribution in the free filter region.

The film structure in the optical multilayer film 4 of Example 4 is shown below.

1.198L .125H .521L .311H .301L .498H .114L 2.077H .111L .445H .245L .287H .468L .137H
2.24L .145H .479L .318H .26L .499H .106L 2.221H .123L .531H .305L .327H .523L .137H
2.415L .138H .534L .337H .317L .544H .127L2.315H .117L .57H .307L .344H .519L .14H
2.16L .121H .49L .283H .276L .455H .116L 2.069H .116L .445H .253L .266H .448L .123H
2.064L .121H .454L .273H .254L .437H .112L 2.085H .124L .446H .255L .258H .449L .129H
2.232L .144H .49L .323H .265L .499H .107L 2.228H .123L .535H .311L .333H .536L .138H
2.379L .131H .57L .339H .322L .538H .117L 2.107H .108L .513H .279L .305H .475L .126H
2.137L .128H .448L .267H .249L .443H .114L 1.991H .104L .448H .261L .278H .449L .116H
2.061L .137H .461L .28H .217L .393H .111L 2.133H .123L .409H .234L .27H .472L .136H
2.203L .119H .482L .289H .311L .521H .133L 2.344H .125L .563H .329L .34H .557L .135H
2.349L .131H .546L .328H .307L .52H .113L 2.076H .108L .479H .264L .292H .463L .129H
2.118L .127H .438L .261H .239L .424H .112L 2.015H .114L .42H .23L .249H .418L .13H
2.137L .139H .432L .254H .215L .409H .119L 2.116H .117L .434H .251L .28H .472L .133H
2.242L .131H .512L .319H .303L .531H .123L 2.331H .126L .586H .34L .348H .571L .131H
2.286L .124H .536L .319H .307L .516H .113L 2.055H .109L .47H .26L .28H .447L .126H
2.125L .133H .423L .241H .225L .413H .121L 2.066H .127L .431H .256L .227H .402L .113H
2.105L .141H .424L .23H .206L .404H .133L 2.157H .116L .43H .249L .288H .485L .136H
2.27L .133H .527L .329H .314L .552H .125L 2.365H .13L .573H .337L .34H .56L .13H
2.267L .126H .524L .317H .295L .503H .108L 2.038H .112L .462H .258L .272H .442L .124H
2.108L .136H .428L .242H .209L .387H .123L 2.109H .131L .393H .204L .222H .41L .138H
2.156L .137H .416L .234H .221L .419H .13L 2.155H .12L .448H .26L .286H .485L .136H
2.345L .15H .554L .372H .307L .579H .107L 2.235H .115L .583H .319L .359H .556L .14H
2.264L .122H .495L .291H .289L .48H .117L 2.089H .12L .447H .249L .248H .419L .126H
2.138L .139H .415L .228H .204L .393H .127L 2.11H .128L .397H .213L .231H .42L .135H
2.124L .127H .447L .277H .253L .456H .11L 2.069H .113L .51H .301L .316H .531L .126H
2.288L .128H .561L .336H .343L .574H .135L 2.384H .125L .546H .308L .322H .514L .133H
2.277L .142H .491L .3H .235L .414H .109L 2.149H .132L .396H .204L .236H .43L .141H
2.112L .122H .434L .266H .247L .432H .108L 2.002H .11L .429H .24L .272H .451L .129H
2.099L .123H .486L .31H .285L .512H .107L 2.091H .116L .561H .336L .347H .595L .13H
2.439L .143H .541L .338H .315L .535H .127L 2.343H .127L .495H .276L .281H .455L .136H
2.273L .147H .464L .257H .205L .388H .131L 2.193H .132L .388H .209L .239H .436L .137H
2.124L .131H .452L .282H .241L .433H .108L 2.084H .117L .459H .264L .291H .488L .135H
2.335L .15H .551L .369H .308L .58H .112L 2.338H .123L .606H .336L .373H .582L .145H
2.365L .127H .508L .292H .295L .486H .127L 2.205H .133L .452H .251L .24H .423L .133H
2.223L .146H .432L .235H .215L .418H .136L 2.182H .114L .43H .247L .3H .495L .142H
2.315L .139H .538L .342H .316L .565H .125L 2.444H .134L .615H .354L .369H .598L .142H
2.389L .129H .532L .313H .307L .51H .122L 2.174H .126L .471H .271L .267H .45L .126H
2.189L .14H .456L .27H .238L .435H .122L 2.147H .11L .447H .252L .307H .494L .142H
2.31L .131H .541L .342H .321L .579H .122L 2.529H .136L .618H .357L .382H .601L .149H
2.369L .124H .521L .296H .305L .483H .126L 1.912H .106L .472H .243L .261H .41L .118H .953L

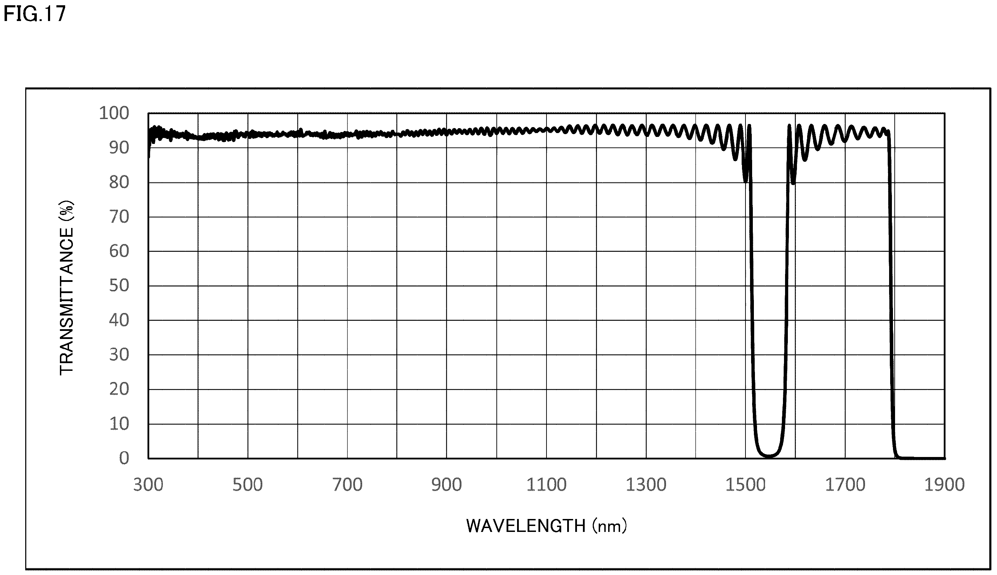

FIG. 17 is a graph showing a spectral transmittance exhibited by Example 4.

According to FIG. 17, Example 4 has the same free filter region and stopband as Example 3, but the ripple of the transmittance distribution in the free filter region is reduced.

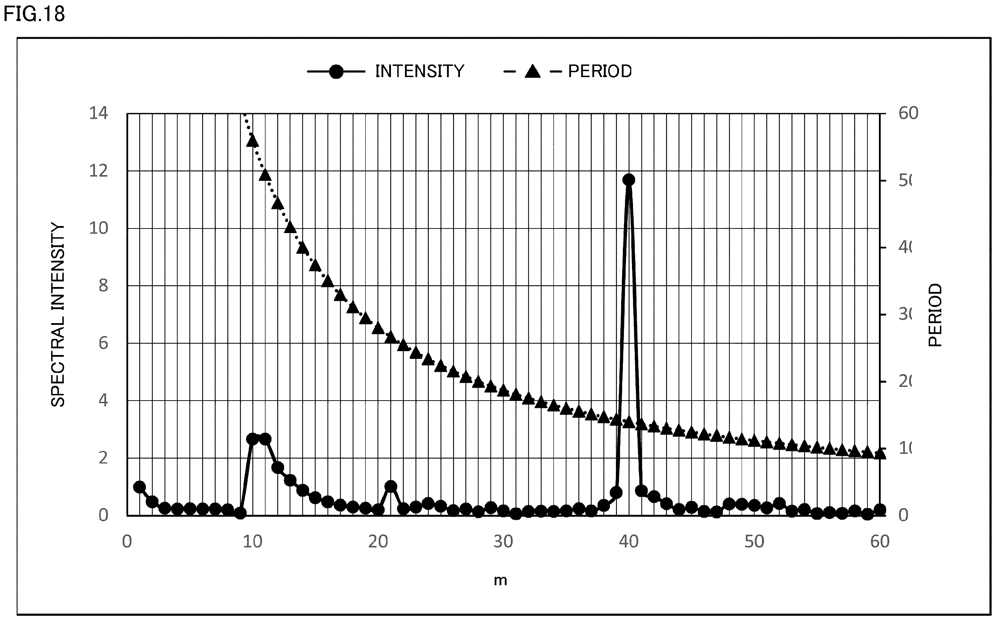

FIG. 18 is a graph showing a discrete Fourier transform spectrum of a film thickness number sequence of Example 4 and a period corresponding to a number m.

In FIG. 18, even in Example 4 (after adjusting the values of the appropriate terms in the film thickness number sequence), as in Example 3 (FIG. 16), there is a peak at m = 11 ($\Lambda'_{11}$ = 50.9) corresponding to the period $\Lambda_1$ of the modulation, and there is a peak at m = 40 ($\Lambda'_{40}$ = 14.0) corresponding to the basic period p. In addition, as a result of adjusting the film thickness number sequence, the value at m = 10 ($\Lambda'_{10}$ = 56.0) has the same spectral intensity as the peak at m = 11 ($\Lambda'_{11}$ = 50.9).

As Example 5, one similar to Example 3 was formed, except that the phase $\varphi_1$ was changed from 0 to $\pi/2$ in the modulation of the above Expression (1).

The film structure in the optical multilayer film 4 of Example 5 is shown below.

1.1L .142H .492L .311H .293L .529H .128L2.326H .13L .545H .307L .329H .528L .154H
2.416L .153H .523L .325H .302L .534H .127L 2.264H .124L .512H .284L .3H .474L .137H
2.119L .133H .452L .279H .258L .458H .109L 1.955H .108L .45H .252L .27H .434L .127H
2.014L .129H .447L .282H .267L .482H .117L 2.133H .12L .506H .287L .311H .503L .148H 2.351L .151H .52L .327H .307L .549H .132L 2.376H .132L .548H .305L .325H .517L .15H
2.329L .147H .498L .307H .284L .5H .118L 2.106H .116L .476H .263L .279H .443L .128H
2.001L .127H .433L .27H .252L .451H .109L 1.965H .11L .461H .261L .282H .457L .135H
2.145L .138H .48L .304H .287L .518H .126L 2.287H .128L .539H .304L .327H .526L .154H
2.42L .154H .527L .329H .305L .542H .129L 2.308H .127L .524H .29L .307H .486L .14H
2.172L .137H .462L .285H .263L .466H .111L 1.978H .109L .452H .253L .27L .432L .126H
1.991L .127H .439L .277H .261L .471H .114L 2.08H .117L .494H .28L .304H .492L .145H
2.306L .148H .513L .323H .304L .545H .131L 2.372H .132L .55H .308L .329H .523L .152H
2.37L .15H .508L .314H .29L .512H .122L 2.16H .118L .488H .27L .285H .452L .13H
2.031L .128H .437L .272H .253L .45H .108L 1.948H .109L .455H .256L .277H .447L .132H
2.094L .135H .468L .296H .28L .506H .123L 2.239H .126L .529H .299L .323H .52L .153H
2.409L .154H .528L .33H .308L .548H .131L 2.342H .129L .534H .296L .314H .498L .144H
2.228L .14H .474L .292H .27L .476H .113L 2.012H .111L .458H .255L .272H .433L .126H
1.98L .126H .434L .273H .256L .461H .112L 2.033H .114L .482H .273L .296H .48L .142H
2.255L .145H .503L .318H .299L .539H .13L 2.355H .131L .549H .308L .33H .527L .153H
2.399L .152H .517L .321H .296L .524H .124L 2.214H .122L .5H .276L .292H .462L .133H
2.071L .13H .443L .275H .255L .452H .108L 1.944H .108L .451H .253L .273H .439L .129H
2.049L .132H .457L .289H .273L .494H .12L 2.187H .123L .518H .293L .318H .513L .151H
2.386L .153H .526L .329H .308L .55H .132L 2.365H .131L .542H .302L .321H .508L .147H
2.281L .144H .486L .3H .276L .488H .116L 2.056H .113L .466H .258L .275H .437L .127H
1.984L .126H .432L .27H .253L .455H .11L 1.994H .112L .471H .267L .289H .468L .138H
2.2L .142H .492L .311H .293L .529H .128L 2.326H .13L .545H .307L .329H .528L .154H
2.416L .153H .523L .325H .302L .534H .127L 2.264H .124L .512H .284L .3H .474L .137H
2.119L .133H .452L .279H .258L .458H .109L 1.955H .108L .45H .252L .27H .434L .127H
2.014L .129H .447L .282H .267L .482H .117L 2.133H .12L .506H .287L .311H .503L .148H
2.351L .151H .52L .327H .307L .549H .132L 2.376H .132L .548H .305L .325H .517L .15H
2.329L .147H .498L .307H .284L .5H .118L 2.106H .116L .476H .263L .279H .443L .128H
2.001L .127H .433L .27H .252L .451H .109L 1.965H .11L .461H .261L .282H .457L .135H
2.145L .138H .48L .304H .287L .518H .126L 2.287H .128L .539H .304L .327H .526L .154H
2.42L .154H .527L .329H .305L .542H .129L 2.308H .127L .524H .29L .307H .486L .14H
2.172L .137H .462L .285H .263L .466H .111L 1.978H .109L .452H .253L .27H .432L .126H
1.991L .127H .439L .277H .261L .471H .114L 2.08H .117L .494H .28L .304H .492L .145H
2.306L .148H .513L .323H .304L .545H .131L 2.372H .132L .55H .308L .329H .523L .152H
2.37L .15H .508L .314H .29L .512H .122L 2.16H .118L .488H .27L .285H .452L .13H
2.031L .128H .437L .272H .253L .45H .108L 1.948H .109L .455H .256L .277H .447L .132H
2.094L .135H .468L .296H .28L .506H .123L 2.239H .126L .529H .299L .323H .52L .153H 1.205L

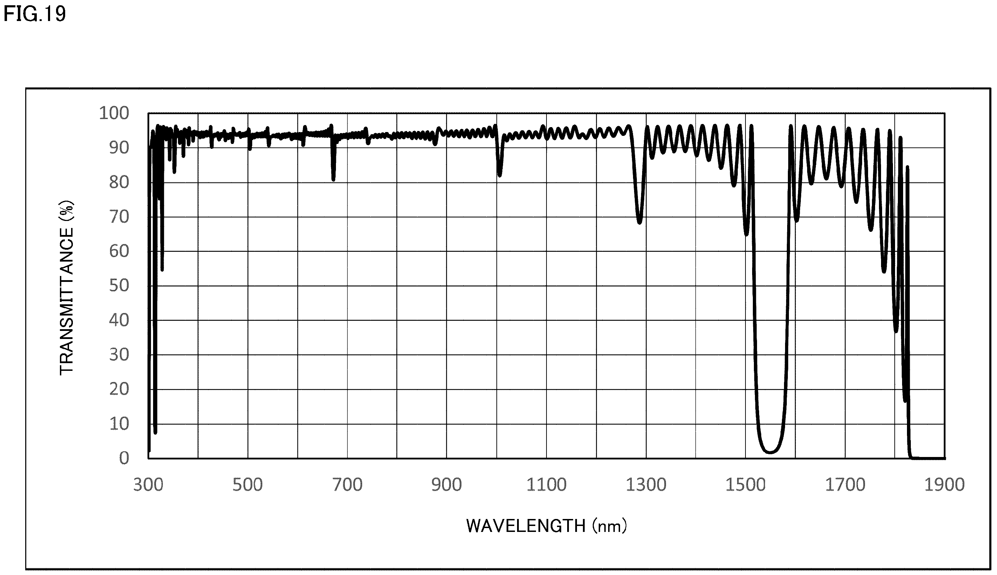

FIG. 19 is a graph showing a spectral transmittance exhibited by Example 5.

According to FIG. 19, the spectral transmittance of Example 5 is similar to that of Example 3.

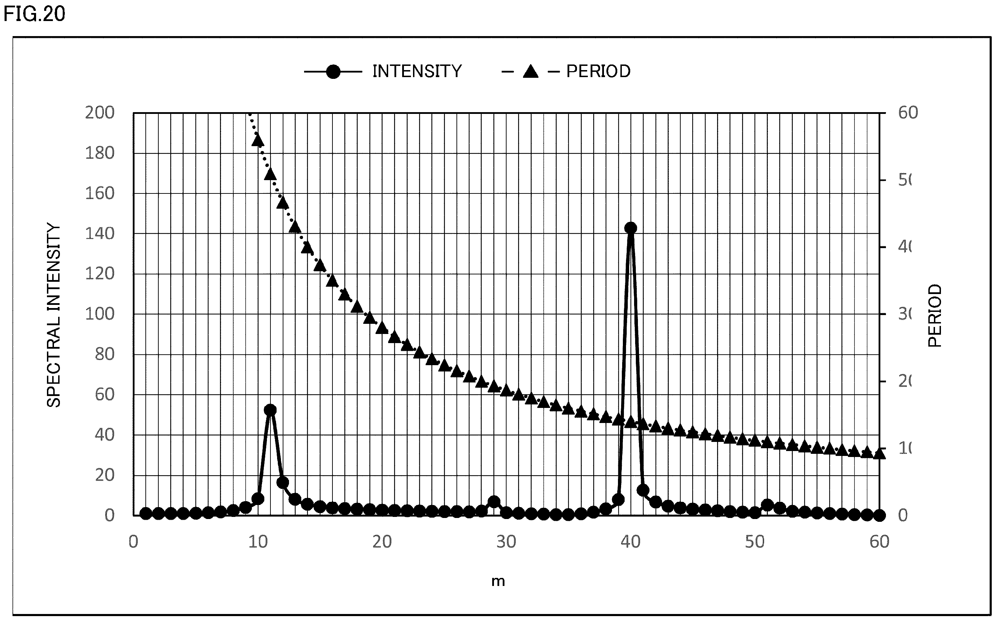

FIG. 20 is a graph showing a discrete Fourier transform spectrum of a film thickness number sequence of Example 5 and a period corresponding to a number m.

According to FIG. 20, the discrete Fourier transform spectrum of Example 5 is similar to that of Example 3.

That is, in Example 5 as well, there are peaks in the discrete Fourier transform spectrum corresponding to the basic period p and the period $\Lambda_1$, respectively ($\Lambda'_{40}$ = 14.0 = p, $\Lambda'_{11}$ = 50.9 ≈ $\Lambda_1$).

As Example 6, one similar to Example 3 was formed, except that the amplitude $a_1$ was changed from 0.1 to 0.3 and the period $\Lambda_1$ was changed from 50 to 15.7 in the modulation of the above Expression (1).

The film structure in the optical multilayer film 4 of Example 6 is shown below.

1.43L .179H .58L .333H .278L .437H .093L 1.549H .084L .366H .225L .273H .493L .16H
2.713L .18H .623L .378H .331L .537H .115L 1.821H .091L .354H .197L .225H .4L .132H
2.338L .164H .602L .389H .362L .62H .138L 2.244H .11L .407H .206L .211H .342L .108H
1.901L .137H .527L .36H .356L .65H .154L 2.63H .134L .502H .248L .236H .346L .098H
1.597L .111H .431L .305H .317L .613H .154L 2.806H .152L .596H .304L .29H .41L .107H
1.562L .098H .356L .247H .261L .525H .139L 2.695H .155L .647H .349L .349H .504L .13H
1.811L .104H .337L .213H .214L .427H .116L 2.345H .143L .633H .364L .385H .588L .158H
2.233L .126H .382L .218H .196L .361H .094L 1.914H .12L .56H .341L .384H .624L .178H
2.64L .154H .47L .259H .216L .357H .084L 1.591H .098L .46H .291L .345H .595L .181H
2.852L .176H .563L .319H .264L .416H .09L 1.523H .085L .378H .236L .287H .516L .166H
2.773L .182H .618L .37H .32L .513H .109L 1.737H .088L .35H .201L .234H .42L .139H
2.439L .169H .613L .39H .357L .604H .133L 2.141H .105L .389H .201L .21H .351L .113H

```
1.999L  .144H  .548L  .37H   .361L  .649H  .151L  2.552H  .129L  .478H  .236L  .227H  .339L  .099H
1.648L  .117H  .453L  .319H  .328L  .627H  .156L  2.789H  .149L  .576H  .291L  .276H  .391L  .103H
1.543L  .1H    .37L   .259H  .274L  .549H  .144L  2.746H  .156L  .64H   .341L  .336H  .481L  .124H
1.731L  .101H  .336L  .218H  .223L  .449H  .122L  2.442H  .147L  .642H  .364L  .38H   .572L  .152H
2.128L  .119H  .366L  .213H  .197L  .371H  .099L  2.012H  .126L  .581H  .349L  .388H  .621L  .175H
2.556L  .147H  .447L  .247H  .208L  .351H  .085L  1.648H  .102L  .484H  .304L  .357H  .608L  .182H
2.826L  .172H  .543L  .305H  .251L  .398H  .087L  1.512H  .087L  .393H  .248L  .301H  .537L  .17H
2.818L  .182H  .61L   .36H   .307L  .49H   .104L  1.664H  .086L  .351H  .206L  .244H  .442L  .145H
2.534L  .174H  .62L   .389H  .351L  .586H  .128L  2.038H  .1L    .375H  .197L  .212H  .363L  .118H
2.101L  .15H   .567L  .378H  .363L  .644H  .148L  2.465H  .123L  .454H  .225L  .219H  .336L  .1H
1.713L  .122H  .476L  .333H  .339L  .638H  .156L  2.757H  .145L  .554H  .278L  .262H  .374L  .1H
1.541L  .102H  .386L  .273H  .288L  .571H  .148L  2.783H  .156L  .63H   .331L  .322H  .458L  .118H
1.663L  .099H  .338L  .225H  .233L  .472H  .128L  2.531H  .15L   .648H  .362L  .372H  .553L  .145H
2.024L  .114H  .354L  .211H  .2L    .385H  .104L  2.115H  .132L  .6H    .356L  .39H   .615L  .17H
2.463L  .14H   .425L  .236H  .202L  .35H   .087L  1.718H  .108L  .508H  .317L  .368H  .617L  .182H
2.785L  .167H  .521L  .29H   .239L  .382H  .085L  1.518H  .089L  .412H  .261L  .315H  .558L  .175H
2.847L  .181H  .599L  .349H  .294L  .466H  .099L  1.604H  .084L  .355H  .214L  .256H  .464L  .152H
2.62L   .177H  .624L  .385H  .343L  .565H  .122L  1.938H  .095L  .363H  .196L  .216H  .378L  .124H
2.207L  .157H  .584L  .384H  .364L  .636H  .144L  2.37H   .118L  .432H  .216L  .214H  .337L  .103H
1.79L   .129H  .499L  .345H  .347L  .646H  .156L  2.709H  .141L  .531H  .264L  .25H   .36L   .099H
1.556L  .106H  .405L  .287H  .301L  .591H  .151L  2.803H  .155L  .617H  .32L   .308H  .436L  .113H
1.609L  .098H  .344L  .234H  .245L  .495H  .133L  2.611H  .153L  .65H   .357L  .363H  .532L  .139H
1.925L  .109H  .344L  .21H   .205L  .402H  .109L  2.218H  .137L  .617H  .361L  .389H  .605L  .166H
2.363L  .134H  .405L  .227H  .198L  .352H  .09L   1.799H  .113L  .531H  .328L  .376H  .622L  .181H
2.729L  .161H  .499L  .276H  .228L  .368H  .084L  1.541H  .093L  .432H  .274L  .329H  .576L  .178H
2.859L  .179H  .584L  .336H  .281L  .443H  .094L  1.558H  .084L  .363H  .223L  .269H  .487L  .158H
2.696L  .18H   .624L  .38H   .333L  .543H  .116L  1.844H  .092L  .355H  .197L  .223H  .395L  .13H
2.312L .163H .599L .388H .362L .624H .139L 2.27H .112L .412H .208L .211H .341L .107H .939L
```

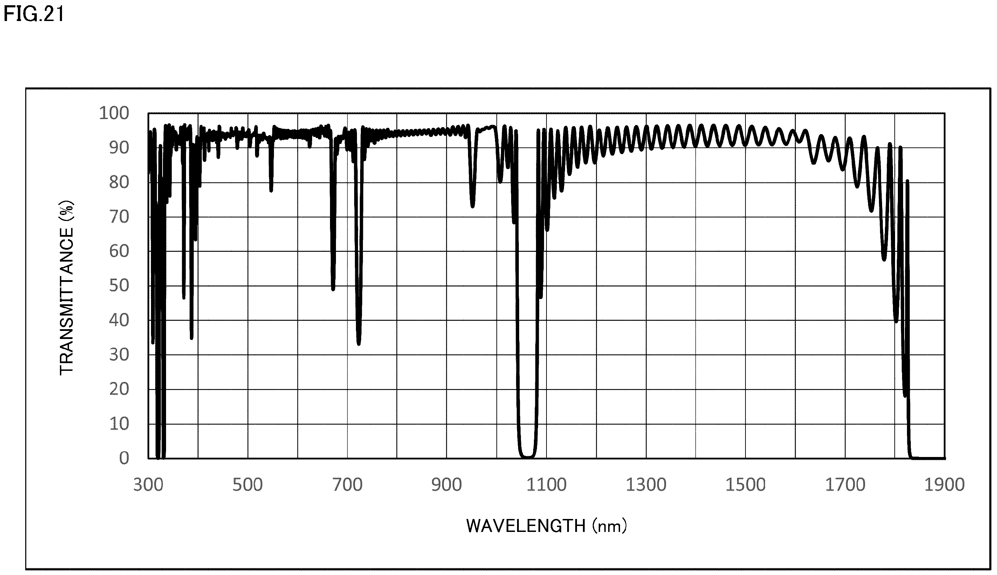

FIG. 21 is a graph showing a spectral transmittance exhibited by Example 6.

According to FIG. 21, in Example 6, a stopband having a center wavelength of 1064 nm is formed, and a free filter region is formed as a wavelength range including a wavelength range of 400 nm or more and 1800 nm or less. Moreover, the wavelength width of the stopband is about 40 nm (about 1040 nm or more and 1080 nm or less), which is sufficiently narrow.

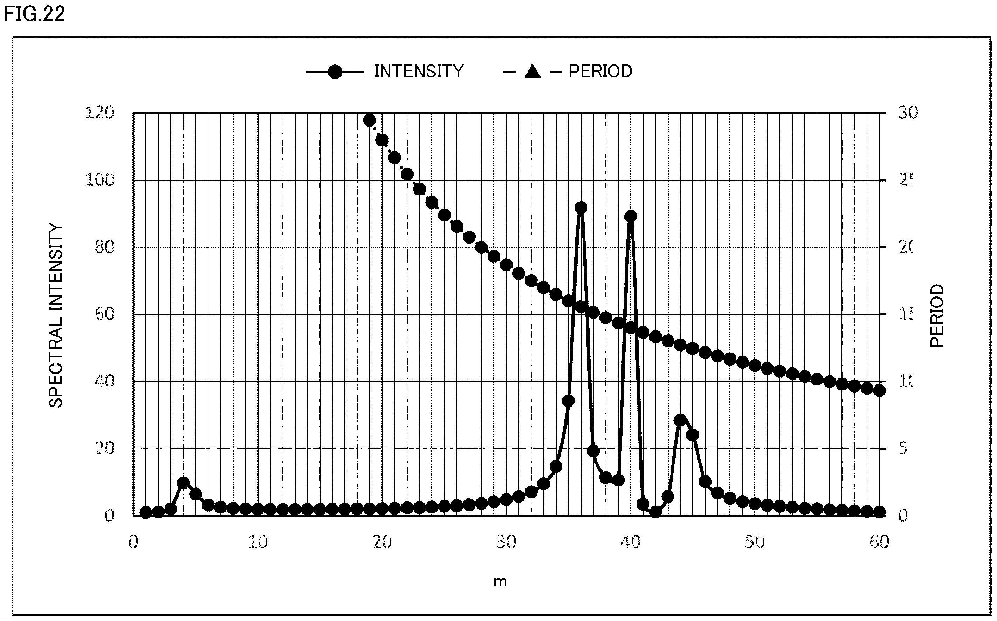

FIG. 22 is a graph showing a discrete Fourier transform spectrum of a film thickness number sequence of Example 6 and a period corresponding to a number m.

In FIG. 22, there are peaks in the discrete Fourier transform spectrum at the numbers m = 36 and 40. Of these peaks, for the peak at m = 36, from the above Expression (6), $\Lambda'_{36}$ = (561-1)/36 = 15.6, which corresponds to the period $\Lambda_1$ = 15.7.

Also, for the peak at m = 40, from the above Expression (6), $\Lambda'_{40}$ = (561-1)/40 = 14.0, which corresponds to the basic period p = 14.

Thus, in Example 6, in the discrete Fourier transform spectrum, there are peaks corresponding to the basic period p and the period $\Lambda_1$, respectively.

Example 7 has an adjusted optical multilayer film 4 designed by adjusting the values of appropriate terms in the film thickness number sequence of the basic optical multilayer film 4 of Example 6 for the purpose of reducing the ripple of the transmittance distribution in the free filter region.

The film structure in the optical multilayer film 4 of Example 7 is shown below.

```
1.308L  .215H  .566L  .403H  .336L  .529H  .113L  1.874H  .102L  .442H  .196L  .33H   .475L  .193H
2.704L  .147H  .647L  .385H  .383L  .624H  .132L  2.074H  .11L   .361H  .182L  .272H  .447L  .16H
2.442L  .146H  .604L  .343H  .367L  .552H  .153L  2.207H  .126L  .397H  .244L  .228H  .414L  .107H
2.122L  .151H  .611L  .388H  .375L  .63H   .152L  2.246H  .14L   .43H   .257L  .191H  .363L  .109H
1.911L  .11H   .521L  .356H  .362L  .656H  .153L  2.597H  .144L  .482H  .29L   .235H  .496L  .087H
1.46L   .1H    .431L  .232H  .309L  .542H  .15L   2.74H   .126L  .666H  .324L  .331H  .442L  .106H
1.848L  .114H  .334L  .217H  .212L  .372H  .116L  2.476H  .141L  .737H  .345L  .454H  .571L  .156H
1.874L  .128H  .38L   .184H  .194L  .425H  .11L   1.964H  .146L  .647H  .409L  .433H  .654L  .199H
2.339L  .125H  .381L  .278H  .196L  .296H  .068L  1.812H  .097L  .455H  .352L  .344H  .698L  .146H
2.805L  .142H  .514L  .308H  .214L  .446H  .073L  1.385H  .071L  .346H  .206L  .347H  .567L  .134H
2.914L  .147H  .675L  .339H  .321L  .416H  .088L  1.798H  .071L  .284H  .18L   .216H  .34L   .137H
2.525L  .188H  .679L  .393H  .432L  .598H  .161L  1.966H  .104L  .356H  .163L  .183H  .37L   .116H
```

2.019L .174H .579L .448H .379L .69H .183L 2.411H .104L .387H .232L .21H .288L .08H
1.832L .095H .367L .316H .309L .679H .126L 3.008H .121L .556H .31L .223H .368L .084H
1.458L .088H .425L .21H .238L .458H .117L 2.891H .126L .755H .303L .407H .477L .114H
1.775L .082H .272L .194H .25L .363H .099L 2.336H .178L .676H .407L .46H .617L .184H
2.152L .097H .337L .181H .161L .337H .115L 1.942H .153L .566H .423L .375H .699L .188H
2.665L .146H .379L .2H .171L .425H .07L 1.486H .083L .392H .296L .32H .617L .147H
3.363L .139H .495L .328H .204L .352H .071L 1.225H .07L .444H .201L .292H .435L .138H
3.178L .147H .711L .327H .372L .485H .085L 1.585H .069L .32H .167L .224H .358L .144H
2.497L .21H .656L .426H .425L .629H .154L 2.038H .094L .363H .16L .172H .343L .121H
2.092L .182H .568L .457H .38L .696H .179L 2.494H .122L .368H .23L .18H .272L .081H
1.683L .099H .471L .385H .314L .745H .126L 2.983H .118L .501H .268L .213H .418L .081H
1.418L .083H .37L .221H .302L .554H .12L 2.992H .126L .731H .308L .341H .371L .096H
1.817L .08H .274L .182H .226L .382H .126L 2.521H .179L .722H .371L .45H .576L .17H
1.987L .131H .359L .171H .167L .412H .089L 1.969H .159L .64H .431L .43H .663L .206H
2.406L .115H .344L .249H .2L .284H .071L 1.7H .09L .502H .383L .341H .727L .147H
2.883L .135H .516L .313H .194L .408H .069L 1.403H .072L .337H .211L .342H .553L .141H
3.02L .147H .646L .346H .309L .377H .08L 1.702H .068L .352H .174L .234H .376L .151H
2.546L .189H .673L .404H .415L .605H .147L 1.939H .116L .357H .159L .207H .423L .116H
1.936L .182H .584L .465H .356L .723H .155L 2.4H .116L .359H .217L .198H .277L .102H
1.863L .104H .447L .342H .32L .686H .126L 2.762H .139L .56H .32L .237H .422L .093H
1.389L .089H .49L .232H .275L .482H .139L 2.637H .147L .682H .358L .373H .521L .112H
1.863L .097H .308L .192H .291L .447H .115L 2.115H .152L .661H .393L .402H .639L .162H
2.156L .106H .4L .201H .216L .377H .13L 1.987H .136L .527H .378L .347H .663L .139H
2.526L .14H .439L .253H .229L .416H .109L 1.457H .101L .585H .323L .381H .622L .146H
2.593L .147H .547L .323H .275L .446H .101L 1.761H .075L .428H .24L .342H .517L .157H
2.546L .163H .588L .392H .308L .536H .093L 1.766H .086L .439H .216L .326H .459L .158H
2.45L .15H .62L .414H .333L .657H .101L 1.907H .111L .43H .197L .27H .477L .158H
2.401L .147H .554L .314H .312L .542H .136L 2.166H .111L .407H .238L .21H .337L .129H 1.136L

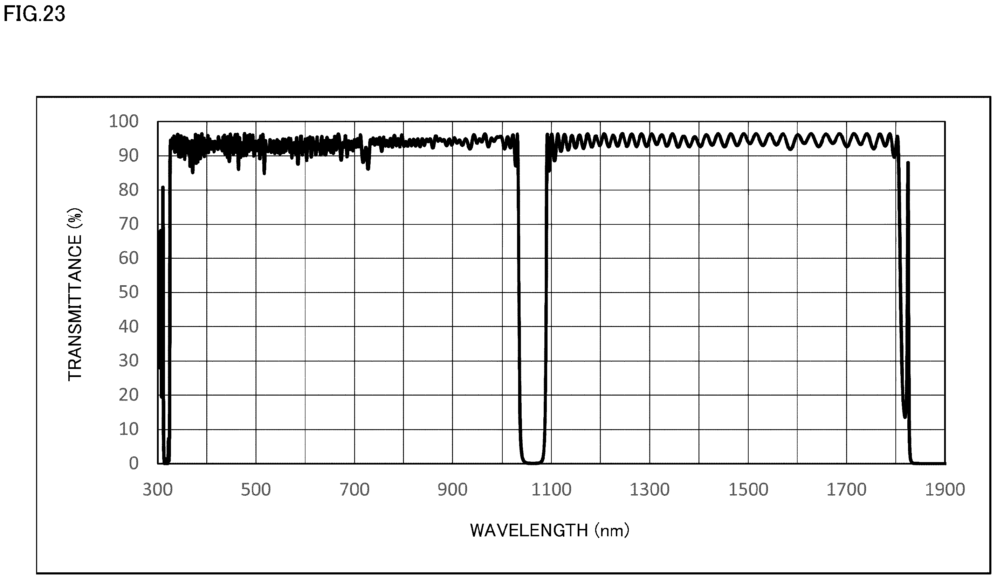

FIG. 23 is a graph showing a spectral transmittance exhibited by Example 7.

According to FIG. 23, Example 7 has the same free filter region and stopband as Example 6, but the ripple of the transmittance distribution in the free filter region is reduced.

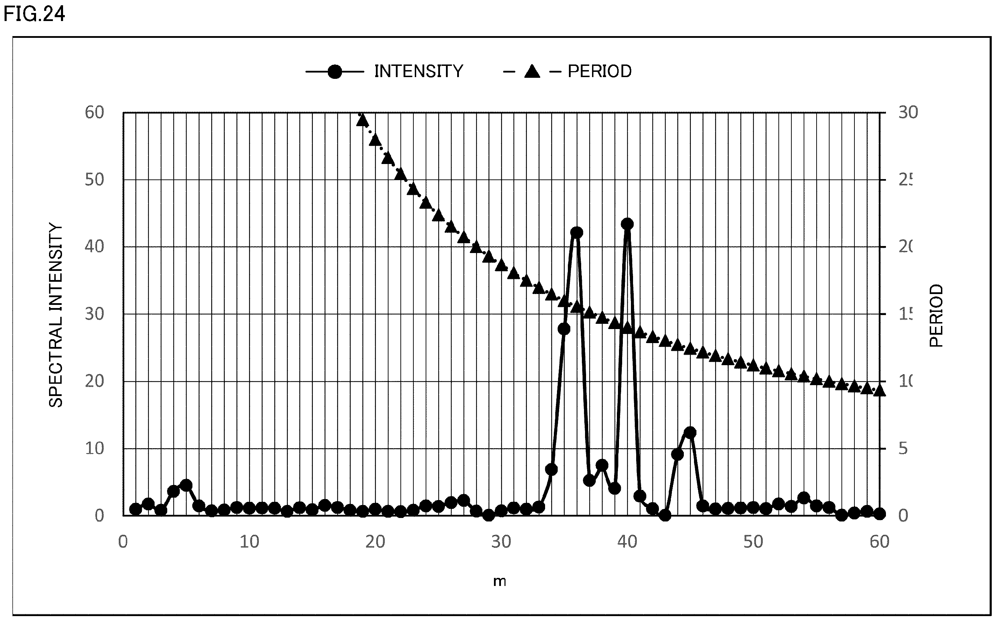

FIG. 24 is a graph showing a discrete Fourier transform spectrum of a film thickness number sequence of Example 7 and a period corresponding to a number m.

In FIG. 24, even in Example 7 (after adjusting the values of the appropriate terms in the film thickness number sequence), as in Example 6 (FIG. 22), there is a peak at m = 36 ($\Lambda'_{36}$ = 15.6) corresponding to the period $\Lambda_1$ of the modulation, and there is a peak at m = 40 ($\Lambda'_{40}$ = 14.0) corresponding to the basic period p.

As Example 8, one similar to Example 3 (second basic filter repeat structure (basic period p = 14, number of repeats r = 40), $L_0$ = 561) was formed, except that the modulation of the above Expression (2) (number of stopbands u = 2) was used instead of the above Expression (1). Here, the amplitude $a_1$ = 0.3, $a_2$ = 0.1, the period $\Lambda_1$ = 15.7, $\Lambda_2$ = 50, the phase $\varphi_1$ = 0, and $\varphi_2$ = 0.

The film structure in the optical multilayer film 4 of Example 8 is shown below.

1.54L .193H .627L .36H .302L .478H .102L 1.687H .091L .387H .234L .278H .496L .159H
2.672L .176H .603L .362H .313L .501H .105L 1.632H .08L .305H .17L .195H .352L .118H
2.133L .152H .563L .367H .344L .593H .133L 2.177H .108L .404H .208L .216H .357L .114H
2.019L .146H .562L .384H .381L .696H .165L 2.844H .146L .551H .275L .264H .388L .109H
1.758L .12H .456L .317H .325L .622H .155L 2.792H .15L .58H .292L .274H .379L .097H
1.384L .086H .312L .218H .233L .475H .128L 2.486H .144L .603H .327L .327H .474L .123H
1.717L .1H .328L .211H .215L .436H .12L 2.437H .149L .665H .384L .41H .63L .171H
2.446L .14H .43L .248H .223L .407H .105L 2.088H .129L .592H .356L .397H .639L .181H
2.654L .153H .461L .25H .204L .33H .077L 1.434H .088L .416H .265L .317H .548L .167H
2.633L .162H .518L .292H .241L .38H .082L 1.407H .08L .363H .231L .285H .519L .168H
2.841L .188H .644L .389H .34L .554H .12L 1.938H .099L .4H .229L .263H .466L .152H
2.632L .181H .648L .409H .372L .626H .137L 2.181H .106L .386H .196L .201H .331L .105H
1.858L .134H .509L .344H .335L .6H .139L 2.336H .117L .429H .21L .201H .301L .088H
1.508L .109H .432L .31H .323L .624H .156L 2.83H .153L .597H .306L .295H .426L .114H
1.736L .113H .416L .289H .302L .598H .156L 2.947H .166L .681H .361L .355H .507L .13H
1.799L .104H .339L .216H .217L .433H .117L 2.326H .139L .606H .341L .354H .527L .138H
1.909L .106H .319L .184H .171L .328H .089L 1.855H .118L .554H .337L .379H .612L .174H 2.57L .15H .462L .26H .223L .383H .094L 1.823H .113L .53H .331L .387H .656L .196H
3.04L .185H .585L .329H .272L .43H .094L 1.604H .09L .403H .25L .299H .528L .166H
2.724L .174H .58L .338H .285L .446H .093L 1.455H .074L .301H .179L .215H .397L .133H
2.356L .163H .589L .373H .339L .57H .125L 2.024H .101L .384H .206L .225H .389L .127H
2.262L .162H .609L .406H .39L .694H .16L 2.679H .135L .501H .25L .244H .371L .109H
1.831L .128H .491L .338H .34L .635H .154L 2.69H .14L .528H .26L .241H .335L .088H
1.337L .089H .338L .243H .26L .522H .137L 2.594H .146L .594H .313L .306H .438L .114H
1.622L .098H .341L .23H .242L .493H .134L 2.669H .159L .689H .386L .4H .599L .159H
2.244L .128H .4L .238H .224L .426H .112L 2.252H .138L .621H .365L .396H .618L .17H
2.422L .136H .405L .22H .184L .314H .077L 1.529H .097L .459H .289L .338H .569L .168H
2.581L .155H .482L .268H .221L .355H .08L 1.452H .087L .408H .263L .321H .573L .181H
2.965L .19H .634L .373H .319L .512H .11L 1.819H .096L .405H .241L .284H .506L .163H
2.781L .186H .649L .398H .352L .575H .123L 1.924H .093L .348H .184L .2H .347L .114H
2.029L .144H .54L .355H .336L .586H .132L 2.161H .106L .388H .193L .192H .306L .096H
1.696L .125H .49L .344H .349L .655H .159L 2.801H .147L .563H .284L .274H .402L .112H
1.769L .12H .453L .316H .328L .637H .162L 2.978H .163L .648H .335L .321H .451L .115H
1.623L .097H .335L .224H .233L .469H .125L 2.454H .143L .606H .331L .334H .485L .125H
1.707L .095H .3L .184H .182L .366H .101L 2.103H .132L .601H .356L .388H .608L .168H
2.431L .14H .43L .246H .218L .393H .1L 2H .125L .581H .356L .406H .669L .194H
2.922L .172H .534L .295H .243L .39H .088L 1.581H .093L .429H .269L .32H .556L .171H
2.719L .169H .546L .31H .255L .394H .082L 1.342H .072L .315H .197L .243H .448L .148H
2.556L .172H .603L .371H .328L .54H .117L 1.884H .095L .376H .212L .242H .43L .142H
2.505L .176H .645L .418H .39L .673H .151L
2.471H .122L .452H .228L .23H .367L .113H .973L

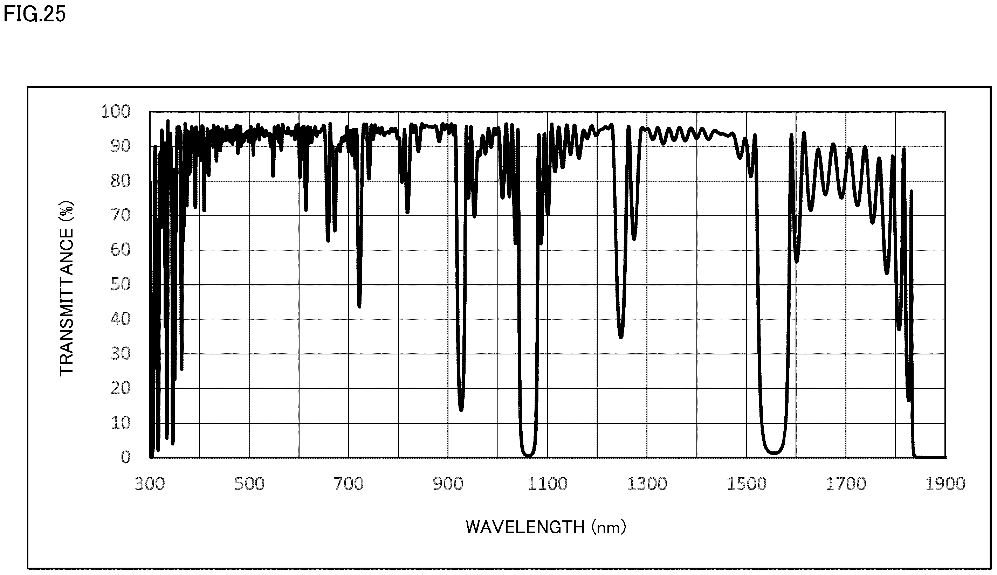

FIG. 25 is a graph showing a spectral transmittance exhibited by Example 8.

According to FIG. 25, in Example 8, a first stopband having a center wavelength of 1064 nm and a second stopband having a center wavelength of 1550 nm are formed, and a free filter region is formed as a wavelength range including a wavelength range of 400 nm or more and 1800 nm or less. Moreover, the wavelength widths of these stopbands are about 20 nm (about 1050 nm or more and 1070 nm or less) for the first stopband and about 60 nm (about 1520 nm or more and 1580 nm or less) for the second stopband, which are both sufficiently narrow.

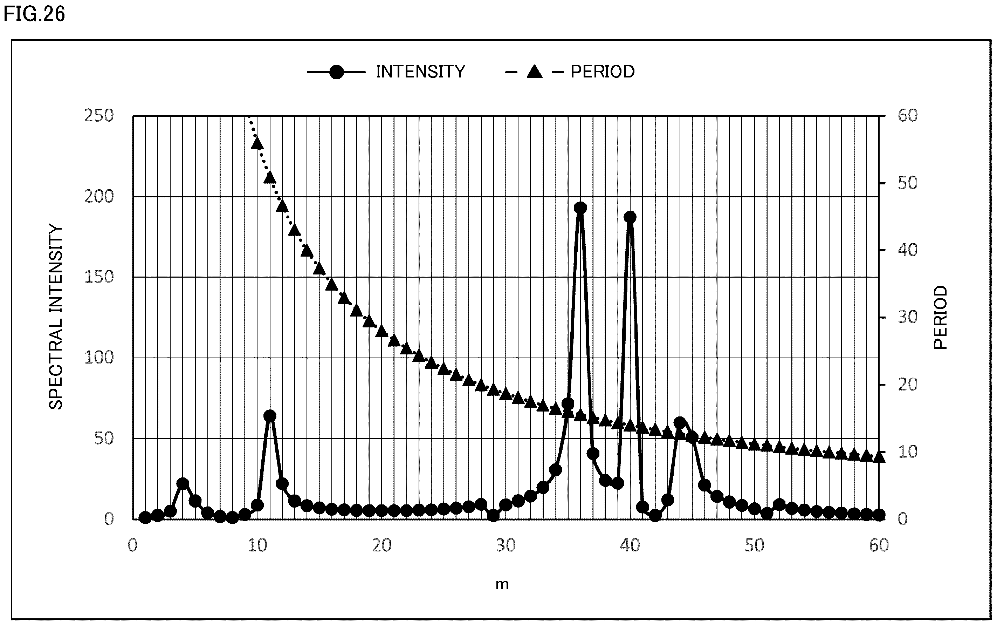

FIG. 26 is a graph showing a discrete Fourier transform spectrum of a film thickness number sequence of Example 8 and a period corresponding to a number m.

In FIG. 26, there are peaks in the discrete Fourier transform spectrum at the numbers m = 11, 36, and 40. Of these peaks, for the peak at m = 11, from the above Expression (6), $\Lambda'_{11}$ = (561-1)/11 = 50.9, which corresponds to the period $\Lambda_2$ = 50. Furthermore, for the peak at m = 36, from the above Expression (6), $\Lambda'_{36}$ = (561-1)/36 = 15.6, which corresponds to the period $\Lambda_1$ = 15.7.

Also, for the peak at m = 40, from the above Expression (6), $\Lambda'_{40}$ = (561-1)/40 = 14.0, which corresponds to the basic period p = 14.

Thus, in Example 8, in the discrete Fourier transform spectrum, there are peaks corresponding to the basic period p and the periods $\Lambda_1$ and $\Lambda_2$, respectively.

Example 9 has an adjusted optical multilayer film 4 designed by adjusting the values of appropriate terms in the film thickness number sequence of the basic optical multilayer film 4 of Example 8 for the purpose of reducing the ripple of the transmittance distribution in the free filter region.

The film structure in the optical multilayer film 4 of Example 9 is shown below.

1.01L .174H .457L .392H .246L .587H .1L 2.442H .133L .566H .342L .407H .576L .161H
2.813L .212H .563L .495H .343L .729H .154L 2.389H .104L .437H .204L .285H .416L .142H
2.149L .16H .531L .394H .296L .608H .114L 2.283H .124L .463H .232L .204H .351L .12H
1.829L .096H .452L .308H .293L .588H .108L 2.734H .122L .658H .334L .358H .516L .105H
2.047L .171H .575L .464H .321L .74H .135L 2.709H .151L .499H .345L .18H .351L .063H
1.5L .098H .457L .253H .25L .447H .12L 2.522H .128L .671H .348L .367H .568L .091H
1.616L .08H .308L .192H .269L .36H .096L 2.139H .219L .561H .522L .334H .741L .144H
2.311L .1H .42L .245H .215L .326H .117L 2.433H .188L .712H .381L .531H .574L .252H
2.271L .1H .302L .268H .227L .33H .05L 1.788H .121L .508H .388L .348H .702L .15H
2.573L .159H .34L .225H .191L .415H .057L 1.407H .052L .339H .158L .226H .34L .165H
2.482L .203H .66L .408H .44L .588H .175L 2.1H .071L .262H .186L .332H .525L .121H
2.935L .127H .868L .268H .545L .552H .164L 1.679H .127L .404H .167L .177H .436L .115H
1.989L .137H .693L .358H .48L .601H .204L 2.151H .087L .315H .234L .173H .295L .092H
1.41L .076H .428L .203H .261L .485H .125L 2.709H .122L .725H .298L .431H .51L .155H 1.679L .074H .421L .246H .282L .491H .108L 4.065H .109L .53H .28L .233H .356L .085H
1.591L .111H .406L .25H .218L .447H .114L 2.738H .101L .73H .303L .372H .423L .091H
1.774L .086H .239L .219H .199L .231H .087L 1.518H .078L .587H .399L .328H .77L .114H
2.758L .144H .491L .253H .185L .376H .113L 1.292H .074L .517H .282L .314H .567L .128H
4.076L .121H .503L .323H .197L .318H .065L 1.709H .107L .482H .351L .316H .653L .125H
2.9L .114H .498L .306H .195L .292H .061L 1.588H .088L .243H .151L .221H .322L .102H
2.107L .221H .548L .515H .324L .727H .13L 1.972H .093L .454H .169L .158H .322L .152H
1.795L .159H .508L .512H .259L .84H .128L 3.191H .089L .464H .28L .206H .284L .088H
2.148L .188H .573L .441H .393L .651H .198L 2.346H .092L .346H .244L .217H .237L .058H
1.795L .058H .28L .238H .234L .343H .093L 2.456H .166L .684H .381L .385H .555L .114H
1.795L .064H .244L .197H .276L .324H .088L 2.208H .233L .551H .565L .337H .741L .188H
2.579L .149H .391L .17H .154L .375H .126L 2.343H .159L .706H .344L .525H .558L .231H
2.283L .13H .266L .236H .181L .306H .053L 1.577H .078L .427H .282L .283H .534L .11H
2.651L .119H .639L .337H .253L .271H .078L 1.691H .057L .37H .172L .222H .376L .15H
2.443L .245H .592L .467H .394L .657H .162L 2.244H .063L .35H .237L .332H .519L .12H
2.902L .122H .746L .313H .438L .569H .12L 1.713H .133L .344H .135L .187H .416L .109H
1.968L .171H .569L .439H .316L .655H .106L 2.094H .127L .44H .223L .172H .35L .114H
1.689L .082H .381L .225H .281L .516H .117L 2.579H .137L .648H .327L .401H .544L .16H
2.215L .138H .504L .401H .293L .705H .106L 2.794H .144L .567H .328L .223H .342L .092H
1.841L .105H .405L .211H .207L .374H .148L 2.429H .161L .527H .284L .264H .436L .136H
2.028L .094H .39L .206H .213L .345H .139L 2.006H .087L .467H .303L .371H .624L .149H
2.616L .155H .532L .337H .262L .478H .105L 2.224H .14L .617H .371L .396H .64L .166H
2.494L .164H .467L .316H .226L .446H .078L 1.708H .094L .519H .261L .342H .502L .155H
2.37L .156H .494L .364H .235L .483H .063L 1.792H .082L .377H .203L .341H .506L .172H
2.422L .155H .555L .364H .323L .6H .126L 2.406H .116L .537H .302L .354H .581L .161H
2.543L .136H .543L .274H .313L .477H .167L 2.243H .08L .297H .206L .276H .24L .076H 1.039L

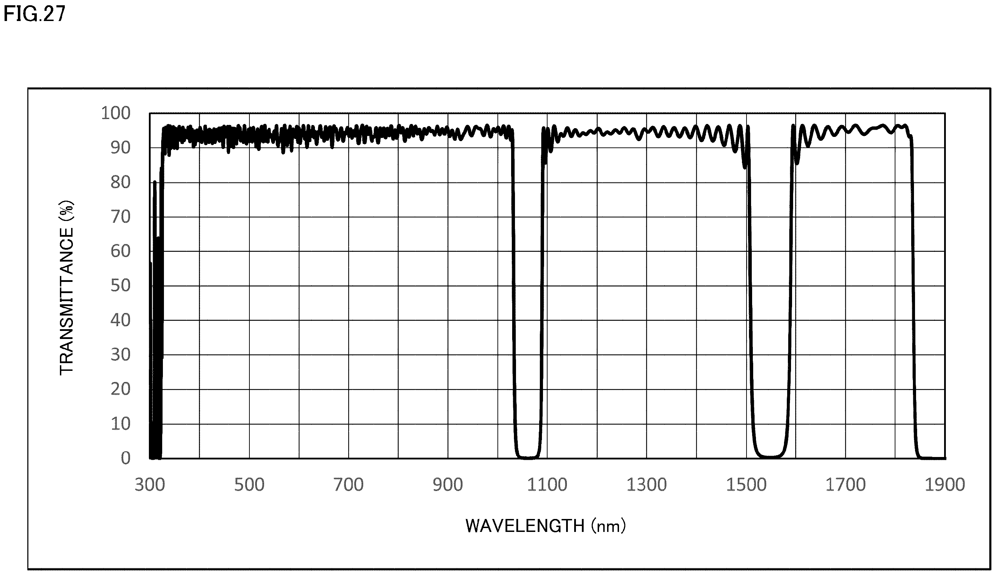

FIG. 27 is a graph showing a spectral transmittance exhibited by Example 9.

According to FIG. 27, Example 9 has the same free filter region as in Example 8 and two stopbands in that region, but the ripple of the transmittance distribution in the free filter region is reduced.

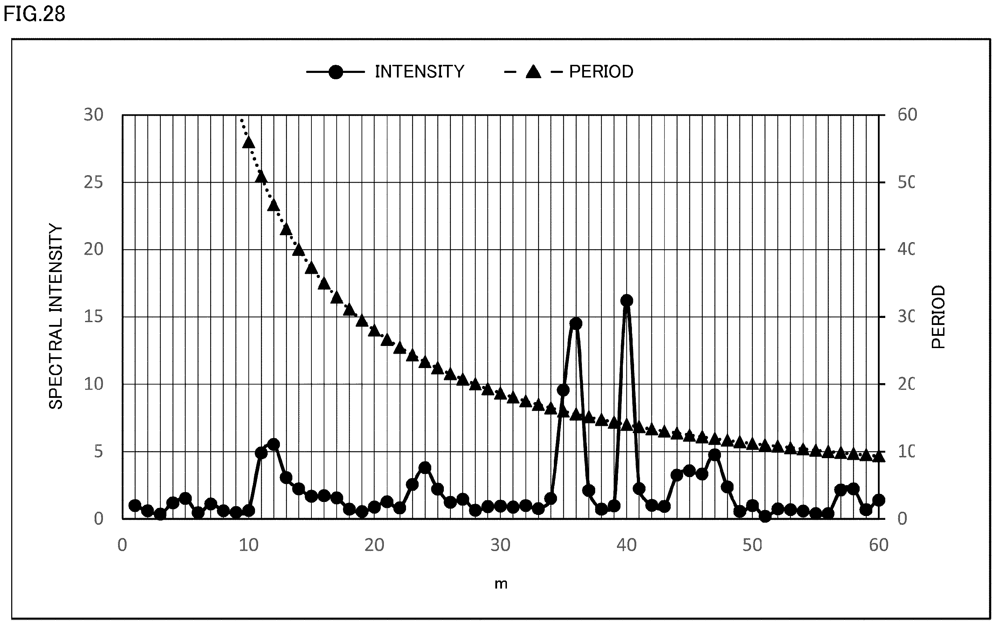

FIG. 28 is a graph showing a discrete Fourier transform spectrum of a film thickness number sequence of Example 9 and a period corresponding to a number m.

In FIG. 28, even in Example 9 (after adjusting the values of the appropriate terms in the film thickness number sequence), as in Example 8 (FIG. 26), there are peaks at $m = 12 (\Lambda'_{12} = 46.7)$ and $m = 36 (\Lambda'_{36} = 15.6)$ corresponding to periods $\Lambda_2$ and $\Lambda_1$ of the modulation, and there is a peak at $m = 40 (\Lambda'_{40} = 14.0)$ corresponding to the basic period p. As a result of adjusting the film thickness number sequence, the peak at $m = 11 (\Lambda'_{11} = 50.9)$ in Example 8 is replaced by the peak at $m = 12$ in Example 9. In Example 9, the spectral intensity at the peak at $m = 11$ is slightly lower than the spectral intensity at the peak at $m = 12$.

As Example 10, one similar to Example 1 was formed, except that a basic optical multilayer film 4 was designed on the basis of the third basic filter repeat structure instead of the first basic filter repeat structure.

The optical multilayer film 4 of Example 10 is designed considering a state where the wavelength range of a stopband includes 1550 nm (preferably, the center wavelength of the stopband is 1550 nm) and a free filter region is formed as a wavelength range including a wavelength range of 400 nm or more and 1800 nm or less.

The optical multilayer film 4 of Example 10 is designed by adding the modulation of the above Expression (1) to the third basic filter repeat structure (number of repeats s = 40, $L_0 = 401$). Here, the amplitude $a_1 = 0.1$, the period $\Lambda_1 = 36$, and the phase $\varphi_1 = 0$.

The film structure in the optical multilayer film 4 of Example 10 is shown below. 1.386L .242H .558L .565H .226L
2.693H .221L .538H .519L .22H 2.476L .212H .485L .487H .194L 2.311H .19L .469H .459L .198H
2.283L .201H .471L .487H .2L 2.444H .206L .52H .519L .228H 2.646L .234H .549L .565H .23L
2.779H .231L .571H .558L .239H 2.713L .234H .535L .538H .214L 2.53H .206L .502H .485L .206H
2.327L .201H .462L .469H .189L 2.281H .19L .475H .471L .206H 2.394L .212H .501L .52H .214L
2.617H .221L .553H .549L .239H 2.757L .242H .561L .571H .23L 2.749H .226L .553H .535L .228H
2.564L .22H .501L .502H .2L 2.367H .194L .475H .462L .198H 2.268L .198H .462L .475H .194L
2.367H .2L .502H .501L .22H 2.564L .228H .535L .553H .226L 2.749H .23L .571H .561L .242H
2.757L .239H .549L .553H .221L 2.617H .214L .52H .501L .212H 2.394L .206H .471L .475H .19L
2.281H .189L .469H .462L .201H 2.327L .206H .485L .502H .206L 2.53H .214L .538H .535L .234H
2.713L .239H .558L .571H .231L 2.779H .23L .565H .549L .234H 2.646L .228H .519L .52H .206L
2.444H .2L .487H .471L .201H 2.283L .198H .459L .469H .19L 2.311H .194L .487H .485L .212H
2.476L .22H .519L .538H .221L 2.693H .226L .565H .558L .242H 2.772L .242H .558L .565H .226L 2.693H .221L .538H .519L .22H 2.476L .212H .485L .487H .194L 2.311H .19L .469H .459L .198H
2.283L .201H .471L .487H .2L 2.444H .206L .52H .519L .228H 2.646L .234H .549L .565H .23L
2.779H .231L .571H .558L .239H 2.713L .234H .535L .538L .214L 2.53H .206L .502H .485L .206H
2.327L .201H .462L .469H .189L 2.281H .19L .475H .471L .206H 2.394L .212H .501L .52H .214L
2.617H .221L .553H .549L .239H 2.757L .242H .561L .571H .23L 2.749H .226L .553H .535L .228H
2.564L .22H .501L .502H .2L 2.367H .194L .475H .462L .198H 2.268L .198H .462L .475H .194L
2.367H .2L .502H .501L .22H 2.564L .228H .535L .553H .226L 2.749H .23L .571H .561L .242H
2.757L .239H .549L .553H .221L 2.617H .214L .52H .501L .212H 2.394L .206H .471L .475H .19L
2.281H .189L .469H .462L .201H 2.327L .206H .485L .502H .206L 2.53H .214L .538H .535L .234H
2.713L .239H .558L .571H .231L 2.779H .23L .565H .549H .234H 2.646L .228H .519L .52H .206L
2.444H .2L .487H .471L .201H 2.283L .198H .459L .469H .19L 2.311H .194L .487H .485L .212H
2.476L .22H .519L .538H .221L 2.693H .226L .565H .558L .242H 2.772L .242H .558L .565L .226L
2.693H .221L .538H .519L .22H 2.476L .212H .485L .487H .194L 2.311H .19L .469H .459L .198H
2.283L .201H .471L .487H .2L 2.444H .206L .52H .519L .228H 2.646L .234H .549L .565H .23L
2.779H .231L .571H .558L .239H 1.357L

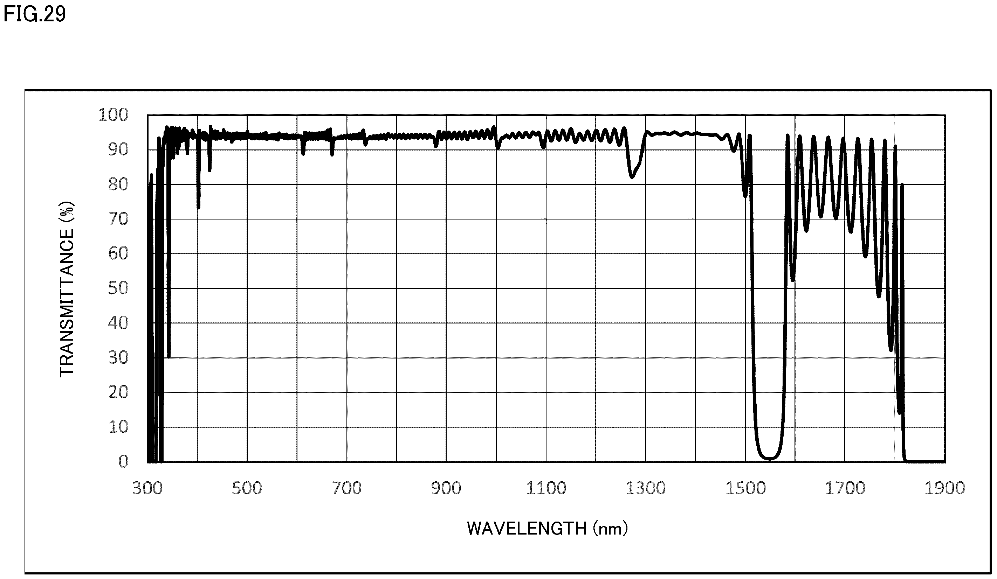

FIG. 29 is a graph showing a spectral transmittance exhibited by Example 10.

According to FIG. 29, in Example 10, a stopband having a center wavelength of 1550 nm is formed, and a free filter region is formed as a wavelength range including a wavelength range of 400 nm or more and 1800 nm or less. Moreover, the wavelength width of the stopband is about 60 nm (about 1520 nm or more and 1580 nm or less), which is sufficiently narrow.

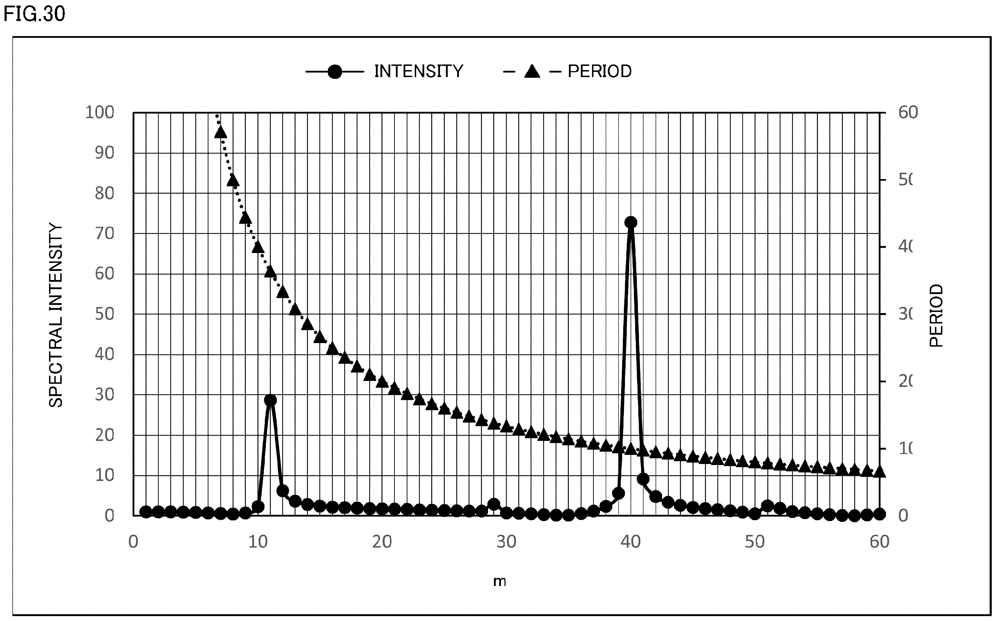

FIG. 30 is a graph showing a discrete Fourier transform spectrum of a film thickness number sequence of Example 10 and a period corresponding to a number m.

In FIG. 30, there is one more peak in the discrete Fourier transform spectrum at the number m = 11 than before modulation (third basic filter repeat structure in the case of the number of repeats r = 40; FIG. 9). For this peak, from the above Expression (6), $\Lambda'_{11}$ = (401-1)/11 = 36.3, which corresponds to the period $\Lambda_1$ = 36.

Also, in FIG. 30, as before modulation, there is a peak at m = 40 ($\Lambda'_{40}$ = 10.0) corresponding to the basic period p = 10.

Thus, in Example 10, in the discrete Fourier transform spectrum, there are peaks corresponding to the basic period p and the period $\Lambda_1$, respectively.

Example 11 has an adjusted optical multilayer film 4 designed by adjusting the values of appropriate terms in the film thickness number sequence of the basic optical multilayer film 4 of Example 10 for the purpose of reducing the ripple of the transmittance distribution in the free filter region.

The film structure in the optical multilayer film 4 of Example 11 is shown below. 1.388L .23H .516L .532H .227L
2.463H .222L .499H .509L .203H 2.333L .193H .506L .499H .213L 2.541H .229L .522H .561L .2H
2.669L .246H .543L .545L .223L 2.749H .208L .59H .51L .265H 2.655L .188H .594L .507H .247L
2.539H .22L .498H .508L .189H 2.21L .173H .508L .468H .224L 2.387H .206L .477H .483L .189H
2.372L .203H .517L .52H .205L 2.626H .243L .517H .56L .199H 2.72L .232H .548L .549H .244L
2.645H .203L .583H .517L .252H 2.546L .217H .524L .519H .201L 2.287H .194L .472H .46L .209H
2.35L .221H .474L .497H .186L 2.17H .188L .493H .484L .214H 2.46L .229H .512L .545H .211L
2.571H .238L .532H .545L .234H 2.647L .192H .607L .484H .285L 2.577H .168L .649H .465L .286H
2.566L .177H .584L .52H .223L 2.461H .244L .446H .519L .155H 2.064L .161H .48L .468H .207L
2.426H .206L .514H .537L .185H 2.554L .267H .473L .612H .173L 2.637H .255L .522H .569L .217H
2.696L .189H .601L .496H .263L 2.64H .187L .566H .509L .226H 2.498L .216H .469L .506H .169L
2.195H .18L .471H .457L .194H 2.324L .187H .501L .5H .199L 2.517H .248L .474H .611L .162H
2.606L .277H .471L .59H .168L 2.87H .22L .538H .518L .232H 2.703L .18H .568L .485H .239L
2.556H .189L .512H .485L .203H 2.33L .195H .481L .475H .195L 2.281H .187L .47H .473L .198H
2.441L .228H .485L .569H .173L 2.594H .259L .463H .559L .166H 2.961L .23H .513L .524H .222L
2.832H .18L .559H .48L .247H 2.58L .187H .536L .487H .21L 2.353H .187L .484H .457L .209H
2.325L .206H .469L .487H .187L 2.336H .209L .491H .526L .188H 2.597L .252H .473L .579H .178L
2.767H .22L .526H .512L .231H 2.917L .177H .562L .473H .263L 2.58H .175L .58H .481L .231H
2.487L .195H .477L .479H .19L 2.314H .197L .465H .475L .186H 2.238L .183H .512L .487H .213L
2.543H .242L .491H .588L .183H 2.677L .244H .512L .578H .207L 2.746H .193L .585H .503L .265H
2.619L .179H .595L .486H .25L 2.542H .199L .498H .509L .195H 2.358L .213H .462L .498H .168L
2.118H .152L .511H .444L .24H 2.5L .221H .527L .571H .194L 2.638H .255L .505H .613L .186L
2.711L .226H .556L .557H .236L 2.631H .215L .574H .529L .246H 2.542L .23H .505L .534H .193L
2.286H .183L .484H .463L .213H 2.38L .211H .467L .487H .19L 2.31H .209L .515L .528L .204H
2.598L .248H .506L .589H .188L 2.734H .226L .56H .549L .239H 2.661L .205H .616L .516H .267L
2.569H .236L .57H .549L .222H 2.533L .255H .44L .526H .152L 2.151H .197L .528H .519L .206H 2.599L .265H .481L .612H .159L 2.702H .274L .49H .574L .206H 2.881L .188H .598L .453H .299L 2.569H .169L .651H .407L .307H 1.213L

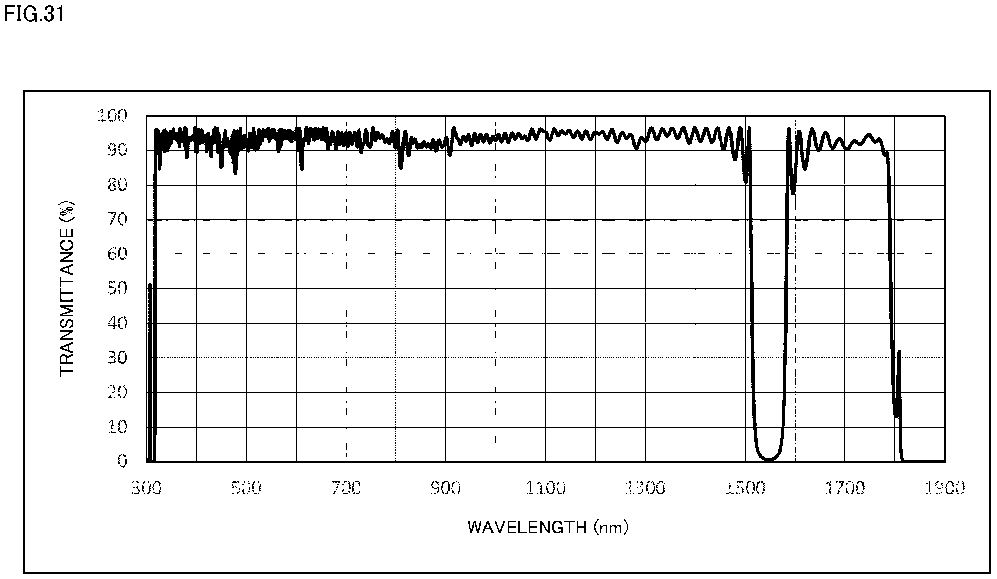

FIG. 31 is a graph showing a spectral transmittance exhibited by Example 11.

According to FIG. 31, Example 11 has the same free filter region and stopband as Example 10, but the ripple of the transmittance distribution in the free filter region is reduced.

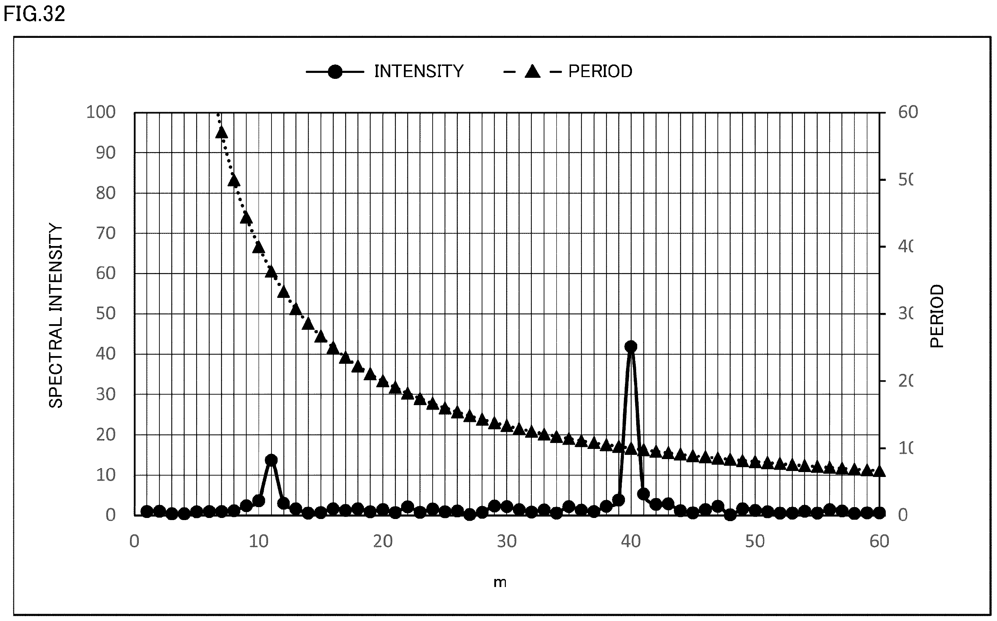

FIG. 32 is a graph showing a discrete Fourier transform spectrum of a film thickness number sequence of Example 11 and a period corresponding to a number m.

In FIG. 32, even in Example 11 (after adjusting the values of the appropriate terms in the film thickness number sequence), as in Example 10 (FIG. 30), there is a peak at m = 11 ($\Lambda'_{11}$ = 36.3) corresponding to the period $\Lambda_1$ of the modulation, and there is a peak at m = 40 ($\Lambda'_{40}$ = 10.0) corresponding to the basic period p.

As Comparative Example 1, a notch filter similar to Example 1 was formed, except for the film structure of the optical multilayer film 4.

The optical multilayer film 4 of Comparative Example 1 is designed considering a state where the center wavelength of a stopband is 500 nm and a free filter region is formed as a wavelength range including a wavelength range of 400 nm or more and 1800 nm or less.

The film structure of the optical multilayer film 4 of Comparative Example 1 is (0.90L 0.20H 0.90L)$^{30}$.

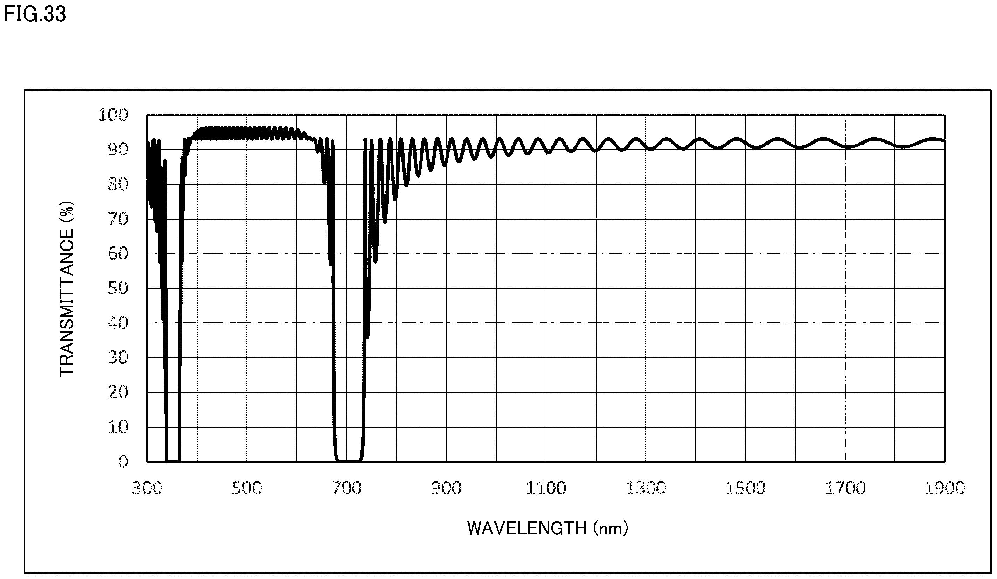

FIG. 33 is a graph showing a spectral transmittance exhibited by Comparative Example 1.

According to FIG. 33, in Comparative Example 1, the center wavelength of the stopband is 500 nm, and a free filter region is formed as a wavelength range including a wavelength range of 400 nm or more and 1800 nm or less.

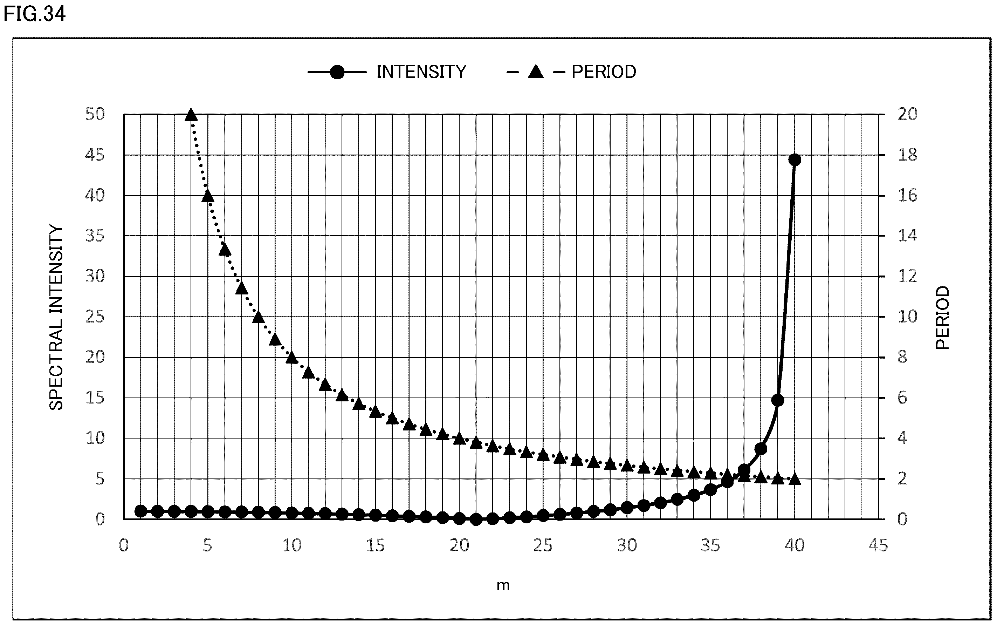

FIG. 34 is a graph showing a discrete Fourier transform spectrum of a film thickness number sequence of Comparative Example 1 and a period corresponding to a number m.

According to FIG. 34, there is no peak in the discrete Fourier transform spectrum of the film thickness number sequence of Comparative Example 1, and the maximum value appears at m = 30 ($\Lambda'_{30}$ = (61-1)/30 = 2.0), indicating a doubled period.

As Comparative Example 2, a notch filter similar to Comparative Example 1 was formed, except for the film structure of the optical multilayer film 4.

The optical multilayer film 4 of Comparative Example 2 is designed considering a state where the center wavelengths of two stopbands are 532 and 1064 nm, and a free filter region is formed as a wavelength range including a wavelength range of 400 nm or more and 1800 nm or less.

The film structure of the optical multilayer film 4 of Comparative Example 2 is (0.95L 0.10H 0.95L)$^{70}$.

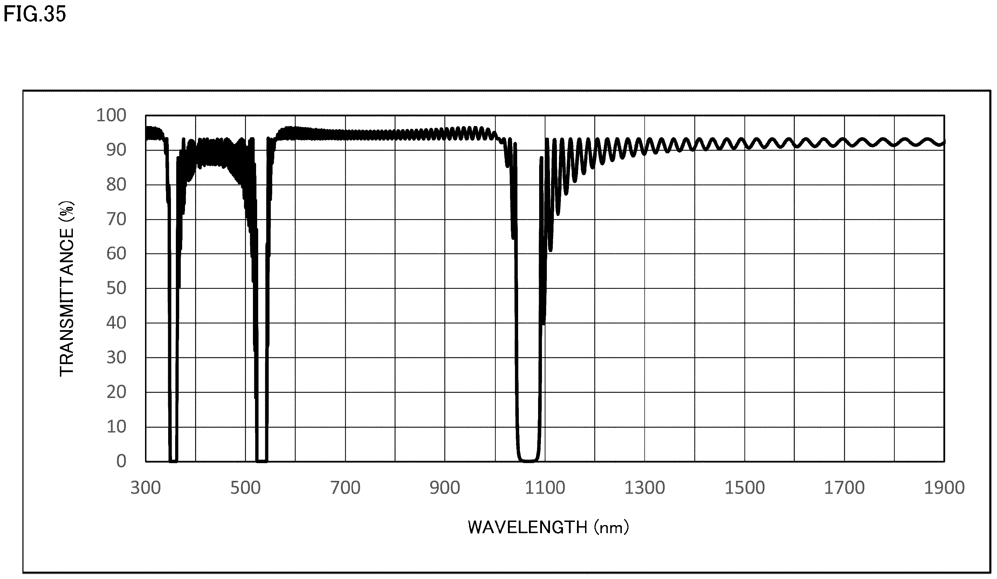

FIG. 35 is a graph showing a spectral transmittance exhibited by Comparative Example 2.

According to FIG. 35, in Comparative Example 2, the center wavelengths of the respective stopbands are 532 and 1064 nm, respectively, and a free filter region is formed as a wavelength range including a wavelength range of 400 nm or more and 1800 nm or less.

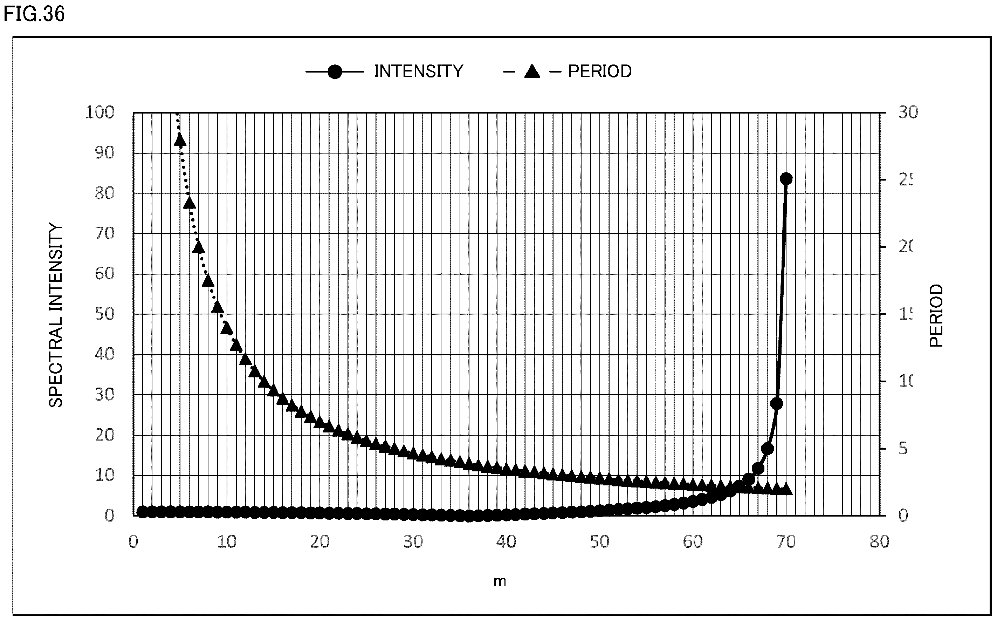

FIG. 36 is a graph showing a discrete Fourier transform spectrum of a film thickness number sequence of Comparative Example 2 and a period corresponding to a number m.

According to FIG. 36, there is no peak in the discrete Fourier transform spectrum of the film thickness number sequence of Comparative Example 2, and the maximum value appears at m = 70 ($\Lambda'_{70}$ = (141-1)/70 = 2.0), indicating a doubled period.

As Example 12, one similar to Example 3 was formed, except that the refractive index $n_H$ of the high refractive index material was changed from 2.18 to 2.4.

The film structure in the optical multilayer film 4 of Example 12 is shown below in physical film thickness format.
102.54L 8.02H 44.62L 17.08H 25.81L 28.15H 10.91L 119.67H 10.71L 27.15H 24.46L 15.92H 40.93L 7.25H 182.95L 7.07H 38.95L 14.79H 22.22L 24.14H 9.35L 102.64H 9.22L 23.52H 21.37L 14.06H 36.64L 6.59H 169.11L 6.65H 37.39L 14.49H 22.22L 24.65H 9.74L 109.02H 9.98L 25.88H 23.88L 15.92H 41.93L 7.6H 196.43L 7.76H 43.64L 16.89H 25.81L 28.46H 11.15L 123.66H 11.19L 28.63H 26.03L 17.08H 44.24L 7.88H 200.03L 7.76H 42.86L 16.29H 24.46L 26.53H 10.23L 111.79H 9.98L 25.24H 22.72L 14.79H 38.09L 6.76H 171.36L 6.65H 36.9L 14.11H 21.37L 23.44H 9.16L 101.6H 9.22L 23.76H 21.81L 14.49H 38.09L 6.9H 178.5L 7.07H 39.92L 15.53H 23.88L 26.53H 10.48L 117.29H 10.71L 27.7H 25.46L 16.89H 44.24L 7.97H 204.5L 8.02H 44.75L 17.18H 26.03H 28.46H 11.06L 121.6H 10.91L 27.7H 25L 16.29H 41.93L 7.43H 187.61L 7.25H 39.92L 15.14H 22.72L 24.65H 9.52L 104.3H 9.35L 23.76H 21.52L 14.11H 36.64L 6.56H 167.94L 6.59H 36.9L 14.26H 21.81L 24.14H 9.52L 106.47H 9.74L 25.24H 23.28L 15.53H 40.93L 7.43H 192.2L 7.6H 42.86L 16.62H 25.46L 28.15H 11.06L 122.96H 11.15L 28.63H 26.1L 17.18H 44.62L 7.97H 202.78L 7.88H 43.64L 16.62H 25L 27.15H 10.48L 114.61H 10.23L 25.88H 23.28L 15.14H 38.95L 6.9H 174.56L 6.76H 37.39L 14.26H 21.52L 23.52H 9.16L 101.25H 9.16L 23.52H 21.52L 14.26H 37.39L 6.76H 174.56L 6.9H 38.95L 15.14H 23.28L 25.88H 10.23L 114.61H 10.48L 27.15H 25L 16.62H 43.64L 7.88H 202.78L 7.97H 44.62L 17.18H 26.1L 28.63H 11.15L 122.96H 11.06L 28.15H 25.46L 16.62H 42.86L 7.6H 192.2L 7.43H 40.93L 15.53H 23.28L 25.24H 9.74L 106.47H 9.52L 24.14H 21.81L 14.26H 36.9L 6.59H 167.94L 6.56H 36.64L 14.11H 21.52L 23.76H 9.35L 104.3H 9.52L 24.65H 22.72L 15.14H 39.92L 7.25H 187.61L 7.43H 41.93L 16.29H 25L 27.7H 10.91L 121.6H 11.06L 28.46H 26.03L 17.18H 44.75L 8.02H 204.5L 7.97H 44.24L 16.89H 25.46L 27.7H 10.71L 117.29H 10.48L 26.53H 23.88L 15.53H 39.92L 7.07H 178.5L 6.9H 38.09L 14.49H 21.81L 23.76H 9.22L 101.6H 9.16L 23.44H 21.37L 14.11H 36.9L 6.65H 171.36L 6.76H 38.09L 14.79H 22.72L 25.24H 9.98L 111.79H 10.23L 26.53H 24.46L 16.29H 42.86L 7.76H 200.03L 7.88H 44.24L 17.08H 26.03L 28.63H 11.19L 123.66H 11.15L 28.46H 25.81L 16.89H 43.64L 7.76H 196.43L 7.6H 41.93L 15.92H 23.88L 25.88H 9.98L 109.02H 9.74L 24.65H 22.22L 14.49H 37.39L 6.65H 169.11L 6.59H 36.64H 14.06H 21.37L 23.52H 9.22L 102.64H 9.35L 24.14H 22.22L 14.79H 38.95L 7.07H 182.95L 7.25H 40.93L 15.92H 24.46L 27.15H 10.71H 119.67H 10.91L 28.15H 25.81L 17.08H 44.62L 8.02H 205.08L 8.02H 44.62L 17.08H 25.81L 28.15H 10.91L 119.67H 10.71L 27.15H 24.46L 15.92H 40.93L 7.25H 182.95L 7.07H 38.95L 14.79H 22.22L 24.14H 9.35L 102.64H 9.22L 23.52H 21.37L 14.06H 36.64L 6.59H 169.11L 6.65H 37.39L 14.49H 22.22L 24.65H 9.74L 109.02H 9.98L 25.88H 23.88L 15.92H 41.93L 7.6H 196.43L 7.76H 43.64L 16.89H 25.81L 28.46H 11.15L 123.66H 11.19L 28.63H 26.03L 17.08H 44.24L 7.88H 200.03L 7.76H 42.86L 16.29H 24.46L 26.53H 10.23L 111.79H 9.98L 25.24H 22.72L 14.79H 38.09L 6.76H 171.36L 6.65H 36.9L 14.11H 21.37L 23.44H 9.16L 101.6H 9.22L 23.76H 21.81L 14.49H 38.09L 6.9H 178.5L 7.07H 39.92L 15.53H 23.88L 26.53H 10.48L 117.29H 10.71L 27.7H 25.46L 16.89H 44.24L 7.97H 204.5L 8.02H 44.75L 17.18H 26.03L 28.46H 11.06L 121.6H 10.91L 27.7H 25L 16.29H 41.93L 7.43H 187.61L 7.25H 39.92L 15.14H 22.72L 24.65H 9.52L 104.3H 9.35L 23.76H 21.52L 14.11H 36.64L 6.56H 167.94L 6.59H 36.9L 14.26H 21.81L 24.14H 9.52L 106.47H 9.74L 25.24H 23.28L 15.53H 40.93L 7.43H 192.2L 7.6H 42.86L 16.62H 25.46L 28.15H 11.06L 122.96H 11.15L 28.63H 26.1L 17.18H 44.62L 7.97H 202.78L 7.88H 43.64L 16.62H 25L 27.15H 10.48L 114.61H 10.23L 25.88H 23.28L 15.14H 38.95L 6.9H 174.56L 6.76H 37.39L 14.26H 21.52L 23.52H 9.16L 101.25H 9.16L 23.52H 21.52L 14.26H 37.39L 6.76H 174.56L 6.9H 38.95L 15.14H 23.28L 25.88H 10.23L 114.61H 10.48L 27.15H 25L 16.62H 43.64L 7.88H 202.78L 7.97L 44.62L 17.18H 26.1L 28.63H 11.15L 122.96H 11.06L 28.15H 25.46L 16.62H 42.86L 7.6H 96.1L

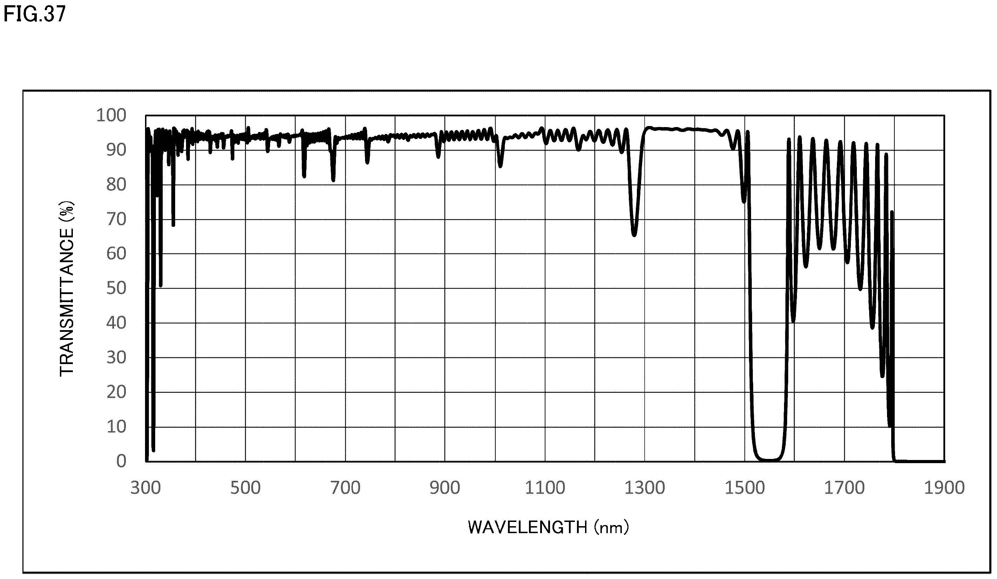

FIG. 37 is a graph showing a spectral transmittance exhibited by Example 12.

According to FIG. 37, the spectral transmittance of Example 12 is similar to that of Example 3.

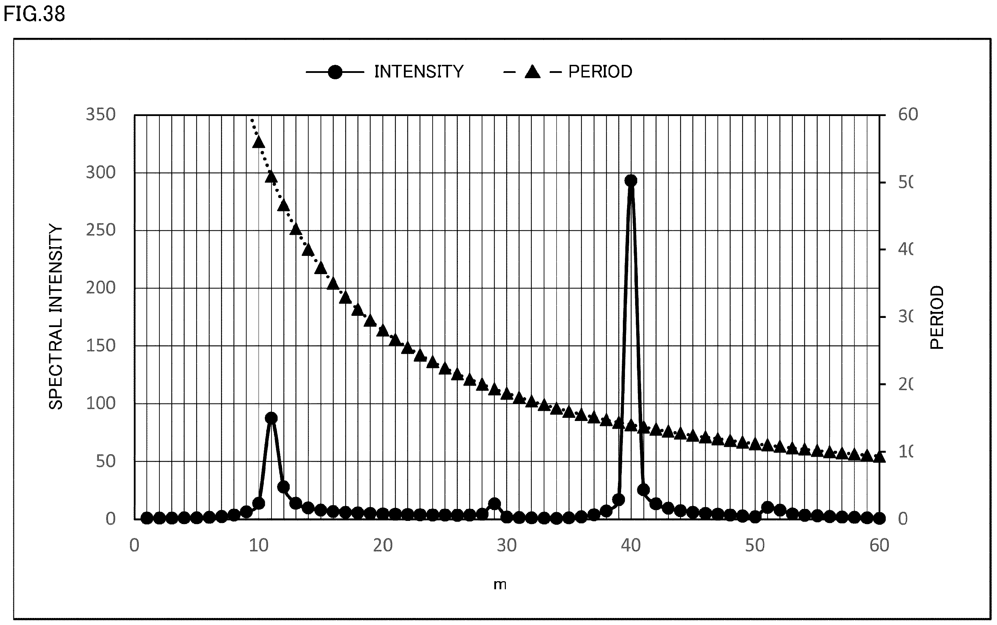

FIG. 38 is a graph showing a discrete Fourier transform spectrum of a film thickness number sequence of Example 12 and a period corresponding to a number m.

According to FIG. 38, the discrete Fourier transform spectrum of Example 12 is similar to that of Example 3.

That is, in Example 12 as well, there are peaks in the discrete Fourier transform spectrum corresponding to the basic period p and the period $\Lambda_1$, respectively ($\Lambda'_{40}$ = 14.0 = p, $\Lambda'_{11}$ = 50.9 ≈ $\Lambda_1$).

From the viewpoint of easier design with modulation of the film thickness number sequence, the refractive index $n_H$ of the high refractive index material is preferably 2.0 or more and 3.0 or less. For example, the refractive index of $Ta_2O_5$ (for light having a wavelength of 500 nm; the same applies below) is 2.18, and the refractive indexes of $TiO_2$ and $Nb_2O_5$ are 2.4, and the refractive indexes of $HfO_2$, $ZrO_2$, and $La_xTi_yO_z$ are 2.0.

Similarly, the refractive index $n_L$ of the low refractive index material is preferably 1.4 or more and 1.5 or less. For example, the refractive index of $SiO_2$ is 1.475.

Example 13 has an adjusted optical multilayer film 4 designed by adjusting the values of appropriate terms in the film thickness number sequence of the basic optical multilayer film 4 of Example 12 for the purpose of reducing the ripple of the transmittance distribution in the free filter region.

The film structure in the optical multilayer film 4 of Example 13 is shown below in physical film thickness format.
124.07L 7.87H 50.01L 17.89H 31.23L 29.88H 12.28L 118.47H 9.07L 26.88H 23.38L 16.65H 43.41L 6.9H 184.21L 6.26H 38.89L 14.39H 24.93L 26.1H 10.83L 117.46H 10.57L 25.81L 25.29H 16.06H 44.33L 6.84H 204.62L 7.22H 45.24L 17.53H 26.89L 28.4H 10.61L 120.6H 9.89L 30.6H 27.26L 18.02H 46.27L 6.76H 187.92L 6.29H 43.74L 16.27H 25.55L 26.62H 9.36L 102.94H 9.06L 25.29H 23.26L 15.22H 39.75L 6.38H 177.66L 6.29H 39.01L 14.32H 23.06L 24.6H 9.96L 105.33H 8.08L 24.99H 22.69L 17.13H 43.39L 7.12H 190.63L 7.05H 42.7L 17H 24.77L 27.99H 9.57L 117.12H 10.3L 27.9H 26.39L 17.47H 45.69L 7.2H 199.6L 6.78H 47.64L 17.59H 27.03L 28.4H 9.55L 108.19H 8.69L 27.42H 24.56L 16.73H 42.86L 6.46H 175.45L 6.5H 40.7L 15.28H 22.08L 23.55H 8.96L 106.09H 10.12L 22.86H 20.53L 13.58H 37.65L 6.94H 183.61L 6.66H 37.64L 13.8H 22.49L 24.77H 10.54L 112.19H 9.6L 24.42H 23.48L 16.26H 43.58L 7.13H 200.23L 7.28H 44.3L 17.26H 26.16L 28H 10.51L 121.2H 10.54L 30.26H 28.17L 17.5H 46.59L 6.43H 184.6L 6.16H 44.04L 16.19H 25.82L 27.09H 9.47L 103.14H 9.03L 24.95H 22.69L 15.13H 39.43L 6.46H 176.36L 6.65H 39.71L 15.41H 21.48L 23.83H 8.49L 101.5H 8.84L 24.86H 23.37L 15.54H 41.56L 6.26H 176.59L 6.07H 42.53L 16.01H 25.83L 27.46H 9.85L 114.79H 10.22L 27.11H 26.04L 17.12H 45.24L 7.05H 206.11L 7.19H 47.13L 18.32H 27.61L 29.61H 10L 113.23H 9.21L 28.09H 25.44L 17.03H 43.98L 6.49H 178.6L 6.46H 41L 15.38H 22.55L 23.6H 9.03L 106.01H 10.01L 22.89H 20.62L 13.46H 37.12L 6.79H 179.35L 6.14H 35.29L 12.58H 23.05L 24.47H 10.84L 105.99H 7.94L 24.27H 22.43L 16.98H 43.16L 7.02H 189.22L 6.82H 44.02L 17.07H 26.04L 28.43H 10.05L 119.95H 10.54L 29.34H 27.49L 18.06H 47.1L 7.2H 198.96L 6.57H 46.36L 16.85H 26.61L 27.63H 9.78L 106.51H 8.96H 26.71H 24.06L 16.38H 41.74L 6.5H 174.41L 6.46H 39.74L 15.16H 21.48L 22.85H 8.68L 106.37H 10.74L 22.27H 19.93L 12.58H 36.39L 6.87H 182.67L 6.59H 37.07L 13.47H 22.37L 24.46H 10.66L 112.18H 9.64L 25.44H 24.38L 16.41H 44.47L 6.83H 198.33L 7.05H 46.09L 17.77H 27.44L 29.19H 10.69L 122.68H 10.67L 29.7L 27.81L 17.19H 45.92L 6.48H 183.01L 6.38H 43.66L 16.18H 25.5L 26.91H 9.41L 102.54H 9.03L 24.74H 22.84L 14.98H 39.22L 6.29H 174.14L 6.3H 39.51L 15.14H 22.42L 24.64H 8.59H 98.98L 7.89L 24.95H 22.44L 16.35H 41.41L 6.66H 179.09L 6.28H 42.6L 16.21H 25.27L 27.37H 9.53L 111.9H 9.72L 28.73H 26.86L 17.9H 47.13L 7.14

205.2L 7.02H 48.75L 17.97H 28.03L 29.43H 10.29L 113.11H 9.26L 27.41H 25.06H 16.77H 43.8L 6.54H 180.37L 6.5H 40.51L 15.43H 22.68L 24.43H 8.84L 102.67H 9.12L 24.68H 23.49L 14.9H 40.28L 5.87H 170.42L 6.37H 41.82L 16.77H 23.3L 26.76H 7.57L 95.59H 8.1L 27.09H 24L 17.01H 43.51L 6.7H 188.15L 7.01H 44.92L 17.52H 25.77L 28.11H 9.67L 118.63H 10.47L 30.17H 28.22L 18.25H 48.37L 7.06H 198.04L 6.74H 45.68L 16.98H 25.96L 27.54H 9.43L 107.08H 9.06L 25.77H 23.51L 15.62H 40.45L 6.38H 178.77L 6.78H 40.27L 15.75H 21.39L 23.8H 8.29L 102.96H 9.58L 24.25H 23.14L 14.46H 39.53H 6.06H 174.46L 6.09H 40.46L 15.03H 24.12L 25.47L 9.71L 108.84H 9.52L 27.04H 25.56L 16.83H 45.29L 6.76H 196.55L 7.07H 47.85L 18.06H 27.86L 29.9H 10.38L 118.51H 9.86L 28.69H 26.17L 17.47H 45.41L 6.86H 187.41L 6.5H 42.56L 16.01H 24.33L 26H 9.08L 103.37H 8.84L 25.7H 23.96L 15.59H 41.3L 6.02H 172.5L 6.37H 42.05L 16.73H 23.74L 27.18H 7.71L 95.13H 8.35L 27.41H 24.86L 16.53H 43.01L 6.16H 177.6L 6.33H 44.54L 16.91H 26.04L 28.21H 9.43L 111.95H 9.6L 29.55H 27.07L 18.52H 48.08L 7.35H 204.12L 7.18H 47.38L 17.94H 26.55L 28.68H 9.5L 109.82H 9.26L 27.04H 24.67L 16.38H 42.41L 6.46H 182.18L 6.75H 41.6L 16.11H 22.37L 24.45H 8.49L 105.36H 9.67L 24.62H 22.68L 14.61H 39.22L 6.5H 183.62L 7.01H 40.41L 15.59H 21.98L 24.43H 9.26L 111.33H 10.24L 26.79H 26.04L 16.27H 45.12L 6.51H 199.86L 7.3H 47.13L 18.32H 27.85L 30.01H 10.45L 121.27H 9.95L 30.49H 27.05L 18.55H 47.27L 7.25H 187.95L 6.46H 43.73L 15.6H 25.41L 25.83H 9.51L 99.6H 8.96L 23.93H 20.62L 13.54H 34.72L 6.16H 81.75L

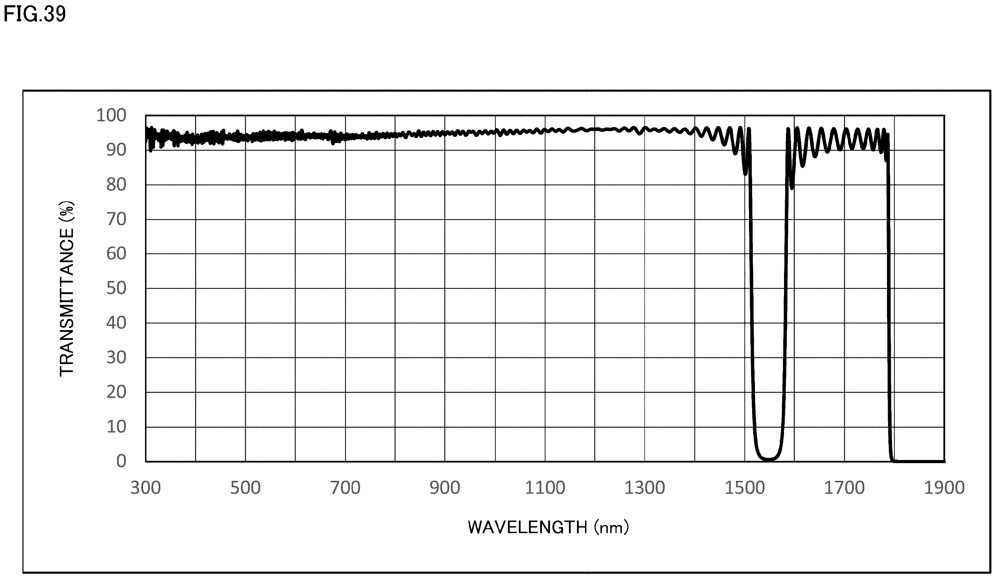

FIG. 39 is a graph showing a spectral transmittance exhibited by Example 13.

According to FIG. 39, Example 13 has the same free filter region and stopband as Example 12, but the ripple of the transmittance distribution in the free filter region is reduced.

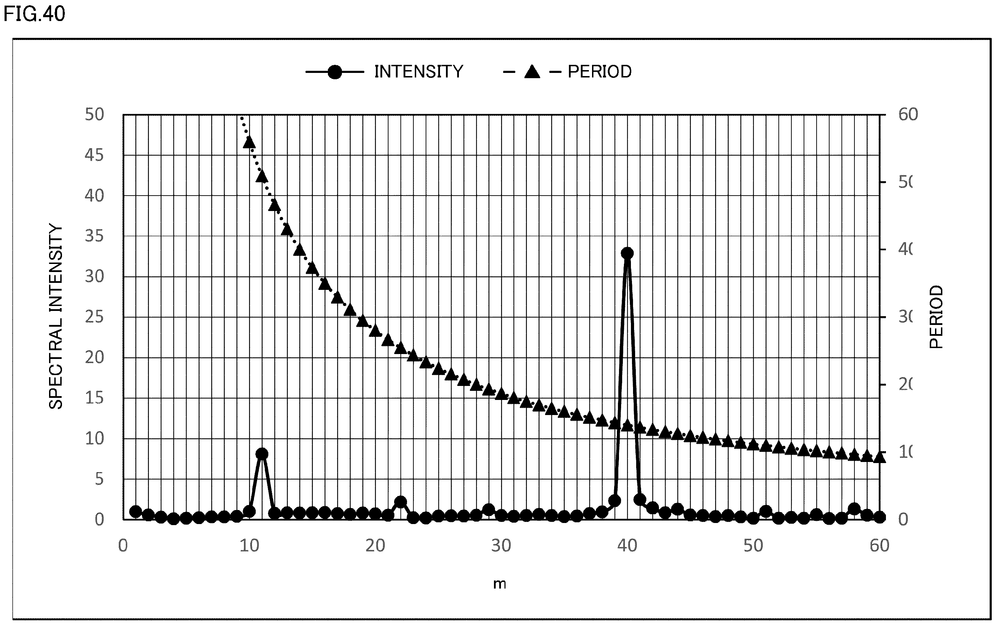

FIG. 40 is a graph showing a discrete Fourier transform spectrum of a film thickness number sequence of Example 13 and a period corresponding to a number m.

In FIG. 40, even in Example 13 (after adjusting the values of the appropriate terms in the film thickness number sequence), as in Example 12 (FIG. 38), there is a peak at m = 11 ($\Lambda'_{11}$ = 50.9) corresponding to the period $\Lambda_1$ of the modulation, and there is a peak at m = 40 ($\Lambda'_{40}$ = 14.0) corresponding to the basic period p.

As Example 14, one similar to Example 3 was formed, except that the total number of layers $L_0$ was changed from 561 to 551.

That is, the layer structure of Example 14 is a layer structure obtained by removing the ten layers on the medium side from the layer structure of Example 3.

The film structure in the optical multilayer film 4 of Example 14 is shown below.

1.21L .154H .527L .328H .305L .54H .129L 2.298H .126L .521H .289L .306H .483L .139H
2.159L .136H .46L .284H .262L .464H .11L 1.971H .109L .452H .252L .27H .432L .126H
1.995L .128H .441L .278H .262L .473H .115L 2.093H .118L .497H .282L .306H .495L .146H
2.318L .149H .515L .324H .305L .547H .132L 2.374H .132L .55H .307L .328H .522L .151H
2.36L .149H .506L .313H .289L .509H .121L 2.147H .118L .484H .268L .284H .449L .13H
2.022L .128H .435L .271H .252L .45H .108L 1.951H .109L .456H .257L .278H .449L .133H
2.106L .136H .471L .298H .282L .509H .124L 2.252H .126L .532H .3L .324H .522L .153H
2.413L .154H .528L .33H .307L .547H .131L 2.335H .129L .532H .295L .313H .495L .143H
2.214L .139H .471L .291H .268L .473H .112L 2.002H .11L .456H .254L .271H .432L .126H
1.982L .126H .435L .274H .257L .464H .112L 2.044H .115L .484H .275L .298H .483L .143H
2.268L .146H .506L .319H .3L .54H .131L 2.361H .132L .55H .308L .33H .527L .153H
2.393L .151H .515L .319H .295L .521H .124L 2.2H .121L .497H .275L .291H .46L .133H
2.06L .13H .441L .274H .254L .452H .108L 1.944H .108L .452H .254L .274H .441L .13H
2.06L .133H .46L .291H .275L .497H .121L 2.2H .124L .521H .295L .319H .515L .151H
2.393L .153H .527L .33H .308L .55H .132L 2.361H .131L .54H .3L .319H .506L .146H
2.268L .143H .483L .298H .275L .484H .115L 2.044H .112L .464H .257L .274H .435L .126H
1.982L .126H .432L .271H .254L .456H .11L 2.002H .112L .473H .268L .291H .471L .139H
2.214L .143H .495L .313H .295L .532H .129L 2.335H .131L .547H .307L .33H .528L .154H
2.413L .153H .522L .324H .3L .532H .126L 2.252H .124L .509H .282L .298H .471L .136H
2.106L .133H .449L .278H .257L .456H .109L 1.951H .108L .45H .252L .271H .435L .128H
2.022L .13H .449L .284H .268L .484H .118L 2.147H .121L .509H .289L .313H .506L .149H
2.36L .151H .522L .328H .307L .55H .132L 2.374H .132L .547H .305L .324H .515L .149H
2.318L .146H .495L .306H .282L .497H .118L 2.093H .115L .473H .262L .278H .441L .128H
1.995L .126H .432L .27H .252L .452H .109L 1.971H .11L .464H .262L .284H .46L .136H
2.159L .139H .483L .306H .289L .521H .126L 2.298H .129L .54H .305L .328H .527L .154H
2.42L .154H .527L .328H .305L .54H .129L 2.298H .126L .521H .289L .306H .483L .139H
2.159L .136H .46L .284H .262L .464H .11L 1.971H .109L .452H .252L .27H .432L .126H
1.995L .128H .441L .278H .262L .473H .115L 2.093H .118L .497H .282L .306H .495L .146H
2.318L .149H .515L .324H .305L .547H .132L 2.374H .132L .55H .307L .328H .522L .151H
2.36L .149H .506L .313H .289L .509H .121L 2.147H .118L .484H .268L .284H .449L .13H
2.022L .128H .435L .271H .252L .45H .108L 1.951H .109L .456H .257L .278H .449L .133H 2.106L .136H .471L .298H .282L .509H .124L 2.252H .126L .532H .3L .324H .522L .153H
2.413L .154H .528L .33H .307L .547H .131L 2.335H .129L .532H .295L .313H .495L .143H
2.214L .139H .471L .291H .268L .473H .112L 2.002H .11L .456H .254L .271H .432L .126H
1.982L .126H .435L .274H .257L .464H .112L 2.044H .115L .484H .275L .298H .483L .143H
2.268L .146H .506L .319H .3L .54H .131L 2.361H .132L .55H .308L .33H .527L .153H
2.393L .151H .515L .319H .295L .521H .124L 2.2H .121L .497H .275L .291H .46L .133H
2.06L .13H .441L .274H .254L .452H .108L 1.944H .108L .452H .254L .274H .441L .13H
2.06L .133H .46L .291H .275L .497H .121L 2.2H .124L .521H .295L .319H .515L .151H 2.393L .153H .527L .33H .308L

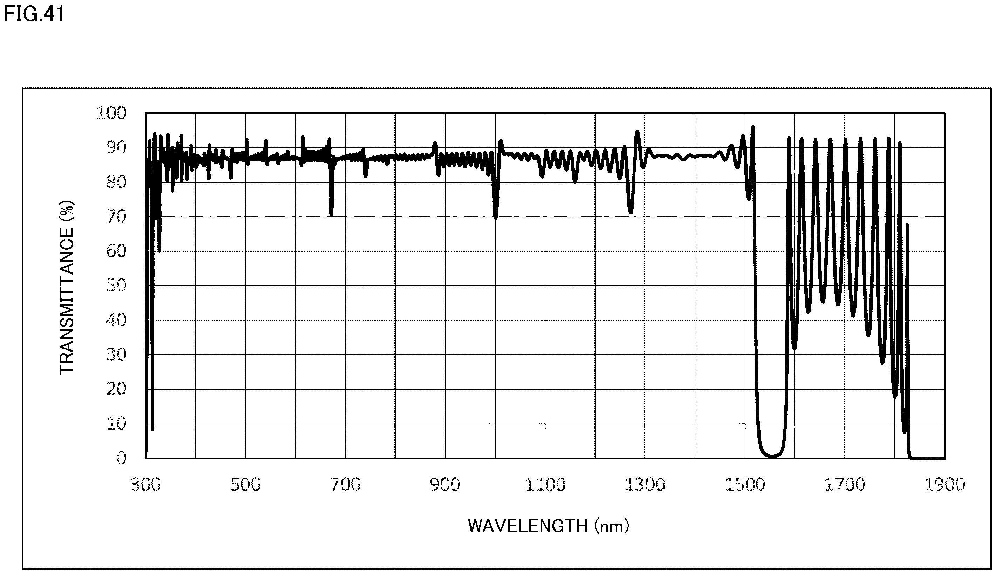

FIG. 41 is a graph showing a spectral transmittance exhibited by Example 14.

According to FIG. 41, the spectral transmittance of Example 14 is similar to that of Example 3 in the general framework including stopband, free filter region, etc., although a comparatively large number of ripples appear.

In Example 14, the average transmittance in the free filter region (400 nm or more and 1800 nm or less) is less than 85%, unlike other examples, due to the omission of some film structures (decrease in periodicity of film structure) from the film structure of Example 3.

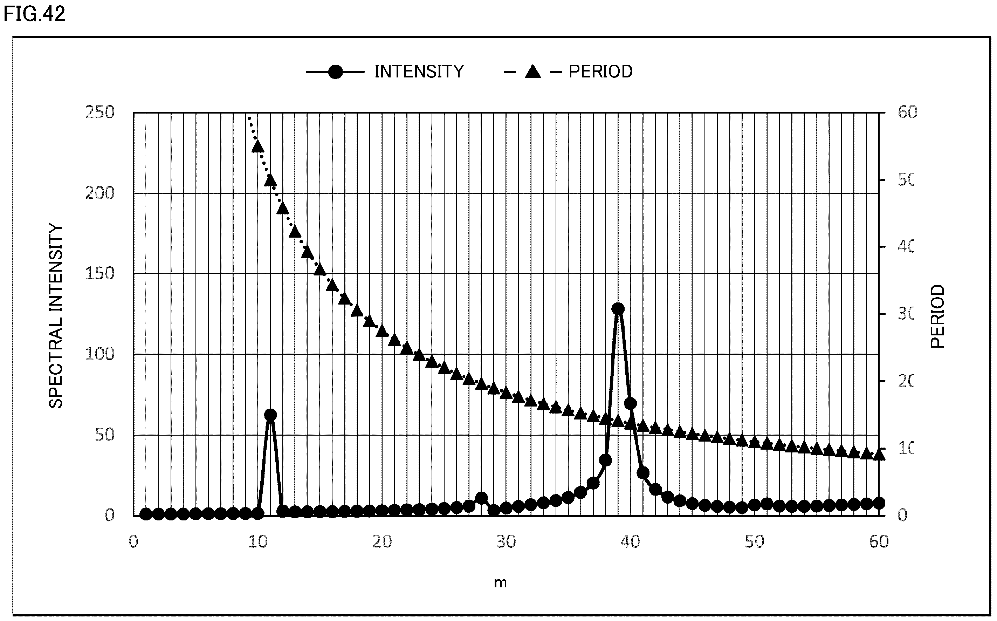

FIG. 42 is a graph showing a discrete Fourier transform spectrum of a film thickness number sequence of Example 14 and a period corresponding to a number m.

According to FIG. 42, the discrete Fourier transform spectrum of Example 14 is slightly different from that of Example 3 on the basis of the decrease in periodicity of the film structure, but there are peaks in the discrete Fourier transform spectrum corresponding to the basic period p and the period $\Lambda_1$, respectively ($\Lambda'_{39} = 14.1 \approx p$, $\Lambda'_{11} = 50.9 \approx \Lambda_1$).

Even when a part of the film structure is not a basic filter structure as in the film structure of Example 14, if the other parts of the film structure are repeats of the basic filter, the film structure can be said to have a basic filter repeat structure. In this case, due to the repeated parts of the basic filter, a peak is located at the number m corresponding to the basic period in the discrete Fourier transform spectrum of the film thickness number sequence.

Example 15 has an adjusted optical multilayer film 4 designed by adjusting the values of appropriate terms in the film thickness number sequence of the optical multilayer film 4 of Example 14 for the purpose of reducing the ripple of the transmittance distribution in the free filter region.

The film structure in the optical multilayer film 4 of Example 15 is shown below. .965L .112H .597L .314H .373L .546H .148L 2.248H .112L .465H .248L .299H .469L .146H
2.287L .154H .491L .322H .239L .449H .104L 2.222H .138L .513H .316L .295H .52L .128H
2.423L .153H .592L .392H .327L .616H .106L 2.09H .11L .602H .338L .36H .592L .121H
1.928L .102H .588L .344H .338L .604H .097L 1.729H .11L .539H .291L .28H .438L .117H
2.113L .124H .404L .234H .267L .473H .127L 1.944H .099L .521H .31L .313H .521L .103H
2.032L .135H .535L .355H .286L .529H .093L 2.152H .137L .57H .359L .324H .574L .115H
2.281L .134H .59L .373H .338L .629H .107L 1.813H .095L .631H .334L .365H .601L .112H
1.782L .106H .583L .344H .316L .568H .087L 1.702H .094L .516H .283L .317H .511L .114H
1.844L .103H .533L .329H .303L .544H .086L 1.786H .103L .484H .256L .298H .467L .137H
2.202L .126H .474L .284H .294L .508H .132L 2.31H .13L .545H .325L .332H .554L .136H
2.419L .151H .56L .372H .294L .544H .093L 2.056H .125L .503H .291L .273H .453L .118H
2.116L .127H .454L .294H .268L .514H .099L 1.712H .1L .558H .331L .305H .528L .083H
1.863L .133H .475L .293H .234L .423H .104L 1.949H .095L .476H .276L .318H .508L .122H
2.079L .121H .535L .333H .314L .552H .112L 2.196H .122L .585H .34L .357H .585L .136H
2.308L .115H .546L .309H .34L .542H .132L 2.089H .101L .519H .306L .326H .551L .11H
1.804L .105H .552L .333H .3L .524H .083L 1.844H .12L .455H .26L .25H .432L .117H
1.987L .112H .463L .29H .274L .473H .099L 1.957H .119L .474H .281L .272H .467L .118H
2.102L .11H .494L .285H .328L .53H .141L 2.39H .142L .565H .351L .325H .565L .125H
2.36L .145H .565L .373H .305L .58H .091L 1.846H .093L .521H .264L .323H .474L .138H
2.143L .132H .447L .292H .254L .486H .096L 1.753H .097L .519H .293L .289H .456L .103H
2.02L .133H .43L .254H .236L .441H .117L 1.967H .106L .525H .339L .323H .635L .099H
1.57L .102H .655L .334H .371L .582H .13L 2.238H .113L .588H .326L .374H .582L .148H
2.388L .125H .524L .301H .316L .516H .131L 2.12H .102L .485H .284L .319H .526L .117H
1.859L .104H .544L .337H .302L .55H .079L 1.78H .117L .444H .228L .25H .425L .138H
2.046L .105H .467L .306H .307L .592H .102L 1.479H .091L .62H .301L .347H .521L .124H
2.105L .116H .519L .305H .323L .536H .132L 2.36H .139L .571H .35L .332H .57L .126H
2.339L .141H .563L .368H .308L .58H .093L 1.867H .103L .529H .283L .305H .467L .124H
2.131L .141H .447L .284H .231L .444H .101L 1.846H .1L .517H .321L .304H .552L .086H
1.741L .116H .516L .315H .276L .482H .094L 1.925H .114L .512H .324L .304H .557L .1H
1.851L .098H .591L .318H .365L .571H .135L 2.272H .113L .572H .317L .367H .569L .148H
2.375L .128H .508L .291H .302L .498H .132L 2.131H .096L .445H .248L .324H .497L .137H 2.001L .105H .509L .325H .306L .577H .09L 1.608H .098L .542H .293L .305H .483L .11H
1.95L .114H .491L .311H .285L .51H .095L 1.888H .109L .515H .298L .305H .5L .119H
2.199L .134H .534L .334H .307L .541H .119L 2.334H .141L .578H .365L .327H .582L .112H
2.137L .118H .565L .34H .327L .566H .105L 1.907H .104L .528H .29L .299H .464L .118H
2.13L .138H .418L .225H .23L .434H .135L 1.993H .09L .483H .288L .321H .524L .109H
1.95L .128H .532L .353H .279L .513H .082L 2.05H .139L .532H .337L .288H .512L .113H
2.358L .153H .601L .404H .335L .657H .108L 1.93H .087L .665H .31L .423H .593L .161H
2.374L .125H .461L .281H .322L .559H .139L 2.569H .198L .576H .475L .324H .76L .137L 2.55L .09H .812L .195H .182L

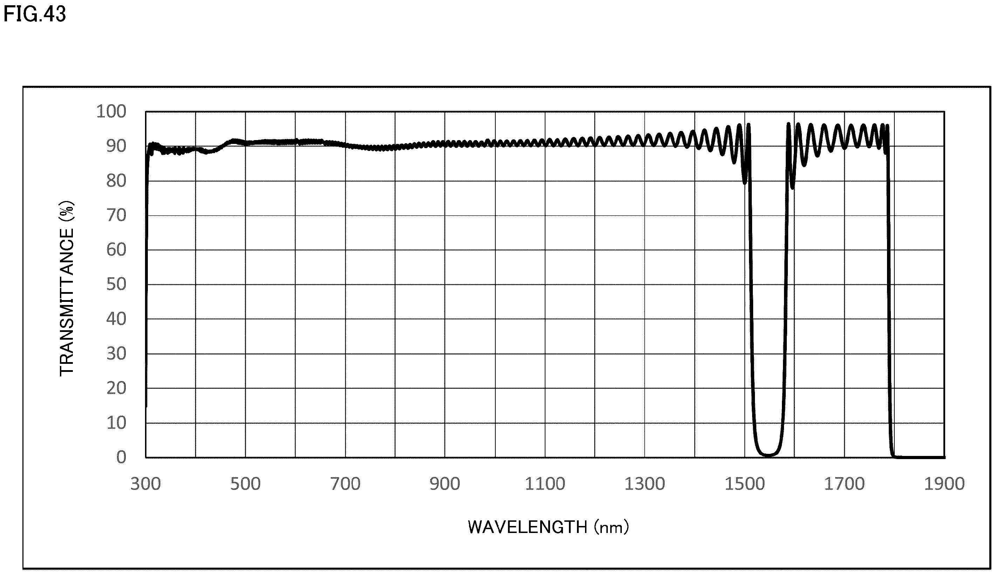

FIG. 43 is a graph showing a spectral transmittance exhibited by Example 15.

According to FIG. 43, Example 15 has the same free filter region and stopband as Example 14, but the ripple of the transmittance distribution in the free filter region is reduced.

In addition, the average transmittance of the free filter region (400 nm or more and 1800 nm or less) is 85% or more.

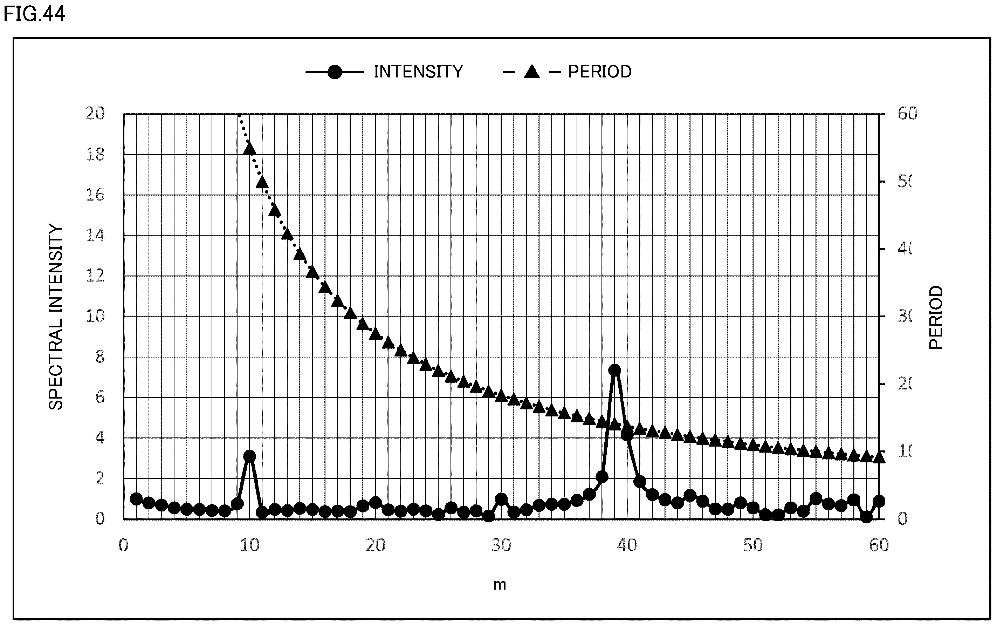

FIG. 44 is a graph showing a discrete Fourier transform spectrum of a film thickness number sequence of Example 15 and a period corresponding to a number m.

In FIG. 44, even in Example 15 (after adjusting the values of the appropriate terms in the film thickness number sequence), as in Example 14 (FIG. 42), there is a peak at m = 10 ($\Lambda'_{11}$ = 55) corresponding to the period $\Lambda_1$ of the modulation, and there is a peak at m = 39 ($\Lambda'_{40}$ = 14.1) corresponding to the basic period p.

If the layer structure of the basic optical multilayer film 4 is changed to a greater extent by increasing the portion that does not have the basic filter structure in the basic filter repeat structure and performing the modulation of the above Expression (2), or adjusting the film thickness of an arbitrary layer in the film structure to a greater extent after modulation, the periodicity of the film thickness number sequence is broken to a greater extent. Then, the film structure thus changed becomes closer to the film structure related to the film thickness number sequence not subjected to modulation. Thus, the film structure thus changed deviates from the ideal shape of spectral transmittance required more for notch filters, for example, the number of ripples in the free filter region increases, or the ripple becomes larger (the minimum value of the transmittance becomes smaller).

In Examples 16 and 17 below, such changes are deliberately made without considering reducing the ripple in the free filter region as much as possible, etc.

As Example 16, one similar to Example 3 was formed, except that the total number of layers $L_0$ was changed from 561 to 433 (the number of repeats r was changed from 40 to 31), and film thickness adjustment was performed to a greater extent. In order to set the center wavelength of a stopband to 1550 nm in the second basic filter repeat structure (basic period p = 14), the period of the modulation is $\Lambda_1$ = 50.

The film structure in the optical multilayer film 4 of Example 16 is shown below in physical film thickness format.
98.29L 11.4H 43.9L 27.73H 19.67L 143.52H 15.51L 31.33H 41.45L 13.17H 197.2L 5.49H 27.16L 10.93H 32.07L 31.04H
14.83L 145.4H 19.27L 29.79H 44.96L 12.78H 221.92L 7.61H 58.49L 21.8H 32.69L 38.55H 10.66L 105.9H 5.91L 39.81H
24.98L 24.81H 50.25L 9.25H 186.22L 5.25H 35.63L 14.79H 27.51L 28.81H 10.62L 117.38H 14.43L 29.45H 39.31L
13.01H 205.82L 11.47H 44.45L 30.24H 16.96L 141.66H 19.29L 27.44H 46.36L 10.13H 202.77L 10.11H 40.26L 20.62H
20.62L 30.46H 7.5L 125.93H 10.38L 31.81H 27.86L 20.03H 50.16L 7.52H 191.95L 4.86H 39.91L 13.75H 32.65L 30.24H
14.89L 140.38H 17.52L 29.2H 44.55L 11.27H 203.94L 12.75H 38.1L 28.66H 14.48L 118.41H 9.7L 25.71H 20.66L 13.24H
32.24L 7.53H 196.32L 11.56H 41.1L 29.27H 16.04L 140.45H 18.34L 27.58H 43.31L 11.1H 207.42L 8.96H 48.41L 23.46H
25.26L 35.87H 7.71L 110.9H 7.38L 37.8H 25.98L 23.66H 50.11L 9.15H 214.44L 11.96H 43.03L 28.93H 18.04L 140.37H
17.01L 28.5H 41.81L 11.01H 194.11L 10.68H 38.43L 26.37H 15.86L 132.66H 16.74L 27.7H 42.29L 10.74H 201.67L
12.31H 38.05L 27.96H 14.69L 124.83H 8.11L 31.07H 25.61L 19.07H 46.59L 7.41H 190.96L 7.16H 50.93L 19.4H 29.99L
32.89H 11.27L 122.8H 6.86L 33.55H 23.83L 22.62H 46.54L 9.58H 209.1L 10.88H 44.29L 27.5H 18.74L 139.09H 16.9L
28.63H 43.05L 11.08H 199.56L 11.94H 37.89L 27.39H 14.78L 126.79H 14.41L 28.53H 38.39L 12.35H 204.31L 11.98H
41.49L 30.24H 15.95L 143.38H 18.84L 29.04H 44.58L 11.79H 219.64L 9.01H 52.08L 24.39H 28.63L 40.95H 9.11L
88.34L 7.37H 43.47H 25.08L 25.4H 48.12L 9.54H 203.68L 10.97H 40.95L 27.13H 17.4L 136.42H 16.15L 28.47H 41.62L
11.27H 199.26L 11.79H 38.52L 27.39H 14.47L 128.44H 15.15L 28H 39.95L 11.89H 205.83L 12.31H 41.58L 30.83H
15.83L 143.4H 19.16L 29.1H 44.49L 11.96H 221.38L 8.74H 52.12L 23.53H 28.41L 38.47H 8.33L 102.07H 7.12L 39.4H
24.98L 23.8H 47.39L 8.76H 198.49L 10.56H 40.21L 25.99H 17.59L 134.9H 15.6L 28.93H 41.24L 11.38H 194.52L
11.29H38.35L 27.65H 15.08L 128.28H 18.1L 25.5H 39.95L 10.57H 192.2L 5.74H 53.57L 17.05H 32.71L 32.12H 12.37L
133.74H 20.36L 27.18H 43.13L 12.18H 202.65L 6.84H 53.36L 19.14H 31.72L 33.74H 12.29L 141.34H 17.23L 29.88H
41.69L 12.82H 210.48L 11.2H 43.99L 28.79H 18.01L 137.33H 18.18L 26.37L 41.32H 9.87H 183.05L 9.6H 41.51L 26.06H
18.24L 136.79H 18.04L 28.33H 44.25L 10.71H 206.65L 12.52H 39.58L 28.52H 16.13L 136.5H 11.44L 34.28H 32.33L
19.45H 56.43L 6.42H 217.22L 13.63H 41.69L 30.26H 17.9L 145.95H 16.05L 31.3H 41.35L 13.33H 209.47L 11.35H
43.38L 28.58H 17.46L 134.31H 16.9L 26.97H 39.83L 10.98H 196.08L 11.18H 41.28L 28.64H 16.69L 136.33H 18.14L
27.04H 41.54L 10.52H 193.55L 7.52H 45.62L 20.75H 25.16L 33.21H 7.98L 117.34H 8.75L 35.97H 28.97L 22.28H 52.77L
8.34H 220.21L 12.56H 43.55L 29.59H 18.59L 144.73H 16.54L 30.91H 41.69L 12.96H 206.24L 11.84H 41.64L 27.97H 16.6L 131H 16.06L 27.46H 40.73L 11.69H 202.02L 12.54H 41.38L 30.62H 15.91L 142.34H 20.11L 27.31H 46.14L 10.41H 221.12L 10.26H 49.06L 24.22H 27.13L 37.39H 8.79L 129H 8.21L 33.8H 24.53L 22.69H 43.3L 9.74H 184.35L 6.9H 43.22L 17.26H 23.85L 27.4H 8.9L 118.37H 12.58L 28.61H 31.82L 15.51H 51.22L 4.65H 105.93L

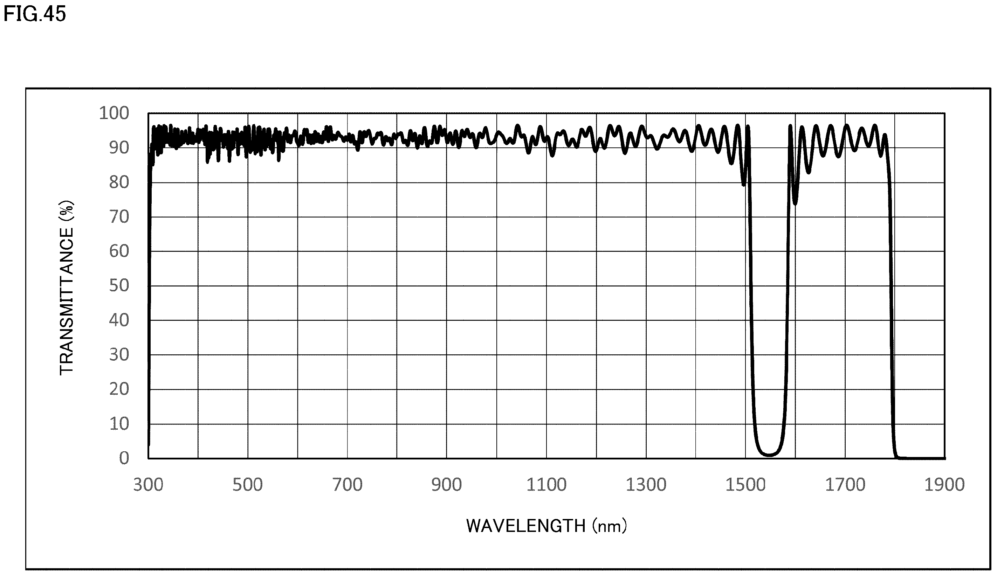

FIG. 45 is a graph showing a spectral transmittance exhibited by Example 16.

According to FIG. 45, the spectral transmittance of Example 16 is similar to that of Example 3 in the general framework including stopband, free filter region, etc.

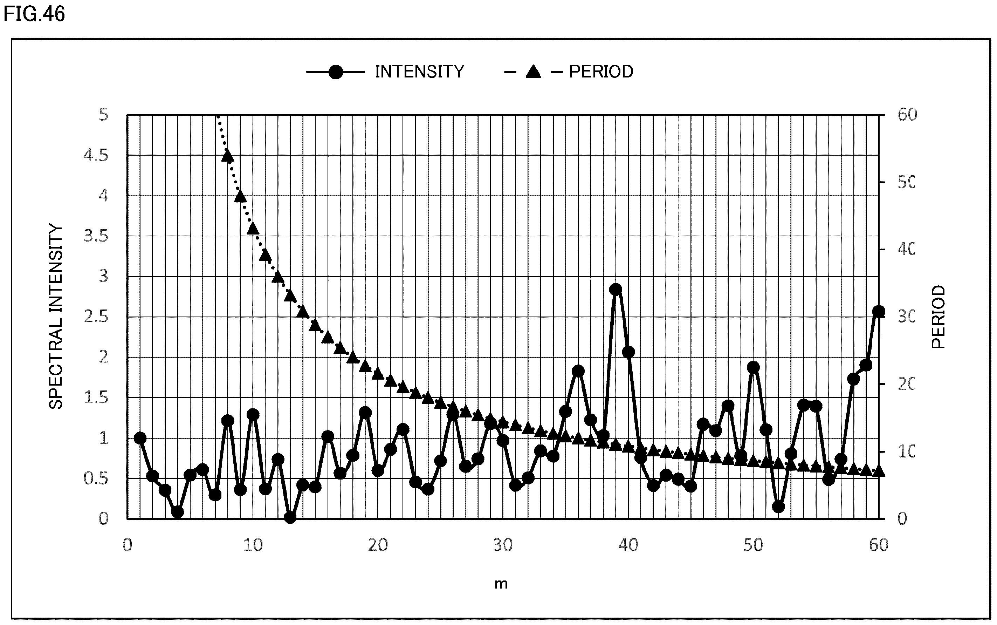

FIG. 46 is a graph showing a discrete Fourier transform spectrum of a film thickness number sequence of Example 16 and a period corresponding to a number m.

According to FIG. 46, the discrete Fourier transform spectrum of Example 16 is slightly different from that of Example 3, but there are peaks in the discrete Fourier transform spectrum corresponding to the basic period p and the period $\Lambda_1$, respectively ($\Lambda'_{29}$ = (433-1)/29 = 14.9 ≈ p, A's = (433-1)/8 = 54.0 ≈ $\Lambda_1$).

Even when adjustment is performed to a relatively great extent from the basic filter repeat structure as in the film structure of Example 16, if peaks corresponding to the basic period p and the period $\Lambda_1$, respectively, appear in the discrete Fourier transform spectrum, the periodicities of the basic period p and the period $\Lambda_1$ of the modulation are maintained, so that the characteristics required for notch filters are sufficiently obtained.

As Example 17, one similar to Example 3 was formed, except that the total number of layers $L_0$ was changed from 561 to 343 (the number of repeats r was changed from 40 to 24), and film thickness adjustment was performed to a greater extent. In Example 17, six more layers are added on the medium side to the second basic filter repeat structure for the number of repeats r = 24. In other words, in Example 17, eight layers on the medium side are removed from the second basic filter repeat structure for the number of repeats r = 25. In order to set the center wavelength of a stopband to 1550 nm in the second basic filter repeat structure (basic period p = 14), the period of the modulation is $\Lambda_1$ = 50.

The film structure in the optical multilayer film 4 of Example 17 is shown below in physical film thickness format.
97.85L 14.01H 38.9L 30.45H 16.62L 145.58H 17.92L 29.61H 40.77L 13.63H 1472.77L 13.47H 41.7L 29.28H 19.73L 146.55H 15.28L 32.87H 39.92L 14.62H 211.96L 11.61H 45.91L 29.33H 17.91L 141.91H 23.92L 21.58H 288.26L 17.62H 33.8L 38.03H 10.89L 140.6H 28.2L 19.58H 300.26L 15.13H 39.7L 32.4H 16.31L 150.86H 16.9L 31.17H 43.41L 12.64H 214.6L 11.81H 44.99L 29.26H 17.6L 142.63H 24.85L 20.53H 282.57L 19.66H 26.89L 142.07H 14.93L 31.63H 42.33L 12.93H 210.74L 13H 43.2L 32.01H 15.33L 147.48H 20.92L 28.97H 45.17L 12.23H 218.1L 12.04H 47.05L 28.74H 20.84L 149.27H 13.56L 34.96H 36.88L 16.72H 287.06L 20.82H 24.27L 140.21H 16.67L 28.03H 42.15L 11.25H 191.7L 10.33H 40.4L 25.92H 17.44L 137.8H 16.98L 28.92H 45.2L 11.99H 205.73L 12.51H 42.25L 30.58H 16.44L 143.22H 16.73L 31.26H 39.33L 13.62H 286.36L 14.2H 38.33L 30.89H 17.06L 142.35H 16.88L 30.06H 43.79L 11.98H 210.51L 13.47H 40.52L 32.27H 13.66L 142.98H 28.03L 19.28H 202.82L 10.07H 49.12L 28.2H 19.71L 142.25H 19.12L 29.14H 45.8L 10.55H 216.95L 14.72H 39.16L 32.95H 14.2L 152.3H 20.05L 28.12H 44.13L 12.21H 236.04L 10.95H 45.54L 27.46H 21.9L 143.66H 15.64L 32.41H 40.84L 13.33L 215.42L 12.29H 42.38L 31.04H 14.89L 143.54H 26.34L 19.19H 204.77L 10.29H 47.82L 27.69H 20.21L 140.8H 20.54L 28.42H 47.33L 10.86H 211.03L 14.56H 39.29L 32.53H 14.62L 145.05H 17.98L 28.77H 38.69L 13.39H 285.24L 12.77H 39.05L 30.11H 16.35L 140.86H 16.14L 31.18H 40.72L 11.78H 202.15L 11.93H 40.4L 26.37H 16.24L 128.66H 14.5L 29.16H 39.89L 11.78H 202.75L 13.59H 39.33L 31.1H 13.95L 146.29H 25.2L 20.04H 289.74L 15.94H 36.41L 34.5H 12.68L 154.95H 17.59L 30.42H 43.53L 13.3H 213.65L 10.97H 47.47L 28.15H 20.69L 146.85H 15.31L 32.82H 40.64L 13.76H 208.22L 13.47H 41.33L 32.25H 14.09L 140.65H 28.06L 18.5H 206.62L 11.35H 44.14L 30.28H 17.41L 144.6H 18.71L 28.99H 48.54L 11.36H 209.75L 13.79H 42.81L 30.7H 17.28L 151.74H 15.58L 33.35H 37.24L 16.89H 304.42L 14.12H 41.04L 32.47H 16.88L 142.1H 17.96L 30.26H 43.38L 13.03H 639.07L 12.12H 42.36L 30.02H 17.65L 145.45H 17.58L 28.57H 44.33L 11.57H 215.09L 14.13H 39.67L 31.32H 15.93L 141.96H 17.83L 28.75H 38.91L 12.28H 278.12L 13.25H 39.22L 29.74H 17.25L 147.63H 14.53L 32.73H 40.54L 13.53H 213.56L 10.44H 46.34L 28.08H 19.18L 137.98H 17.18L 27.25H 41.22L 11.18H 193.57L 10.36H 44.21L 26.98H 19.31L 138.03H 20.99H 27.02L 44.87L 11.45H 221.33L 14.32H 40.48L 31.42H 18.06L 148.76H 16.12L 34.37H 37.97L 17.28H 299.72L 16.22H 38.25L 33.2H 15.49L 145.51H 19.48L 28.07H 43.6L 12.22H 534L

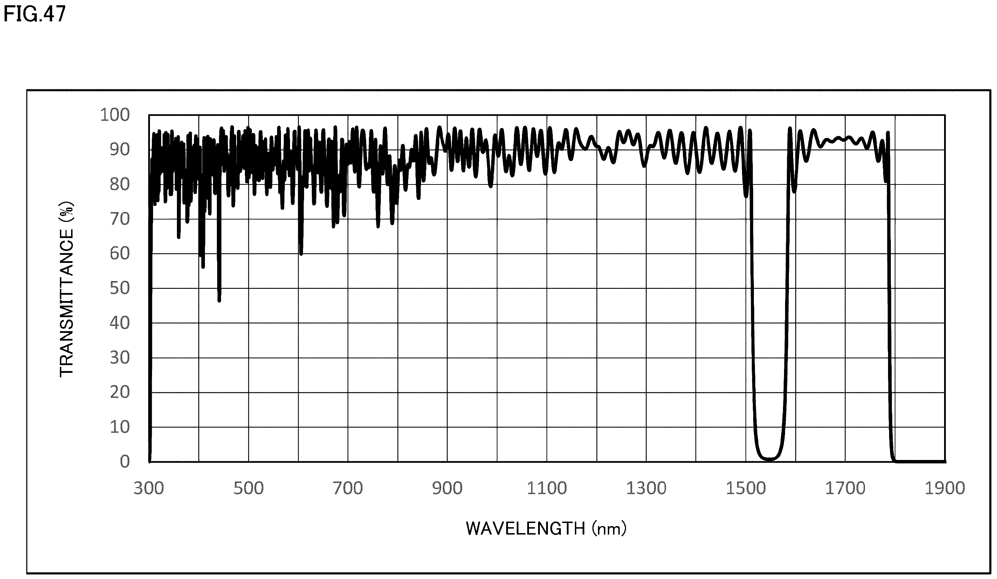

FIG. 47 is a graph showing a spectral transmittance exhibited by Example 17.

According to FIG. 47, the spectral transmittance of Example 17 is similar to that of Example 3 in the general framework including stopband, free filter region, etc., although a relatively large number of ripples appear and are relatively large due to the number of layers $L_0$ being 343 which is relatively small.

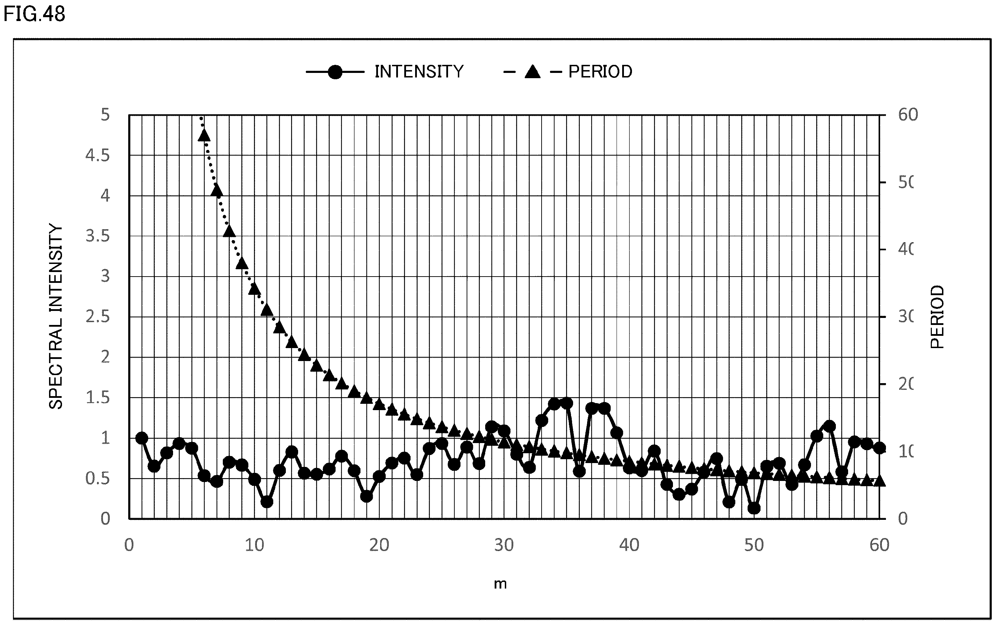

FIG. 48 is a graph showing a discrete Fourier transform spectrum of a film thickness number sequence of Example 17 and a period corresponding to a number m.

According to FIG. 48, the discrete Fourier transform spectrum of Example 17 is different from that of Example 3, but there are peaks in the discrete Fourier transform spectrum corresponding to the basic period p and the period $\Lambda_1$, respectively ($\Lambda'_{35}$ = (343-1)/35 = 9.8 ≈ p, $\Lambda'_9$ = (343-1)/9 = 38.0 ≈ $\Lambda_1$). However, the period $\Lambda_1$ of the modulation corresponds more to the period $\Lambda_1$ of the modulation = 35 for setting the center wavelength of the stopband to 1550 nm in the third basic filter repeat structure (basic period p = 10) by a relatively large adjustment.

Even when adjustment is performed to a relatively great extent from the basic filter repeat structure as in the film structure of Example 18, if peaks corresponding to the basic period p and the period $\Lambda_1$, respectively, appear in the discrete Fourier transform spectrum, the periodicities of the basic period p and the period $\Lambda_1$ of the modulation are maintained, so that the characteristics required for notch filters are obtained.

If the notch filter satisfies the following conditions, better characteristics are obtained.

(1-1) The free filter region includes a wavelength range of 400 nm or more and 1200 nm or less.

(1-2) A stopband is formed in a wavelength range of 600 nm or more and 1200 nm or less.

(1-3) The average transmittance in the free filter region is 85% or more. The transmittance in the stopband is not considered in the calculation of the average transmittance in the free filter region. The wavelength range of the stopband may be a wavelength range between adjacent ripples (minimum values of the transmittance) on both sides thereof.

(1-4) In the discrete Fourier transform spectrum of the film thickness number sequence, the following peak exists for each basic period p of the first basic filter structure (basic period p =6), the second basic filter structure (basic period p = 14), and the third basic filter structure (basic period p = 10). That is, a peak exists at least at any of a spectral number $m_{f1}$ corresponding best to a period of 6, spectral numbers $m_{f1}$-2, $m_{f1}$-1, $m_{f1}$+1, and $m_{f1}$+2, which are two before, one before, one after, and two after the number $m_{f1}$, a spectral number $m_{f2}$ corresponding best to a period of 14, spectral numbers $m_{f2}$-2, $m_{f2}$-1, $m_{f2}$+1, and $m_{f2}$+2, which are two before, one before, one after, and two after the number $m_{f2}$, and a spectral number $m_{f3}$ corresponding best to a period of 10, and spectral numbers $m_{f3}$-2, $m_{f3}$-1, $m_{f3}$+1, and $m_{f3}$+2 which are two before, one before, one after, and two after the number $m_{f3}$. As for the spectral intensity of this peak, an additional condition may be that the spectral intensity of this peak is larger than the spectral intensity at the spectral number m = 1, i.e., when oscillations over all layer numbers are shown and no periodicity is exhibited. Hereinafter, "$m_{f1}$-1 and $m_{f1}$+1" are sometimes represented as "$m_{f1}\pm1$", "$m_{f1}$-2 and $m_{f1}$+2" are sometimes represented as "$m_{f1}\pm2$", and other spectral numbers are sometimes represented in the same manner.

(1-5) In the discrete Fourier transform spectrum of the film thickness number sequence, the following peak exists for the period $\Lambda_k$ of the modulation. That is, a peak exists at a spectral number between a minimum number $m_{min}$ and a maximum number $m_{max}$ among spectral numbers $m_{m1}$, $m_{m2}$, and $m_{m3}$ corresponding best to the periods $\Lambda_k$ of the modulation determined according to the periods (three types of 6, 14, and 10) and the center wavelength of the stopband and spectral numbers $m_{m1}\pm1$, $m_{m2}\pm1$, and $m_{m3}\pm1$ which are one before and one after the respective numbers $m_{m1}$, $m_{m2}$, and $m_{m3}$. As for the spectral intensity of this peak, an additional condition may be that the spectral intensity of this peak is larger than the spectral intensity at the spectral number m = 1.

The application of these conditions to the above-described examples is shown in Table 1 below. The application of these conditions to the above-described comparative examples is shown in Table 2 below. In Table 2, (1-1) is omitted, and conditions (1-2) to (1-5) are listed as (2) to (5) in that order. Hereinafter, the values observed in the examples and the comparative examples are shown as OK when conditions (1-2) to (1-5) or conditions (2) to (5) are satisfied, as × when these conditions are not satisfied, and as △ when these values are slightly less than those of these conditions.

[Table 1]

| (1-1) Free filter region: 400 to 1200 nm | | |
|---|---|---|
| | Example 1 | Example 2 |
| $m_{f1}$ | 50 | 50 |
| $m_{f2}$ | 21 | 21 |
| $m_{f3}$ | 30 | 30 |
| $m_{m1}$ | 20 | 20 |
| $m_{m2}$ | 19 | 19 |
| $m_{m3}$ | 26 | 26 |
| $m_{max}$ | 27 | 27 |
| $m_{min}$ | 18 | 18 |
| (1-2) Stopband center wavelength | 1064 nm | 1064 nm |
| | OK | OK |
| (1-3) Average transmittance | 92.5% | 94.1% |
| | OK | OK |
| (1-4) Basic period peak | 50 | 19, 31, 50 |
| | OK | OK |
| Additional condition | OK | OK |

(continued)

| (1-1) Free filter region: 400 to 1200 nm | | |
|---|---|---|
| | Example 1 | Example 2 |
| (1-5) Modulation period peak | 19 | 19, 26 |
| | OK | OK |
| Additional condition | OK | OK |

[Table 2]

| | Comparative Example 1 | Comparative Example 2 |
|---|---|---|
| $m_{f1}$ | 13 | --- |
| $m_{f2}$ | 6 | 10 |
| $m_{f3}$ | 8 | 14 |
| $m_{m1}$ | 15 | --- |
| $m_{m2}$ | 12 | --- |
| $m_{m2a}$ | --- | --- |
| $m_{m2b}$ | --- | 9 |
| $m_{m3}$ | --- | --- |
| $m_{m3a}$ | --- | --- |
| $m_{m3b}$ | --- | 12 |
| $m_{max}$ | 16 | 13 |
| $m_{min}$ | 11 | 8 |
| (2) Stopband center wavelength | 700 nm | 1064 nm |
| | OK | OK |
| (3) Average transmittance | 90.8% | 91.1% |
| | OK | OK |
| (4) Basic period peak | None | None |
| | × | × |
| Additional condition | × | × |
| (5) Modulation period peak | None | None |
| | × | × |
| Additional condition | × | × |

First, (1-1) the free filter region includes a wavelength range of 400 nm or more and 1200 nm or less in Examples 1 and 2 and Comparative Examples 1 and 2. The case where the free filter region includes a wavelength range of 400 nm or more and 1800 nm or less, will be described later.

Next, in each of Examples 1 and 2 and Comparative Examples 1 and 2, (1-2) a stopband is formed in a wavelength range of 600 nm or more and 1200 nm or less (OK).

Then, in each of Examples 1 and 2 and Comparative Examples 1 and 2, (1-3) the average transmittance in the free filter region is 85% or more (OK).

On the other hand, in Examples 1 and 2, (1-4) a peak exists for the basic period p (OK), and (1-5) a peak exists for the period $\Lambda_k$ of the modulation (OK). The spectral intensities of these peaks are both larger than the spectral intensity at the number m = 1 (each additional condition is OK). In contrast, in Comparative Examples 1 and 2, (1-4) no peak exists for the basic period p (×), and (1-5) no peak exists for the period $\Lambda_k$ of the modulation (×).

In Comparative Example 2, there are two stopbands, and there are two periods $\Lambda_1$ and $\Lambda_2$ of the modulation corresponding thereto, so that there can be two spectral numbers $m_{m2}$ ($m_{m2a}$ and $m_{m2b}$), and there can be two spectral

numbers $m_{m3}$ ($m_{m3a}$ and $m_{m3b}$).

If the notch filter satisfies the following conditions, better characteristics are obtained.

(2-1) The free filter region includes a wavelength range of 400 nm or more and 1800 nm or less.

(2-2) A stopband is formed in a wavelength range of 600 nm or more and 1800 nm or less.

(2-3) The average transmittance in the free filter region is 85% or more. The transmittance in the stopband is not considered in the calculation of the average transmittance in the free filter region. The wavelength range of the stopband may be a wavelength range between adjacent ripples (minimum values of the transmittance) on both sides thereof.

(2-4) In the discrete Fourier transform spectrum of the film thickness number sequence, the following peak exists for each basic period p of the second basic filter structure (basic period p = 14) and the third basic filter structure (basic period p = 10). That is, a peak exists at least at any of the spectral number $m_{f2}$ corresponding best to a period of 14, the spectral numbers $m_{f2} \pm 1$ and $m_{f2} \pm 2$, which are $\pm 1$ and $\pm 2$ of the number $m_{f2}$, the spectral number $m_{f3}$ corresponding best to a period of 10, and the spectral numbers $m_{f3} \pm 1$ and $m_{f3} \pm 2$ which are $\pm 1$ and $\pm 2$ of the number $m_{f3}$. As for the spectral intensity of this peak, an additional condition may be that the spectral intensity of this peak is larger than the spectral intensity at the spectral number m = 1.

(2-5) In the discrete Fourier transform spectrum of the film thickness number sequence, the following peak exists for the period $\Lambda_k$ of the modulation. That is, a peak exists at a spectral number between the minimum number $m_{min}$ and the maximum number $m_{max}$ among the spectral numbers $m_{m2}$ and $m_{m3}$ corresponding to the periods $\Lambda_k$ of the modulation determined according to the basic periods p (= two types of 14 and 10) and the center wavelength of the stopband and the spectral numbers $m_{m2} \pm 1$ or $m_{m3} \pm 1$ which are $\pm 1$ of the numbers $m_{m2}$ and $m_{m3}$, respectively. As for the spectral intensity of this peak, an additional condition may be that the spectral intensity of this peak is larger than the spectral intensity at the spectral number m = 1.

The application of these conditions to the above-described examples is shown in Tables 3 to 5 below.

[Table 3]

| (2-1) Free filter region: 400 to 1800 nm | | | | | | | |
|---|---|---|---|---|---|---|---|
| | Example 3 | Example 4 | Example 5 | Example 6 | Example 7 | Example 10 | Example 11 |
| $m_{f2}$ | 40 | 40 | 40 | 40 | 40 | 29 | 29 |
| $m_{f3}$ | 56 | 56 | --- | 56 | 56 | 40 | 40 |
| $m_{m2}$ | 11 | 11 | 11 | 35 | 35 | 8 | 8 |
| $m_{m3}$ | 16 | 16 | --- | 48 | 48 | 11 | 11 |
| $m_{max}$ | 17 | 17 | 12 | 49 | 49 | 12 | 12 |
| $m_{min}$ | 10 | 10 | 10 | 34 | 34 | 7 | 7 |
| (2-2) Stopband center wavelength | 1550 nm | 1550 nm | 1550 nm | 1064 nm | 1064 nm | 1550 nm | 1550 nm |
| | OK | OK | OK | OK | OK | OK | OK |
| (2-3) Average transmittance | 92.4% | 94.1% | 92.2% | 91.5% | 93.9% | 92.3% | 93.2% |
| | OK | OK | OK | OK | OK | OK | OK |
| (2-4) Basic period peak | 40 | 40 | 40 | 40 | 40, 54 | 29, 40 | 29, 40 |
| | OK | OK | OK | OK | OK | OK | OK |
| Additional condition | OK | OK | OK | OK | OK | OK | OK |
| (2-5) Modulation period peak | 11 | 10, 11 | 11 | 36, 40, 44 | 36, 40, 45 | 11 | 11 |
| | OK | OK | OK | OK | OK | OK | OK |
| Additional condition | OK | OK | OK | OK | OK | OK | OK |

[Table 4]

| (2-1) Free filter region: 400 to 1800 nm | | |
|---|---|---|
| | Example 8 | Example 9 |
| $m_{f2}$ | 40 | 40 |
| $m_{f3}$ | 56 | 56 |
| $m_{m2a}$ | 35 | 35 |
| $m_{m3a}$ | 48 | 48 |
| $m_{m2b}$ | 11 | 11 |
| $m_{m3b}$ | 16 | 16 |
| $m_{max}$ | 49 | 49 |
| $m_{min}$ | 10 | 10 |
| (2-2) Stopband center wavelength | 1064 nm, 1550 nm | 1064 nm, 1550 nm |
| | OK | OK |
| (2-3) Average transmittance | 87.9% | 94.1% |
| | OK | OK |
| (2-4) Basic period peak | 40 | 40, 58 |
| | OK | OK |
| Additional condition | OK | OK |
| (2-5) Modulation period peak | 11, 36, 40, 44 | 12, 24, 36, 40, 47 |
| | OK | OK |
| Additional condition | OK | OK |

[Table 5]

| (2-1) Free filter region: 400 to 1800 nm | | | | | | |
|---|---|---|---|---|---|---|
| | Example 12 | Example 13 | Example 14 | Example 15 | Example 16 | Example 17 |
| $m_{f2}$ | 40 | 40 | 40 | 40 | 31 | 24 |
| $m_{f3}$ | 56 | 56 | 55 | 55 | 43 | 34 |
| $m_{m2}$ | 11 | 11 | 11 | 11 | 9 | 7 |
| $m_{m3}$ | 16 | 16 | 16 | 16 | 12 | 10 |
| $m_{max}$ | 17 | 17 | 17 | 17 | 13 | 11 |
| $m_{min}$ | 10 | 10 | 10 | 10 | 8 | 6 |
| (2-2) Stopband center wavelength | 1550 nm | 1550 nm | 1550 nm | 1550 nm | 1550 nm | 1550 nm |
| | OK | OK | OK | OK | OK | OK |
| (2-3) Average transmittance | 91.7% | 94.4% | 84.7% | 90.8% | 92.4% | 88.4% |
| | OK | OK | Δ | OK | OK | OK |
| (2-4) Basic period peak | 40 | 40 | 39 | 39, 55 | 29 | 34 |
| | OK | OK | OK | OK | OK | OK |
| Additional condition | OK | OK | OK | OK | OK | OK |
| (2-5) Modulation period peak | 11 | 11 | 11 | 10 | 8, 10, 12 | 8 |
| | OK | OK | OK | OK | OK | OK |
| Additional condition | OK | OK | OK | OK | OK | × |

First, (2-1) the free filter region includes a wavelength range of 400 nm or more and 1800 nm or less in Examples 3 to 17.

Next, in each of Examples 3 to 17, (2-2) a stopband is formed in a wavelength range of 600 nm or more and 1800 nm or less (OK).

Then, in Examples 3 to 17, (2-3) the average transmittance in the free filter region is 85% or more (OK), except in Example 14. In Example 14, the average transmittance in the free filter region is 84.7%, which is slightly less than 85% ($\triangle$).

On the other hand, in Examples 3 to 17, (2-4) a peak exists for the basic period p (OK), and (2-5) a peak exists for the period $\Lambda_k$ of the modulation (OK). The spectral intensities of these peaks are both larger than the spectral intensity at the number m = 1 except in Example 17 (each additional condition is OK). In Example 17, the spectral intensity of the peak at the number m = 8 is smaller than the spectral intensity at the number m =1 (the additional condition in (2-5) is $\times$).

In Examples 8 and 9, there are two stopbands, and there are two periods $\Lambda_1$ and $\Lambda_2$ of the modulation corresponding thereto, so that there can be two spectral numbers $m_{m2}$ ($m_{m2a}$ and $m_{m2b}$), and there can be two spectral numbers $m_{m3}$ ($m_{m3a}$ and $m_{m3b}$). The minimum number $m_{min}$ and the maximum number $m_{max}$ are determined by considering all $m_{m*}$ (* is an arbitrary symbol) including $m_{m2a}$, $m_{m2b}$, $m_{m3a}$, and $m_{m3b}$.

For reference, the application of the conditions to Example 16 will be described in more detail.

When the center wavelength of the stopband is set to 1550 nm as in Example 16, modulation with a period of 50 is performed for the second basic filter repeat structure (basic period p = 14), and modulation with a period of 35 is performed for the third basic filter repeat structure (basic period p = 10).

Thus, in Example 16, first, as in (2-4), at any of the number $m_{f2}$ = 31 ($\Lambda'_{31}$ = (433-1)/31 = 13.9) corresponding best to the basic period p = 14 and the spectral numbers 29, 30, 32, and 33, which are $\pm 1$ and $\pm 2$ of the number $m_{f2}$, a spectral intensity peak exists (there is a peak at the number m = 29; $\Lambda'_{29}$ = (433-1)/29 = 14.9), and the periodicity of the basic period p = 14 is maintained, which is preferable for improving the characteristics of the notch filter.

Also, in Example 16, as in (2-5), between the minimum number $m_{min}$ = 8 (= $m_{m2}$-1) and the maximum number $m_{max}$ = 13(= $m_{m3}$+1) among the spectral number $m_{m2}$ = 9 ($\Lambda'_9$ = (433-1)/9 = 48) corresponding best to the modulation period of 50 and $m_{m2}\pm 1$ = 8 and 10 adjacent thereto, and the spectral number $m_{m3}$ = 12 corresponding to the modulation period of 35 and $m_{m3}\pm 1$ = 11 and 13 adjacent thereto, a spectral intensity peak exists (there are peaks at the number m = 8, 10, and 12; $\Lambda'_8$ = (433-1)/8 = 54.0, $\Lambda'_{10}$ = (433-1)/10 = 43.2, $\Lambda'_{12}$ = (433-1)/12 = 36.0), which is preferable since better periodicity of the film thickness number sequence is obtained.

In Example 16, because of the presence of the periodicity for the modulation period of 50, the periodicity for the modulation period of 35 may be small or may be absent. In fact, in Example 16, the condition of (2-5) for the modulation period of 35 is satisfied, that is, among the spectral number $m_{m3}$ = 12 corresponding to the modulation period of 35 and $m_{m3}$ $\pm 1$ = 11 and 13 adjacent thereto, a spectral intensity peak exists at the number m = 12, but the spectral intensity is smaller than the spectral intensity at the number m = 1. Only the periodicity for the modulation period of 35 may be found, or both of the periodicities for the modulation periods of 50 and 35 may be found strongly.

Examples 1 to 17 are each a notch filter having a free filter region which is a wavelength range in which light is transmitted, and one or more stopbands which are located between the lower and upper limits of the free filter region and in which transmission of light in a predetermined wavelength range is suppressed, and including a base material 2 and an optical multilayer film 4 formed directly or indirectly on a base material surface M which is the surface of the base material 2. The optical multilayer film 4 is formed on the basis of a basic filter repeat structure in which a basic filter structure in which low refractive index layers L made of a low refractive index material and high refractive index layers H made of a high refractive index material are alternately arranged is repeated a plurality of times, and the film thickness of each layer in the optical multilayer film 4 corresponds to a modulation film thickness number sequence obtained by performing modulation at a period different from a basic period based on the number of layers of the basic filter structure, for a basic film thickness number sequence in which the film thickness of each layer in the basic filter repeat structure is arranged in order from the base material 2 side.

Therefore, Examples 1 to 17 have a wider free filter region. Also, Examples 1 to 17 have a stopband having a narrower wavelength width.

In addition, in Examples 8 and 9, there are a plurality of periods of the modulation. Therefore, Examples 8 and 9 have a plurality of stopbands having narrower wavelength widths.

Furthermore, in Examples 1 to 17, a value $d_n$ of the nth term in the modulation film thickness number sequence corresponding to the film thickness of the nth layer counting from the base material 2 side in the optical multilayer film 4 is expressed by the above Expression (2) when the nth term of the basic film thickness number sequence corresponding to the film thickness of the *n*th layer counting from the base material 2 side in the basic filter repeat structure is denoted by $D_n$ (*n* = 1, 2, ..., $L_0$, where $L_0$ is the total number of terms) and the amplitude, period, and phase of the modulation for the *k*th stopband are denoted by $a_k$, $\Lambda_k$, and $\varphi_k$, respectively (*k* = 1, 2, ..., u, where u is the number of stopbands to be formed). Thus, the modulation is more appropriately performed.

In addition, in Examples 2, 4, 7, 9, 11, 13, and 15 to 17, the film thickness of each layer in the optical multilayer film 4 is in accordance with an adjusted modulation film thickness number sequence obtained by adjusting the values of one or more terms in the modulation film thickness number sequence. Thus, a notch filter for which adjustment for reduction of the ripple in the free filter region, etc., is performed is provided.

Also, in Examples 1 to 17, the period of the modulation corresponds to the center wavelength of the stopband. Therefore, the period of the modulation is set more appropriately, and the design becomes easier.

Furthermore, in Examples 1 and 2, the free filter region includes a wavelength range of 400 nm or more and 1200 nm or less, and the basic filter repeat structure is any of a first basic filter repeat structure in which a basic filter structure in which the basic period is 6 is repeated, a second basic filter repeat structure in which a basic filter structure in which the basic period is 14 is repeated, and a third basic filter repeat structure in which a basic filter structure in which the basic period is 10 is repeated. The basic filter structure in which the basic period is 6 has optical film thicknesses that are 0.25 times "1.17 0.32 0.32 2.31 0.32 0.32 1.17", with the first layer as a low refractive index layer in order from the base material 2 side. Furthermore, the basic filter structure in which the basic period is 14 has optical film thicknesses that are 0.25 times "1.10 0.14 0.48 0.30 0.28 0.50 0.12 2.16 0.12 0.50 0.28 0.30 0.48 0.14 1.10", with the first layer as a low refractive index layer, in order from the base material 2 side. Moreover, the basic filter structure in which the basic period is 10 has optical film thicknesses that are 0.25 times "1.26 0.22 0.51 0.52 0.21 2.53 0.21 0.52 0.51 0.22 1.26", with the first layer as a low refractive index layer, in order from the base material 2 side.

Thus, it becomes easier to design the notch filter.

Furthermore, in Examples 3 to 17, the free filter region includes a wavelength range of 400 nm or more and 1800 nm or less, and the basic filter repeat structure is any of a second basic filter repeat structure in which a basic filter structure in which the basic period is 14 is repeated and a third basic filter repeat structure in which a basic filter structure in which the basic period is 10 is repeated. The basic filter structure in which the basic period is 14 has optical film thicknesses that are 0.25 times "1.10 0.14 0.48 0.30 0.28 0.50 0.12 2.16 0.12 0.50 0.28 0.30 0.48 0.14 1.10", with the first layer as a low refractive index layer, in order from the base material 2 side. Furthermore, the basic filter structure in which the basic period is 10 has optical film thicknesses that are 0.25 times "1.26 0.22 0.51 0.52 0.21 2.53 0.21 0.52 0.51 0.22 1.26", with the first layer as a low refractive index layer, in order from the base material 2 side.

Thus, it becomes easier to design the notch filter.

In addition, Examples 1 and 2 each have a free filter region which is a wavelength range in which light is transmitted, and one or more stopbands which are located between the lower and upper limits of the free filter region and in which transmission of light in a predetermined wavelength range is suppressed, and include a base material 2 and an optical multilayer film 4 formed directly or indirectly on a base material surface M which is the surface of the base material 2. The optical multilayer film 4 has low refractive index layers L made of a low refractive index material and high refractive index layers H made of a high refractive index material which are alternated, and satisfies all of the following conditions.

(1-1) The free filter region includes a wavelength range of 400 nm or more and 1200 nm or less.

(1-2) A stopband is formed in a wavelength range of 600 nm or more and 1200 nm or less.

(1-3) The average transmittance in the free filter region is 85% or more.

(1-4) In a discrete Fourier transform spectrum of a film thickness number sequence in which the film thickness of each layer in the optical multilayer film 4 is arranged in order from the base material 2 side, a peak exists at least at any of a spectral number $m_{f1}$ corresponding best to a period of 6, spectral numbers $m_{f1}$-2, $m_{f1}$-1, $m_{f1}$+1, and $m_{f1}$+2, which are two before, one before, one after, and two after the number $m_{f1}$, a spectral number $m_{f2}$ corresponding best to a period of 14, spectral numbers $m_{f2}$-2, $m_{f2}$-1, $m_{f2}$+1, and $m_{f2}$+2, which are two before, one before, one after, and two after the number $m_{f2}$, a spectral number $m_{f3}$ corresponding best to a period of 10, and spectral numbers $m_{f3}$-2, $m_{f3}$-1, $m_{f3}$+1, and $m_{f3}$+2 which are two before, one before, one after, and two after the number $m_{f3}$.

(1-5) In the discrete Fourier transform spectrum, a peak exists at a spectral number between a minimum number $m_{min}$ and a maximum number $m_{max}$ among spectral numbers $m_{m1}$, $m_{m2}$, and $m_{m3}$ corresponding best to periods of the modulation determined according to the three types of periods of 6, 14, and 10 and the center wavelength of the stopband, and spectral numbers $m_{m1}$-1, $m_{m1}$+1, $m_{m2}$-1, $m_{m2}$+1, $m_{m3}$-1, and $m_{m3}$+1 which are one before and one after the respective numbers $m_{m1}$, $m_{m2}$, and $m_{m3}$.

Therefore, Examples 1 and 2 have a wider free filter region. Also, Examples 1 and 2 have a stopband having a narrower wavelength width.

Furthermore, in Examples 1 and 2, the additional condition that the spectral intensity of the peak is larger than the spectral intensity at the spectral number m = 1 is also satisfied in each of the conditions of (1-4) and (1-5). Therefore, better periodicity of the film thickness number sequence is obtained, and at least one of a wider free filter region and a stopband having a narrower wavelength width is obtained.

Examples 3 to 13 and 15 to 17 each have a free filter region which is a wavelength range in which light is transmitted, and one or more stopbands which are located between the lower and upper limits of the free filter region and in which transmission of light in a predetermined wavelength range is suppressed, and include a base material 2 and an optical multilayer film 4 formed directly or indirectly on a base material surface M which is the surface of the base material 2. The optical multilayer film 4 has low refractive index layers L made of a low refractive index material and high refractive index layers H made of a high refractive index material which are alternated, and satisfies all of the following conditions.

(2-1) The free filter region includes a wavelength range of 400 nm or more and 1800 nm or less.

(2-2) A stopband is formed in a wavelength range of 600 nm or more and 1800 nm or less.

(2-3) The average transmittance in the free filter region is 85% or more.

(2-4) In a discrete Fourier transform spectrum of a film thickness number sequence in which the film thickness of each layer in the optical multilayer film 4 is arranged in order from the base material 2 side, a peak exists at least at any of a spectral number $m_{f2}$ corresponding best to a period of 14, spectral numbers $m_{f2}-2$, $m_{f2}-1$, $m_{f2}+1$, and $m_{f2}+2$, which are two before, one before, one after, and two after the number $m_{f2}$, a spectral number $m_{f3}$ corresponding best to a period of 10, and spectral numbers $m_{f3}-2$, $m_{f3}-1$, $m_{f3}+1$, and $m_{f3}+2$ which are two before, one before, one after, and two after the number $m_{f3}$.

(2-5) In the discrete Fourier transform spectrum, a peak exists at a spectral number between a minimum number $m_{min}$ and a maximum number $m_{max}$ among spectral numbers $m_{m2}$ and $m_{m3}$ corresponding best to periods of the modulation determined according to the two types of periods of 14 and 10 and the center wavelength of the stopband, and spectral numbers $m_{m2}-1$, $m_{m2}+1$, $m_{m3}-1$, and $m_{m3}+1$ which are one before and one after the respective numbers $m_{m2}$ and $m_{m3}$.

Therefore, Examples 3 to 13 and 15 to 17 have a wider free filter region. Also, Examples 1 and 2 have a stopband having a narrower wavelength width.

Furthermore, in Examples 3 to 16, the additional condition that the spectral intensity of the peak is larger than the spectral intensity at the spectral number m = 1 is also satisfied in each of the conditions of (2-4) and (2-5). In Example 17, the additional condition that the spectral intensity of the peak is larger than the spectral intensity at the spectral number m = 1 is also satisfied in the condition of (2-4). Therefore, better periodicity of the film thickness number sequence is obtained, and at least one of a wider free filter region and a stopband having a narrower wavelength width is obtained.

DESCRIPTION OF THE REFERENCE CHARACTERS

1　　notch filter
2　　base material
4　　optical multilayer film
B1　　initial basic filter structure (closest to base material)
B2　　second basic filter structure
H　　high refractive index layer
L　　low refractive index layer
M　　base material surface

**Claims**

1. A notch filter having a free filter region which is a wavelength range in which light is transmitted, and one or more stopbands which are located between lower and upper limits of the free filter region and in which transmission of light in a predetermined wavelength range is suppressed, the notch filter comprising:

   a base material; and
   an optical multilayer film formed directly or indirectly on a base material surface which is a surface of the base material, wherein
   the optical multilayer film is formed on the basis of a basic filter repeat structure in which a basic filter structure in which low refractive index layers made of a low refractive index material and high refractive index layers made of a high refractive index material are alternately arranged is repeated a plurality of times, and
   a film thickness of each layer in the optical multilayer film corresponds to a modulation film thickness number sequence obtained by addition of modulation to a basic film thickness number sequence in which the film thickness of each layer in the basic filter repeat structure is arranged in order from the base material side, wherein

   the modulation has a period different from a basic period based on the number of layers of the basic filter structure.

2. The notch filter according to claim 1, wherein there are a plurality of periods of the modulation.

3. The notch filter according to claim 1 or 2, wherein a value $d_n$ of an nth term in the modulation film thickness number sequence corresponding to a film thickness of an *n*th layer counting from the base material side in the optical multilayer film is expressed by the following Expression (A) when an nth term in the basic film thickness number sequence corresponding to a film thickness of an *n*th layer counting from the base material side in the basic filter repeat structure

is denoted by $D_n$, $n$ satisfies $n$ = 1, 2, ..., $L_0$ with a total number of terms denoted by $L_0$, an amplitude, period, and phase of the modulation for a kth stopband are denoted by $a_k$, $\Lambda_k$, and $\varphi_k$, respectively, and $k$ satisfies $k$ = 1, 2, ..., u with a number of stopbands to be formed denoted by $u$,

[Math. 1]

$$d_n = D_n \left[ 1 + \sum_{k=1}^{u} a_k \cos \left\{ \frac{2\pi(n-1)}{\Lambda_k} + \varphi_k \right\} \right] \qquad (A).$$

4. The notch filter according to any one of claims 1 to 3, wherein the film thickness of each layer in the optical multilayer film is in accordance with an adjusted modulation film thickness number sequence obtained by adjusting values of one or more terms in the modulation film thickness number sequence.

5. The notch filter according to any one of claims 1 to 4, wherein the period of the modulation corresponds to a center wavelength of the stopband.

6. The notch filter according to any one of claims 1 to 5, wherein

the free filter region includes a wavelength range of 400 nm or more and 1200 nm or less, and
the basic filter repeat structure is any of a first basic filter repeat structure, a second basic filter repeat structure, and a third basic filter repeat structure, wherein
the first basic filter repeat structure repeats the basic filter structure in which the basic period is 6,
the second basic filter repeat structure repeats the basic filter structure in which the basic period is 14, and
the third basic filter repeat structure repeats the basic filter structure in which the basic period is 10.

7. The notch filter according to claim 6, wherein
the basic filter structure in which the basic period is 6 has optical film thicknesses that are 0.25 times the following, with a first layer as the low refractive index layer, in order from the base material side,
1.17 0.32 0.32 2.31 0.32 0.32 1.17.

8. The notch filter according to any one of claims 1 to 5, wherein

the free filter region includes a wavelength range of 400 nm or more and 1800 nm or less, and
the basic filter repeat structure is any of a second basic filter repeat structure and a third basic filter repeat structure, wherein
the second basic filter repeat structure repeats the basic filter structure in which the basic period is 14, and
the third basic filter repeat structure repeats the basic filter structure in which the basic period is 10.

9. The notch filter according to any one of claims 6 to 8, wherein
the basic filter structure in which the basic period is 14 has optical film thicknesses that are 0.25 times the following, with a first layer as the low refractive index layer, in order from the base material side,
1.10 0.14 0.48 0.30 0.28 0.50 0.12 2.16 0.12 0.50 0.28 0.30 0.48 0.14 1.10.

10. The notch filter according to any one of claims 6 to 9, wherein
the basic filter structure in which the basic period is 10 has optical film thicknesses that are 0.25 times the following, with a first layer as the low refractive index layer, in order from the base material side,
1.26 0.22 0.51 0.52 0.21 2.53 0.21 0.52 0.51 0.22 1.26.

11. A notch filter having a free filter region which is a wavelength range in which light is transmitted, and one or more stopbands which are located between lower and upper limits of the free filter region and in which transmission of light in a predetermined wavelength range is suppressed, the notch filter comprising:

a base material; and
an optical multilayer film formed directly or indirectly on a base material surface which is a surface of the base material, wherein
the optical multilayer film has low refractive index layers made of a low refractive index material and high refractive index layers made of a high refractive index material which are alternated, and satisfies all of the following conditions,

(1-1) the free filter region includes a wavelength range of 400 nm or more and 1200 nm or less,

(1-2) the stopband is formed in a wavelength range of 600 nm or more and 1200 nm or less,

(1-3) an average transmittance in the free filter region is 85% or more,

(1-4) in a discrete Fourier transform spectrum of a film thickness number sequence in which a film thickness of each layer in the optical multilayer film is arranged in order from the base material side, a peak exists at least at any of a spectral number mn corresponding best to a period of 6, spectral numbers $m_{f1}$-2, $m_{f1}$-1, $m_{f1}$+1, and $m_{f1}$+2 which are two before, one before, one after, and two after the number $m_{f1}$, a spectral number $m_{f2}$ corresponding best to a period of 14, spectral numbers $m_{f2}$-2, $m_{f2}$-1, $m_{f2}$+1, and $m_{f2}$+2 which are two before, one before, one after, and two after the number $m_{f2}$, a spectral number $m_{f3}$ corresponding best to a period of 10, and spectral numbers $m_{f3}$-2, $m_{f3}$-1, $m_{f3}$+1, and $m_{f3}$+2 which are two before, one before, one after, and two after the number $m_{f3}$, and

(1-5) in the discrete Fourier transform spectrum, a peak exists at a spectral number between a minimum number $m_{min}$ and a maximum number $m_{max}$ among spectral numbers $m_{m1}$, $m_{m2}$, and $m_{m3}$ corresponding best to periods of the modulation determined according to the three types of periods of 6, 14, and 10 and a center wavelength of the stopband, and spectral numbers $m_{m1}$-1, $m_{m1}$+1, $m_{m2}$-1, $m_{m2}$+1, $m_{m3}$-1, and $m_{m3}$+1 which are one before and one after the respective numbers $m_{m1}$, $m_{m2}$, and $m_{m3}$.

12. The notch filter according to claim 11, wherein the condition of (1-4) has an additional condition that a spectral intensity of the peak is larger than a spectral intensity at a spectral number m = 1.

13. The notch filter according to claim 11 or 12, wherein the condition of (1-5) has an additional condition that a spectral intensity of the peak is larger than the spectral intensity at the spectral number m = 1.

14. A notch filter having a free filter region which is a wavelength range in which light is transmitted, and one or more stopbands which are located between lower and upper limits of the free filter region and in which transmission of light in a predetermined wavelength range is suppressed, the notch filter comprising:

a base material; and
an optical multilayer film formed directly or indirectly on a base material surface which is a surface of the base material, wherein
the optical multilayer film has low refractive index layers made of a low refractive index material and high refractive index layers made of a high refractive index material which are alternated, and satisfies all of the following conditions,

(2-1) the free filter region includes a wavelength range of 400 nm or more and 1800 nm or less,

(2-2) the stopband is formed in a wavelength range of 600 nm or more and 1800 nm or less,

(2-3) an average transmittance in the free filter region is 85% or more,

(2-4) in a discrete Fourier transform spectrum of a film thickness number sequence in which a film thickness of each layer in the optical multilayer film is arranged in order from the base material side, a peak exists at least at any of a spectral number $m_{f2}$ corresponding best to a period of 14, spectral numbers $m_{f2}$-2, $m_{f2}$-1, $m_{f2}$+1, and $m_{f2}$+2 which are two before, one before, one after, and two after the number $m_{f2}$, a spectral number $m_{f3}$ corresponding best to a period of 10, and spectral numbers $m_{f3}$-2, $m_{f3}$-1, $m_{f3}$+1, and $m_{f3}$+2 which are two before, one before, one after, and two after the number $m_{f3}$, and

(2-5) in the discrete Fourier transform spectrum, a peak exists at a spectral number between a minimum number $m_{min}$ and a maximum number $m_{max}$ among spectral numbers $m_{m2}$ and $m_{m3}$ corresponding best to periods of the modulation determined according to the two types of periods of 14 and 10 and a center wavelength of the stopband, and spectral numbers $m_{m2}$-1, $m_{m2}$+1, $m_{m3}$-1, and $m_{m3}$+1 which are one before and one after the respective numbers $m_{m2}$ and $m_{m3}$.

15. The notch filter according to claim 14, wherein the condition of (2-4) has an additional condition that a spectral intensity of the peak is larger than a spectral intensity at a spectral number m = 1.

16. The notch filter according to claim 14 or 15, wherein the condition of (2-5) has an additional condition that a spectral intensity of the peak is larger than the spectral intensity at the spectral number m = 1.

FIG.1

EP 4 481 449 A1

FIG.2

FIG.3

FIG.4

EP 4 481 449 A1

FIG.5

FIG.6

EP 4 481 449 A1

FIG.7

EP 4 481 449 A1

FIG.8

EP 4 481 449 A1

FIG.9

FIG.10

```
                    ┌─────────────────┐
                    │      START       │
                    └────────┬────────┘
                             │                      S1
        ┌────────────────────┴────────────────────┐
        │       OBTAIN BASIC FILTER STRUCTURE       │
        └────────────────────┬────────────────────┘
                             │                      S2
        ┌────────────────────┴────────────────────┐
        │   OBTAIN BASIC FILTER REPEAT STRUCTURE    │
        └────────────────────┬────────────────────┘
                             │                 S3
             ┌───────────────┴───────────────┐
             │          MODULATION            │
             └───────────────┬───────────────┘
                             │                 S4
             ┌───────────────┴───────────────┐
             │          ADJUSTMENT            │
             └───────────────┬───────────────┘
                             │
                    ┌────────┴────────┐
                    │       END        │
                    └─────────────────┘
```

FIG.11

EP 4 481 449 A1

FIG.12

EP 4 481 449 A1

FIG.13

EP 4 481 449 A1

FIG.14

FIG.15

FIG.16

FIG.17

EP 4 481 449 A1

FIG.18

EP 4 481 449 A1

**FIG.19**

FIG.20

FIG.21

FIG.22

EP 4 481 449 A1

FIG.23

EP 4 481 449 A1

FIG.24

EP 4 481 449 A1

FIG.25

FIG.26

FIG.27

FIG.28

FIG.29

EP 4 481 449 A1

FIG.30

EP 4 481 449 A1

FIG.31

EP 4 481 449 A1

FIG.32

FIG.33

EP 4 481 449 A1

FIG.34

FIG.35

FIG.36

EP 4 481 449 A1

FIG.37

FIG.38

EP 4 481 449 A1

FIG.39

FIG.40

EP 4 481 449 A1

FIG.41

FIG.42

FIG.43

EP 4 481 449 A1

FIG.44

FIG.45

FIG.46

FIG.47

FIG.48

## INTERNATIONAL SEARCH REPORT

| International application No. |
| --- |
| **PCT/JP2023/009926** |

**A. CLASSIFICATION OF SUBJECT MATTER**

*G02B 5/28*(2006.01)i
FI: G02B5/28

According to International Patent Classification (IPC) or to both national classification and IPC

**B. FIELDS SEARCHED**

Minimum documentation searched (classification system followed by classification symbols)

G02B5/28

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2008-242000 A (FUJINON CORP) 09 October 2008 (2008-10-09) claims, paragraphs [0047]-[0050], fig. 1-20, etc. | 1-6, 8, 11-16 |
| A | JP 2006-23471 A (OLYMPUS CORP) 26 January 2006 (2006-01-26) entire text, all drawings | 1-16 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **10 May 2023** | **23 May 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/009926**

| Patent document cited in search report | | | Publication date (day/month/year) | Patent family member(s) | | | Publication date (day/month/year) |
|---|---|---|---|---|---|---|---|
| JP | 2008-242000 | A | 09 October 2008 | US claims, paragraphs [0081], [0082], fig. 1-20, etc. | 2008/0239496 | A1 | |
| JP | 2006-23471 | A | 26 January 2006 | US entire text, all drawings | 2006/0007548 | A1 | |
| | | | | EP | 1615054 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4575052 B